(19) Europäisches Patentamt
European Patent Office
Office européen des brevets

(11) **EP 3 482 166 B1**

(12) **EUROPÄISCHE PATENTSCHRIFT**

(45) Veröffentlichungstag und Bekanntmachung des Hinweises auf die Patenterteilung:
**22.02.2023 Patentblatt 2023/08**

(21) Anmeldenummer: **17732445.6**

(22) Anmeldetag: **26.06.2017**

(51) Internationale Patentklassifikation (IPC):
**G01F 1/84** (2006.01) **G01F 15/02** (2006.01)
**G01F 25/00** (2006.01) **G01N 9/00** (2006.01)
**G01N 11/16** (2006.01)

(52) Gemeinsame Patentklassifikation (CPC):
**G01F 1/8409; G01F 1/8436; G01F 1/8477; G01F 1/8495; G01F 15/022;** G01F 25/10; G01N 11/162; G01N 2009/006

(86) Internationale Anmeldenummer:
**PCT/EP2017/065625**

(87) Internationale Veröffentlichungsnummer:
**WO 2018/007176 (11.01.2018 Gazette 2018/02)**

(54) **FLUID-DURCHFLUSS-MESSSYSTEM VOM VIBRATIONSTYP MIT TEMPERATURKOMPENSATION**

VIBRATION TYPE FLUID FLOW MEASURING SYSTEM APPLYING A TEMPERATURE COMPENSATION

SYSTÈME DE MESURE DE DÉBIT DE FLUIDE DU TYPE VIBRANT FAISANT USAGE D'UNE COMPENSATION DE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2016 DE 102016112599**

(43) Veröffentlichungstag der Anmeldung:
**15.05.2019 Patentblatt 2019/20**

(73) Patentinhaber: **Endress+Hauser Flowtec AG 4153 Reinach (CH)**

(72) Erfinder:
• **RIEDER, Alfred**
 **84032 Landshut (DE)**
• **ECKERT, Gerhard**
 **79639 Grenzach-Wyhlen (DE)**
• **BITTO, Ennio**
 **4147 Aesch (CH)**
• **ZHU, Hao**
 **85354 Freising (DE)**

(74) Vertreter: **Hahn, Christian et al Endress+Hauser Group Services (Deutschland)AG +Co. KG Colmarer Straße 6 79576 Weil am Rhein (DE)**

(56) Entgegenhaltungen:
WO-A1-2016/010514    DE-A1-102014 103 427
DE-C1- 4 224 379

**Beschreibung**

Die Erfindung betrifft ein, insb. zur Messung einer physikalische Meßgröße eines in einer Rohrleitung strömenden Fluids dienliches, vibronisches Meßsystem.

In der industriellen Meß- und Automatisierungstechnik werden zur hochgenauen Ermittlung von Meßwerten für wenigstens eine physikalische Meßgröße eines in einer Rohrleitung strömenden Fluids - beispielsweise nämlich eines Stoffparameters, wie etwa eine Dichte, und/oder eines Strömungsparameters, wie etwa eine Massendurchflußrate, eines Gases, einer Flüssigkeit oder einer Dispersion - oftmals vibronische, nämlich mittels einer vibronischen Wandlervorrichtung gebildete Meßsysteme eingesetzt. Im besonderen haben sich hierbei auch solche vibronischen Meßsysteme etabliert, bei denen die Wandlervorrichtung ein ein von einer zumeist metallischen Wandung umhülltes Lumen aufweisendes erstes Rohr sowie ein ein von einer zumeist metallischen Wandung umhülltes Lumen aufweisendes - typischerweise zum ersten Rohr baugleiches und parallel verlaufendes - zweites Rohr umfaßt, wobei jedes der wenigstens zwei - sich jeweils von einem jeweiligen einlaßseitigen ersten Ende bis zu einem jeweiligen auslaßseitigen zweiten Ende erstreckenden - Rohre jeweils dafür eingerichtet ist, ausgehend vom jeweiligen ersten Ende in Richtung des jeweiligen auslaßseitigen zweiten Ende, vom zu messenden Fluid durchströmt und währenddessen im wesentlichen gegengleich vibrieren gelassen zu werden, und bei denen die Wandlervorrichtung an eine sowohl dem aktiven Anregen als auch dem Auswerten von mechanischen Schwingungen der Rohre dienliche, beispielsweise mittels wenigstens eines Mikroprozessors gebildete, Meß- und Betriebs-Elektronik angeschlossen ist. Die jeweilige Meß- und Betriebs-Elektronik kann zudem über entsprechende elektrische Leitungen auch an ein - vom jeweiligen Meßsystem zumeist räumlich entfernt angeordnetes und zumeist auch räumlich verteiltes - übergeordnetes elektronisches Datenverarbeitungssystem elektrisch angeschlossen sein, an das die vom jeweiligen Meßsystem erzeugten Meßwerte mittels wenigstens eines diese entsprechend tragenden Meßwertesignals zeitnah, beispielsweise auch in Echtzeit, weitergegeben werden. Meßsysteme der in Rede stehenden Art sind zudem üblicherweise mittels eines innerhalb des übergeordneten Datenverarbeitungssystems vorgesehenen Datenübertragungsnetzwerks miteinander und/oder mit entsprechenden elektronischen Prozeß-Steuerungen verbunden, beispielsweise vor Ort installierte Speicherprogrammierbare Steuerungen (SPS) oder in einer entfernten Leitwarte installierte Prozeß-Leitrechnern, wohin die mittels des jeweiligen Meßsystems erzeugten und in geeigneter Weise digitalisierten und entsprechend codierten Meßwerte weitergesendet werden. Mittels solcher Prozeß-Leitrechner können die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, ElektroMotoren etc., umgewandelt werden. Da moderne Meßanordnungen zumeist auch direkt von solchen Leitrechnern aus überwacht und gegebenenfalls gesteuert und/oder konfiguriert werden können, werden in entsprechender Weise über vorgenannte, zumeist hinsichtlich der Übertragungsphysik und/oder der Übertragungslogik hybride Datenübertragungsnetzwerke dem Meßsystem zugewiesene Betriebsdaten gleichermaßen versendet. Dementsprechend dient das Datenverarbeitungssystem üblicherweise auch dazu, das vom Meßsystem gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die vom jeweiligen Meßsystem empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, RACKBUS-RS 485, PROFIBUS etc., oder beispielsweise auch Netzwerke auf Basis des ETHERNET-Standards sowie die entsprechenden, zumeist übergreifend standardisierten Übertragungs-Protokolle. Alternativ oder in Ergänzung können bei modernen Meßsystemen der in Rede stehenden Art Meßwerte auch drahtlos per Funk an das jeweilige Datenverarbeitungssystem übermittelt werden. Neben den für die Verarbeitung und Konvertierung der von den jeweils angeschlossenen Meßsystem gelieferten Meßwerte erforderlichen Auswerteschaltungen weisen solche übergeordnete Datenverarbeitungssysteme zumeist auch der Versorgung der angeschlossenen Meßsystemen mit elektrischer Energie dienende elektrische Versorgungsschaltungen auf, die eine entsprechende, ggf. direkt vom angeschlossenen Feldbus gespeiste, Versorgungsspannung für die jeweilige Elektronik bereitstellen und die daran angeschlossenen elektrische Leitungen sowie die jeweiligen Elektroniken durchfließende elektrische Ströme treiben. Eine Versorgungsschaltung kann dabei beispielsweise genau einem Meßsystem bzw. einer entsprechenden Elektronik jeweils zugeordnet und zusammen mit der dem jeweiligen Meßsystem zugeordneten Auswerteschaltung - beispielsweise zu einem entsprechenden Feldbusadapter vereint - in einem gemeinsamen, z.B. als Hutschienen-Modul ausgebildeten, Elektronik-Gehäuse untergebracht sein. Es ist aber durchaus auch üblich, Versorgungsschaltungen und Auswerteschaltungen jeweils in separaten, ggf. voneinander räumlich entfernten Elektronik-Gehäusen unterzubringen und über externe Leitungen miteinander entsprechend zu verdrahten.

Aufbau und Wirkungsweise von vibronischen Wandlervorrichtungen der in Rede stehenden Art bzw. von damit gebildeten - beispielsweise auch als Coriolis-Massendurchfluß-Meßgeräte oder auch als Coriolis-Massendurchfluß-/Meßsysteme ausgebildeten - vibronischen Meßsystemen sind dem Fachmann an und für sich bekannt und beispielsweise auch in der US-A 2001/0037690, der US-A 2004/0031328, der US-A 2006/0161359, der US-A 2010/0242623, der US-A 2011/0113896, der US-A 2011/0146416, der US-A 2011/0265580, der US-A 2012/0073384, der US-A 47 68 384, der US-B 75 49 319, der WO-A 01/29519, der WO-A 2009/134268, der WO-A 2012/018323, der WO-A 2012/033504, der WO-A 2013/092104, der WO-A 2015/135738, der WO-A 2015/135739, der WO-A 88/02853, der WO-A 94/21999, der WO-A 96/07081 oder der WO-A 98/02725 gezeigt.

Demnach weist eine solche Wandlervorrichtung jeweils eine mittels wenigstens eines, beispielsweise elektrodynamischen, Schwingungserregers gebildete elektro-mechanische Erregeranordnung auf, die dafür eingerichtet ist Nutzschwingungen der wenigstens zwei Rohre, nämlich mechanischen Schwingungen mit wenigstens einer vorgebbaren Schwingungsfrequenz jedes der wenigstens zwei Rohre um eine dem jeweiligen Rohr zugehörige statische Ruhelage, beispielsweise mechanischen Schwingungen jedes der Rohr um eine dessen jeweiliges erstes Ende mit dessen jeweiligen zweiten Ende jeweils imaginär verbindende gedachte erste bzw. zweite Schwingungsachse, anzuregen bzw. aufrechtzuerhalten. Typischerweise kommen hierbei differenziell auf bei Rohre einwirkende, elektrodynamische Schwingungserreger, nämlich mittels eines an einem der Rohre fixierten Permanentmagneten und mittels einer am anderen der wenigstens zwei Rohre fixierten und mit dem Permanentmagneten wechselwirkenden Erregerspule gebildeten Schwingungserreger zu Einsatz. Als Nutzschwingungen der Rohre dienen regelmäßig solche Schwingungen, die geeignet sind, im strömenden Fluid von einer Massendurchflußrate, m, abhängige Corioliskräfte zu induzieren, und/oder die geeignet sind, im strömenden Fluid von einer Viskosität, $\eta$, abhängige Reibungs- bzw. Dämpfungskräfte zu induzieren, und/oder die geeignet sind, im strömenden Fluid von einer Dichte, $\rho$, abhängige Trägheitskräfte zu induzieren. Zum Erfassen von mechanischen Schwingungen der wenigstens zwei Rohre, nicht zuletzt auch den Nutzschwingungen und/oder von durch vorbezeichnete Coriolis-Kräfte erzwungenen Coriolis-Schwingungen, weisen die in vibronischen Meßsystemen der in Rede stehenden Art verwendeten Wandlervorrichtung ferner jeweils eine mittels wenigstens eines, beispielsweise elektrodynamischen oder optischen, Schwingungssensors genbildete Schwingungssensoranordnung, die dafür eingerichtet ist, wenigstens ein Schwingungssignal, nämlich ein Schwingungsbewegungen der wenigstens zwei Rohr repräsentierendes elektrisches Meßsignal, beispielsweise mit einer von einer Geschwindigkeit der Schwingungsbewegungen der Rohre bzw. einer entsprechenden Schwingfrequenz abhängigen elektrischen (Signal-)Wechselspannung, zu generieren. Auch die dem Erfassen von Schwingungen dienlichen Schwingungssensoren solcher Wandlervorrichtungen können beispielsweise als Schwingungsbewegungen der wenigstens zwei Rohre differenziell erfassende elektro-dynamische Schwingungssensoren ausgebildet sein.

Wandlervorrichtungen der in Rede stehenden Art umfassen desweiteren typischerweise jeweils ein eine von einer - beispielsweise metallischen - Wandung umhüllte Kavität aufweisendes Wandler-Gehäuse, innerhalb der die wenigstens zwei Rohre einschließlich der daran angebrachten Komponenten des wenigstens Schwingungserregers sowie des wenigstens einen Schwingungssensors in einer die vorbezeichneten Schwingungen der Rohre ermöglichenden Weise angeordnet sind, derart nämlich, daß zwischen einer der Kavität zugewandte Innenfläche der Wandung des Wandler-Gehäuses und einer Mantelfläche der Wandung des Rohrs, nämlich einer der Kavität zugewandten Außenfläche der Wandung des Rohrs ein - zumeist mit Luft oder einem inertem Gas befüllter - Zwischenraum gebildet ist. Zudem ist auch die jeweilige Meß- und Betriebs-Elektronik typischerweise innerhalb wenigstens eines vergleichsweise robusten, insb. schlag-, druck-, und/oder wetterfesten, Elektronik-Gehäuse untergebracht. Das, beispielsweise aus Edelstahl oder Aluminium gefertigte, Elektronik-Gehäuse kann von der Wandlereinrichtung entfernt angeordnet und mit diesem über ein flexibles Kabel verbunden sein; es kann aber beispielsweise auch direkt an der Wandlervorrichtung, beispielsweise nämlich am vorbezeichneten Wandler-Gehäuse angeordnet bzw. fixiert sein.

Die Meß- und Betriebs-Elektronik solcher vibronischer Meßsysteme ist - nicht zuletzt für den Fall, daß der wenigstens eine Meßwert eine Dichte oder eine Viskosität des im wenigstens einen Rohr geführten Fluids repräsentiert -, weiters dafür eingerichtet, den wenigstens einen Meßwert unter Verwendung mittels des wenigstens einen Schwingungssignals zu generieren, beispielsweise derart, daß die Meß- und Betriebs-Elektronik den wenigstens einen Meßwert basierend auf einer anhand des Schwingungssignals gemessenen Nutzfrequenz, nämlich einer von der zu messenden Meßgröße abhängigen Schwingfrequenz der Nutzschwingungen ermittelt und dafür eine allfällige Abhängigkeit nämlicher Nutzfrequenz auch von einer Temperaturverteilung innerhalb der Wandung des wenigstens einen Rohrs meßtechnisch kompensiert. Als Nutzfrequenz wird bei vibronischen Meßsystemen der in Rede stehenden Art zumeist eine der dem Fluid führenden wenigstens einen Meßrohr innewohnenden Resonanzfrequenzen gewählt, typischerweise nämlich eine Resonanzfrequenz eines Biegeschwingungsgrundmodes des wenigstens einen Meßrohrs. Neben der Auswertung des wenigstens einen Schwingungssignals dient die Meß- und Betriebs-Elektronik vibronischer Meßsysteme der vorbezeichneten Art typischerweise auch dazu, wenigstens ein, beispielsweise harmonisches und/oder getaktetes, Treibersignal für den wenigstens einen elektro-mechanischen Schwingungserreger zu generieren. Nämliches Treibersignal kann beispielsweise hinsichtlich einer Stromstärke und/oder einer Spannungshöhe und/oder einer Signalfrequenz geregelt sein. Bei in der industriellen Meß- und Automatisierungstechnik verwendeten vibronischen Meßsystemen ist die Meß- und Betriebs-Elektronik zumeist mittels eines oder mehreren, ggf. auch als digitale Signalprozessoren (DSP) ausgebildeten Mikroprozessoren realisiert, derart, daß die Meß- und Betriebs-Elektronik die jeweiligen Meßwerte für den wenigstens einen Stoff- bzw. Strömungsparameter durch numerische Verrechnung von aus Meßsignalen der jeweiligen Wandlervorrichtung, beispielsweise nämlich anhand von dem wenigstens einen Schwingungssignal gewonnenen, digitalen Abtatswerten ermittelt und inform von entsprechenden Digitalwerten, insb. auch in Echtzeit, bereitstellt.

Bei Wandlervorrichtungen der in Rede stehenden Art bzw. damit gebildeten vibronischen Meßsystemen kann eine weitere, für den Betrieb, nicht zuletzt auch für die präzise Ermittlung der Meßwerte für den wenigstens einen Stoff- bzw. des Strömungsparameter wichtige (Hilfs-) Meßgröße u.a. auch eine Wandlervorrichtungstemperatur sein, die geeignet ist, einen thermodynamischen Zustand der Wandlervorrichtung bzw. dessen Einfluß auf die für die Messung des wenigstens einen Stoff- bzw. des Strömungsparameters relevanten Schwingungseigenschaften der Wandlervorrichtung zu charakterisieren (Ziel-Temperatur). Im besonderen soll die Wandlervorrichtungstemperatur geeignet sein, eine Abhängigkeit der Nutzfrequenz von einer räumlichen Temperaturverteilung innerhalb der Wandlervorrichtung meßtechnisch in einem für die angestrebte hohe Meßgenauigkeit, mit der die Meßwerte für die wenigstens eine Meßgröße - nicht zuletzt auch die mittels computerbasierter Echtzeit-Berechnung ermittelten Meßwerte für die Dichte und/oder die Viskosität - ermittelte werden sollen, ausreichenden Maße kompensieren zu können. Nämliche Wandlervorrichtungstemperatur wird bei Meßsystemen der in Rede stehenden Art regelmäßig basierend auf wenigstens einer an der Wandung wenigstens eines der Rohre erfassten Rohrtemperatur ermittelt. Zum Erfassen der Rohrtemperatur können derartige Wandlervorrichtungen daher ferner zwei oder mehr jeweils mittels eines innerhalb des Zwischenraums angeordneten, mithin im Betrieb nicht von dem im Lumen des wenigstens einen Rohrs kontaktierten Temperaturfühler gebildeten Temperatursensoren aufweisen, von denen jeder jeweils thermisch leitend mit der Wandung eines der Rohre und elektrisch mit der Meß- und Betriebselektronik gekoppelt ist. Solche Temperaturfühler können beispielsweise ein Platin-Meßwiderstand, ein Thermistor oder ein Thermoelements oder aber mittels mehrerer solcher temperaturempfindlichen elektrischen bzw. elektronischen Bauteilen gebildete elektrische Schaltungen, etwa in Form einer Wheatstoneschen Meßbrücke, sein. Jeder der wenigstens zwei Temperatursensoren ist dafür eingerichtet, jeweils eine einer Temperatur an einer mittels des jeweiligen Temperaturfühlers gebildeten Temperaturmeßstelle entsprechende Meßstellentemperatur jeweils in ein entsprechendes Temperaturmeßsignal, nämlich eine die jeweilige Meßstellentemperatur repräsentierendes elektrisches Meßsignal, beispielsweise mit einer von nämlicher Meßstellentemperatur abhängigen elektrische Signalspannung und/oder einem von nämlicher Meßstellentemperatur abhängigen elektrischen Signalstrom, zu wandeln. Desweiteren kann die Meß- und Betriebs-Elektronik zudem dafür eingerichtet sein, Meßwerte für die wenigstens eine Meßgröße auch unter Verwendung der mittels der Wandlervorrichtung generierten wenigstens zwei Temperaturmeßsignale zu generieren.

Wie u.a. in den eingangs erwähnten US-A 47 68 384, WO-A 2013/092104, WO-A 2015/135738 bzw. WO-A 2015/135739 erörtert, kann ein besonderes Problem bei der Ermittlung der vorbezeichneten Wandlervorrichtungstemperatur darin bestehen, daß die mittels der wenigstens zwei, ggf. auch drei oder mehr Temperatursensoren erfaßten Meßstellentemperaturen zunächst jeweils eigentlich nur einer lokalen Temperatur an genau der mittels des jeweiligen Temperaturfühlers gebildeten Temperaturmeßstelle entsprechen, daß aber umgekehrt zumeist eigentlich eine lokale bzw. mittlere Temperatur an einem anderen Vorrichtungsreferenzpunkt, nämlich einem von jeder der Temperaturmeßstellen entfernten Bezugspunkt innerhalb der Wandlervorrichtung als Wandlervorrichtungs- bzw. Ziel-Temperatur dienliche ist, beispielsweise nämlich eine räumlich gemittelte Rohrtemperatur als Ziel-Temperatur dienen sollen. Ein weiteres Problem kann zudem darin bestehen, daß infolge unvermeidlicher zeitlicher Änderungen der Meßfluid-Temperatur innerhalb nämlicher Wandlervorrichtung regelmäßig auch dynamische Wärmeausgleichsvorgänge stattfinden können, die ebenfalls, nicht zuletzt aufgrund der nur sehr begrenzten Anzahl an Temperaturmeßstellen bzw. aufgrund von deren gegenseitigem räumlichen Abstand, zu fehlerhaften Meßergebnissen in mittels Wandlervorrichtungen der in Rede stehenden Art gebildeten Meßsystemen führen können, nicht zuletzt auch bei basierend auf Nutzschwingungen des wenigstens einen Rohrs ermittelten Meßwerten für die Dichte und/oder die Viskosität des jeweils zu messenden Fluids.

Weitere vibronische Wandlervorrichtungen mit Temperatursensoren sind aus den Dokumenten WO 2016/010514 A1 und DE 42 24 379 C1 bekannt.

Weiterführende Untersuchungen seitens der Erfinder haben ferner ergeben, daß nicht zuletzt für die bereits etablierten Verfahren zur computerbasierten Echtzeit-Berechnung der Dichte bzw. der Viskosität anhand von Messungen wenigstens einer der Resonanzfrequenzen der Rohre als vorbezeichnete Wandlervorrichtungstemperatur grundsätzlich jene Temperatur besonders geeignet zeigt, die einer Temperatur, die die Wandung jedes der Rohre in deren jeweiliger Mitte, mithin jeweils im Bereich des Schwingungserregers jeweils angenommen hat, entspricht, sich beispielsweise nämlich als ein Mittelwert nämlicher beiden Temperaturen ergibt. Umgekehrt ergibt sich daraus aber wiederum das Problem, daß es sich jeweils um eine Temperaturen eines solchen Bereichs der Rohre handelt, in dem jedes der Rohre im Betrieb aufgrund der angeregten Nutzschwingungen regelmäßig jeweils eine extrem hohe bzw. maximale Schwingungsamplitude aufweist, einhergehend mit einer gleichermaßen sehr hohen örtlichen Beschleunigung. In entsprechender Weise wären sowohl die dort zu plazierenden Temperaturfühler als auch die jeweils daran angeschlossen elektrischen Leitungen sehr hohen Beschleunigungskräften, mithin erhöhten mechanischen Belastungen bzw. einem erhöhten Risiko von mechanischer Zerstörung ausgesetzt. Zudem müßten zwecks Erfassung lediglich einer einzigen Hilfs-Meßgröße auch noch zusätzliche elektrische Leitungen in einen Bereich der Wandlervorrichtung geführt werden, der typischerweise außer zwei Leitungen für die Erregerspule keine weiteren aufzunehmen braucht.

Dem Rechnung tragend besteht eine Aufgabe der Erfindung darin, Meßsysteme der vorgenannten Art so zu verbessern, daß mit bereits zwei jeweils außerhalb jedes Lumens jedes der wenigstens zwei Rohr angeordneten Temperatursensoren eine Wandlervorrichtungstemperatur ermittelt werden kann, die eine im Vergleich zu herkömmlichen Meßsystemen verbesserte meßtechnische Kompensation einer Abhängigkeit der Nutzfrequenz von einer räumlichen Temperaturverteilung innerhalb der Wandlervorrichtung ermöglicht.

Zur Lösung der Aufgabe besteht die Erfindung in einem Meßsystem - beispielsweise nämlich zum Messen wenigstens einer Meßgröße eines in einer Rohrleitung strömenden Fluids -, welches Meßsystem umfaßt: eine, beispielsweise mittels eines Mikroprozessors und/oder eines digitalen Signalprozessors gebildete, Meß- und Betriebs-Elektronik sowie eine mit nämlicher Meß- und Betriebs-Elektronik elektrisch gekoppelte Wandlervorrichtung. Die erfindungsgemäße Wandlervorrichtung weist auf:

ein ein von einer Wandung umhülltes Lumen aufweisendes, sich von einem einlaßseitigen ersten Ende bis zu einem auslaßseitigen zweiten Ende erstreckendes - beispielsweise zumindest abschnittsweise gekrümmtes und/oder zumindest abschnittsweise gerades - erstes Rohr, das dafür eingerichtet ist, von einem Fluid, ausgehend vom einlaßseitigen ersten Ende in Richtung des auslaßseitigen zweiten Ende, durchströmt und währenddessen vibrieren gelassen zu werden,

ein ein von einer Wandung umhülltes Lumen aufweisendes, sich von einem einlaßseitigen ersten Ende bis zu einem auslaßseitigen zweiten Ende erstreckendes - beispielsweise zumindest abschnittsweise gekrümmtes und/oder zumindest abschnittsweise gerades und/oder dem ersten Rohr baugleiches und/oder zum ersten Rohr parallel angeordnetes - zweites Rohr, das dafür eingerichtet ist - beispielsweise nämlich simultan zum ersten Rohr, von einem Fluid, ausgehend vom einlaßseitigen ersten Ende in Richtung des auslaßseitigen zweiten Ende - durchströmt und währenddessen - beispielsweise nämlich simultan und/oder gegengleich zum ersten Rohr - vibrieren gelassen zu werden,

eine mittels wenigstens eines Schwingungserregers gebildete elektro-mechanische Erregeranordnung zum Anregen und Aufrechterhalten von mechanischen Schwingungen sowohl des ersten als auch des zweiten Rohrs um eine jeweils zugehörige statische Ruhelage,

eine mittels wenigstens eines ersten Schwingungssensors gebildete Sensoranordnung zum Erfassen von mechanischen Schwingungen wenigstens eines der Rohre,

einen mechanisch, gleichwohl thermisch leitend mit der Wandung des ersten Rohrs gekoppelten ersten Temperatursensor, der weniger weit vom ersten Ende des ersten Rohrs entfernt positioniert ist als vom zweiten Ende nämlichen ersten Rohres und der dafür vorgesehen bzw. eingerichtet ist, eine erste Meßstellentemperatur, nämlich eine Temperatur der Wandung des ersten Rohrs an einer mittels nämlichen Temperatursensors gebildeten ersten Temperaturmeßstelle, zu erfassen und in ein erstes Temperaturmeßsignal, nämlich ein die erste Meßstellentemperatur repräsentierendes erstes elektrisches Meßsignal zu wandeln,

sowie einen mechanisch, gleichwohl thermisch leitend mit der Wandung des zweiten Rohrs gekoppelten zweiten Temperatursensor, der weniger weit vom zweiten Ende des zweiten Rohrs entfernt positioniert ist als vom ersten Ende nämlichen zweiten Rohres und der dafür vorgesehen bzw. eingerichtet ist, eine zweite Meßstellentemperatur, nämlich eine Temperatur der Wandung des zweiten Rohrs an einer mittels des nämlichen Temperatursensors gebildeten zweiten Temperaturmeßstelle zu erfassen und in ein zweites Temperaturmeßsignal, nämlich ein die zweite Meßstellentemperatur repräsentierendes zweites elektrisches Meßsignal zu wandeln.

Die Wandlervorrichtung weist außer dem ersten Temperatursensor keinen weiteren die Wandung des ersten Rohrs kontaktierenden Temperatursensor und/oder außer dem zweiten Temperatursensor keinen weiteren die Wandung des zweiten Rohrs kontaktierenden Temperatursensor auf.

Die Meß- und Betriebs-Elektronik des erfindungsgemäßen Meßsystems wiederum ist dafür eingerichtet, unter Verwendung sowohl des ersten Temperaturmeßsignals als auch des zweiten Temperaturmeßsignals einen Wandlertemperatur-Meßwert zu generieren, der eine Wandlervorrichtungstemperatur repräsentiert, die sowohl von der ersten Meßstellentemperatur als auch von der zweiten Meßstellentemperatur abweicht, derart, daß ein Betrag nämlichen Wandlertemperatur-Meßwerts größer als ein Betrag der ersten Meßstellentemperatur, gleichwohl kleiner als ein Betrag der zweiten Meßstellentemperatur ist, beispielsweise nämlich einem arithmetischen Mittelwert der ersten und zweiten Meßstellentemperaturen und/oder einem gewichteten Mittel der ersten und zweiten Meßstellentemperaturen entspricht.

Darüberhinaus besteht die Erfindung auch darin, ein solches Meßsystem zum Messen einer wenigstens einer physikalischen Meßgröße, insb. einer Dichte und/oder einer Viskosität und/oder einer Massendurchflußrate und/oder einer Volumendurchflußrate, eines, insb. in einer Rohrleitung, strömenden Fluids, insb. eines Gases, einer Flüssigkeit oder einer fließfähigen Dispersion, zu verwenden.

Nach einer ersten Ausgestaltung der Erfindung ist vorgesehen, daß der erste Temperatursensor weniger weit vom ersten Ende des ersten Rohrs entfernt positioniert ist als der zweite Temperatursensor vom ersten Ende des zweiten Rohres.

Nach einer zweiten Ausgestaltung der Erfindung ist vorgesehen, daß der zweite Temperatursensor weniger weit vom zweiten Ende des zweiten Rohrs entfernt positioniert ist als der erste Temperatursensor vom zweiten Ende des ersten Rohres.

Nach einer dritten Ausgestaltung der Erfindung ist vorgesehen, daß der erste Temperatursensor gleichweit vom ersten Ende des ersten Rohrs entfernt positioniert ist wie der zweite Temperatursensor vom zweiten Ende des zweiten Rohrs.

Nach einer vierten Ausgestaltung der Erfindung ist vorgesehen, daß der erste Temperatursensor gleichweit vom zweiten Ende des ersten Rohrs entfernt positioniert ist wie der zweite Temperatursensor vom ersten Ende des zweiten Rohrs.

Nach einer fünften Ausgestaltung der Erfindung ist vorgesehen, daß der erste Temperatursensor gleichweit von einer Mitte des ersten Rohrs entfernt positioniert ist wie der zweite Temperatursensor von einer Mitte des zweiten Rohrs.

Nach einer sechsten Ausgestaltung der Erfindung ist vorgesehen, daß der erste Temperatursensor und der zweite Temperatursensor baugleich sind.

Nach einer siebenten Ausgestaltung der Erfindung ist vorgesehen, daß der erste Temperatursensor in gleicher Weise thermisch leitend mit der Wandung des ersten Rohrs gekoppelt ist wie der zweite Temperatursensor mit der Wandung des zweiten Rohrs, insb. derart, daß ein einem von der Wandung des ersten Rohrs zum ersten Temperatursensor und weiter zu einer den ersten Temperatursensor umgebenden Atmosphäre fließenden Wärmestrom entgegenwirkender Wärmewiderstand gleich groß ist wie ein einem von der Wandung des zweiten Rohrs zum zweiten Temperatursensor und weiter zu einer den zweiten Temperatursensor umgebenden Atmosphäre fließenden Wärmestrom entgegenwirkender Wärmewiderstand.

Nach einer achten Ausgestaltung der Erfindung ist vorgesehen, daß der erste Temperatursensor in gleicher Weise mechanisch mit der Wandung des ersten Rohrs gekoppelt ist wie der zweite Temperatursensor mit der Wandung des zweiten Rohrs.

Nach einer neunten Ausgestaltung der Erfindung ist vorgesehen, daß das sowohl das erste Rohr als auch das zweite Rohr jeweils spiegelsymmetrisch bezüglich wenigstens einer das jeweilige Rohr imaginär schneidenden, insb. nämlich mit einer Trägheitshauptachse des nämlichen Rohrs koinzidierenden, jeweiligen gedachten Symmetrieachse ist.

Nach einer zehnten Ausgestaltung der Erfindung ist vorgesehen, daß eine mittels des ersten Temperatursensors und mittels des zweiten Temperatursensors gebildete Temperatursensoranordnung der Wandlervorrichtung achsensymmetrisch bezüglich wenigstens einer die Wandlervorrichtung imaginär schneidenden, beispielsweise nämlich sowohl zu einer Trägheitshauptachse des ersten Rohrs als auch zu einer Trägheitshauptachse des zweiten Rohrs parallelen, gedachten Symmetrieachse ist.

Nach einer elften Ausgestaltung der Erfindung ist vorgesehen, daß sowohl das erste Rohr als auch das zweite Rohr jeweils, beispielsweise nämlich V-förmig oder U-förmig, gekrümmt ist.

Nach einer zwölften Ausgestaltung der Erfindung ist vorgesehen, daß sowohl das erste Rohr als auch das zweite Rohr jeweils zumindest abschnittsweise, beispielsweise überwiegend, gerade, beispielsweise nämlich kreiszylindrisch, ist.

Nach einer dreizehnten Ausgestaltung der Erfindung ist vorgesehen, daß sowohl das erste Rohr als auch das zweite Rohr jeweils zumindest abschnittsweise, beispielsweise kreisbogenförmig, gekrümmt ist.

Nach einer vierzehnten Ausgestaltung der Erfindung ist vorgesehen, daß sowohl die Wandung des ersten Rohrs als auch die Wandung des zweiten Rohrs jeweils zumindest anteilig, beispielsweise nämlich überwiegend oder gänzlich, aus einem Material, beispielsweise nämlich einem Metall oder einer Legierung, besteht, von dem eine spezifische Wärmeleitfähigkeit größer als 10 W / (m · K), ist und von dem eine spezifische Wärmekapazität kleiner als 1000 J / (kg · K) ist.

Nach einer fünfzehnten Ausgestaltung der Erfindung ist vorgesehen, daß sowohl die Wandung des ersten Rohrs als auch die Wandung des zweiten Rohrs jeweils aus einem Metall bzw. einer Legierung, beispielsweise nämlich Stahl, Titan, Zirkonium, Tantal, besteht.

Nach einer sechzehnten Ausgestaltung der Erfindung ist vorgesehen, daß das erste Rohr und das zweite Rohr baugleich sind.

Nach einer siebzehnten Ausgestaltung der Erfindung ist vorgesehen, daß eine abgewickelte Rohrlänge des ersten Rohrs mehr als 300 mm und/oder eine abgewickelte Rohrlänge des zweiten Rohrs mehr als 300 mm betragen.

Nach einer achtzehnten Ausgestaltung der Erfindung ist vorgesehen, daß der erste Temperatursensor mittels eines, beispielsweise einen Platin-Meßwiderstand, einen Thermistor oder ein Thermoelement aufweisenden, ersten Temperaturfühlers sowie mittels eines nämlichen ersten Temperaturfühler thermisch leitend mit der Wandung des ersten Rohrs koppelnden ersten Kopplungskörpers gebildet ist, und daß der zweite Temperatursensor mittels eines, beispielsweise einen Platin-Meßwiderstand, einen Thermistor oder ein Thermoelement aufweisenden, zweiten Temperaturfühlers sowie mittels eines nämlichen zweiten Temperaturfühler thermisch leitend mit der Wandung des zweiten Rohrs koppelnden zweiten Kopplungskörpers gebildet ist.

Nach einer neunzehnten Ausgestaltung der Erfindung ist vorgesehen, daß sowohl die Wandung des ersten Rohrs als auch die Wandung des zweiten Rohrs jeweils eine Wanddicke aufweisen, die mehr als 0,5 mm und/oder weniger als 10 mm beträgt.

Nach einer zwanzigsten Ausgestaltung der Erfindung ist vorgesehen, daß sowohl das erste Rohr als auch das zweite Rohr jeweils einen Innendurchmesser aufweisen, der mehr als 0,5 mm und/oder weniger als 200 mm beträgt.

Nach einer einundzwanzigsten Ausgestaltung der Erfindung ist vorgesehen, daß sowohl das erste Rohr als auch das zweite Rohr jeweils so bemessen sind, daß es ein Innendurchmesser-zu-Wandstärke-Verhältnis, definierte als ein Verhältnis eines Innendurchmesser des jeweiligen Rohrs zu einer Wanddicke der Wandung nämlichen Rohrs, aufweisen, das weniger als 25:1 und/oder mehr als 5:1 beträgt.

Nach einer zweiundzwanzigsten Ausgestaltung der Erfindung ist vorgesehen, daß der erste Temperatursensor, insb. mittels eines Wärmeleitklebers, unter Bildung des ersten Kopplungskörpers stoffschlüssig, beispielsweise adhäsiv, mit der Mantelfläche der Wandung des ersten Rohrs verbunden ist, und daß der zweite Temperatursensor, insb. mittels eines Wärmeleitklebers, unter Bildung des zweiten Kopplungskörpers stoffschlüssig, beispielsweise adhäsiv, mit der Mantelfläche der Wandung des zweiten Rohrs verbunden ist.

Nach einer dreiundzwanzigsten Ausgestaltung der Erfindung ist vorgesehen, daß der Wandlertemperatur-Meßwert einem arithmetischen Mittelwert der ersten und zweiten Meßstellentemperaturen entspricht.

Nach einer vierundzwanzigsten Ausgestaltung der Erfindung ist vorgesehen, daß der Wandlertemperatur-Meßwert einem gewichteten Mittel der ersten und zweiten Meßstellentemperaturen entspricht.

Nach einer fünfundzwanzigsten Ausgestaltung der Erfindung ist vorgesehen, daß der Wandlertemperatur-Meßwert mittlere Rohrwändetemperatur, nämlich eine einem arithmetischen Mittelwert einer mittleren Rohrwandtemperatur des ersten Rohrs und einer mittleren Rohrwandtemperatur des zweiten Rohrs entsprechende Temperatur, repräsentiert.

Nach einer sechsundzwanzigsten Ausgestaltung der Erfindung ist vorgesehen, daß die Wandlervorrichtung außer dem ersten Temperatursensor keinen weiteren die Wandung des ersten Rohrs kontaktierenden Temperatursensor aufweist.

Nach einer siebenundzwanzigsten Ausgestaltung der Erfindung ist vorgesehen, daß die Wandlervorrichtung außer dem zweiten Temperatursensor keinen weiteren die Wandung des zweiten Rohrs kontaktierenden Temperatursensor aufweist.

Nach einer achtundzwanzigsten Ausgestaltung der Erfindung ist vorgesehen, daß die Meß- und Betriebs-Elektronik dafür eingerichtet ist, zum Anregen von mechanischen Schwingungen der Rohre ein die Erregeranordnung, beispielsweise nämlich deren wenigstens einen Schwingungserreger, treibendes Erregersignal zu generieren; und daß die Erregeranordnung dafür eingerichtet ist, angesteuert vom Erregersignal, mechanische Schwingungen der Rohre anzuregen bzw. aufrecht zu erhalten.

Nach einer neunundzwanzigsten Ausgestaltung der Erfindung ist vorgesehen, daß die Sensoranordnung der Wandlervorrichtung dafür eingerichtet ist, wenigstens ein mechanische Schwingungen wenigstens eines der Rohre repräsentierendes Schwingungssignal zu liefern. Diese Ausgestaltung der Erfindung weiterbildend ist die Meß- und Betriebs-Elektronikdafür ferner dafür eingerichtet, unter Verwendung sowohl des Schwingungssignals als auch der ersten und zweiten Temperaturmeßsignale einen Meßwert zu generieren, der eine Meßgröße, beispielsweise nämlich einen Stoff- oder einen Strömungsparameters, eines, z.B. in einer Rohrleitung, strömenden Fluids, wie z.B. eines Gases, einer Flüssigkeit oder einer fließfähigen Dispersion, repräsentiert, beispielsweise derart, daß die Meß- und Betriebs-Elektronik unter Verwendung des Schwingungssignals einen Frequenzmeßwert generiert, der eine Frequenz von mechanischen Schwingungen des ersten Rohrs und/oder des zweiten Rohrs repräsentiert bzw. daß die Meß- und Betriebs-Elektronik unter Verwendung sowohl des Frequenzmeßwerts als auch des Temperaturmeßwerts, einen Dichte-Meßwert, nämlich einen eine Dichte des Fluids repräsentierenden Meßwert und/oder einen Viskositäts-Meßwert, nämlich einen eine Viskosität des Fluids repräsentierenden Meßwert generiert.

Nach einer dreißigsten Ausgestaltung der Erfindung ist vorgesehen, daß die Sensoranordnung der Wandlervorrichtung dafür eingerichtet ist, wenigstens ein mechanische Schwingungen wenigstens eines der Rohre repräsentierendes erstes Schwingungssignal sowie wenigstens ein mechanische Schwingungen wenigstens eines der Rohre repräsentierendes zweites Schwingungssignal zu liefern; dies insb. in der Weise, daß zwischen dem ersten Schwingungssignal und nämlichen zweiten Schwingungssignal eine von einer Massendurchflußrate eines durch das erste Rohr und/oder von einer Massendurchflußrate eines durch das zweite Rohr strömenden Fluids abhängige Phasendifferenz existiert. Diese Ausgestaltung der Erfindung weiterbildend ist die Meß- und Betriebs-Elektronik dafür ferner dafür eingerichtet, unter Verwendung sowohl des ersten Schwingungssignals als auch des zweiten Schwingungssignals einen Massendurchfluß-Meßwert, nämlich einen eine Massendurchflußrate eines durch das erste Rohr und/oder durch das zweite Rohr strömenden Fluids repräsentierenden Meßwert zu generieren.

Nach einer einunddreißigsten Ausgestaltung der Erfindung ist vorgesehen, daß die Meß- und Betriebs-Elektronik dafür eingerichtet ist, unter Verwendung sowohl des ersten Temperaturmeßsignals als auch des zweiten Temperaturmeßsignals einen Meßfluidtemperatur-Meßwert, nämlich einen eine Temperatur eines durch das erste Rohr strömenden Fluids und/oder eine Temperatur eines durch das zweite Rohr strömenden Fluids repräsentierenden Meßwert zu generieren.

Nach einer zweiunddreißigsten Ausgestaltung der Erfindung ist vorgesehen, daß die Meß- und Betriebs-Elektronik dafür eingerichtet ist, unter Verwendung des ersten Temperaturmeßsignals, gleichwohl nicht des zweiten Temperaturmeßsignals einen Hilfstemperaturmeßwert zu generieren, der die Wandlervorrichtungstemperatur zumindest näherungsweise repräsentiert.

Nach einer dreiunddreißigsten Ausgestaltung der Erfindung ist vorgesehen, daß die Meß- und Betriebs-Elektronik dafür eingerichtet ist, unter Verwendung des zweiten Temperaturmeßsignals, gleichwohl nicht des ersten Temperaturmeßsignals einen Hilfstemperaturmeßwert zu generieren, der die Wandlervorrichtungstemperatur zumindest näherungsweise repräsentiert.

Nach einer vierunddreißigsten Ausgestaltung der Erfindung ist vorgesehen, daß die Meß- und Betriebs-Elektronik ferner dafür eingerichtet ist, unter Verwendung sowohl des ersten Temperaturmeßsignals als auch des zweiten Temperaturmeßsignals einen Temperaturabweichungsmeßwert zu generieren, der eine (absolute oder relative) Abweichung zwischen der ersten Meßstellentemperatur und der zweiten Meßstellentemperatur repräsentiert. Diese Ausgestaltung der Erfindung weiterbildend ist die Meß- und Betriebs-Elektronik ferner dafür eingerichtet unter Verwendung des Temperaturabweichungsmeßwerts eine Funktionstüchtigkeit der Wandlervorrichtung, beispielsweise nämlich eine Funktionstüchtigkeit des ersten Rohrs und/oder eine Funktionstüchtigkeit des zweiten Rohrs, zu überwachen und/oder ist die Meß- und Betriebs-Elektronik dafür eingerichtet, unter Verwendung des Temperaturabweichungsmeßwerts zu diagnostizieren, daß die Wandlervorrichtung einen gegenüber einem ursprünglichen Strömungswiderstand veränderten Strömungswiderstand aufweist und/oder ist die Meß- und Betriebs-Elektronik dafür eingerichtet, unter Verwendung des Temperaturabweichungsmeßwerts einen Alarm zu generieren, der eine nur noch eingeschränkte Funktionstüchtigkeit der Wandlervorrichtung signalisiert, beispielsweise infolge eines gegenüber einem ursprünglichen Strömungswiderstand veränderten Strömungswiderstands des ersten Rohrs und/oder infolge eines gegenüber einem ursprünglichen Strömungswiderstand veränderten Strömungswiderstands des zweiten Rohrs.

Nach einer fünfunddreißigsten Ausgestaltung der Erfindung ist vorgesehen, daß die Meß- und Betriebs-Elektronik einen Multiplexer mit wenigstens zwei Signaleingängen sowie wenigstens einem Signalausgang aufweist, welcher Multiplexer dafür eingerichtet ist, wahlweise, beispielsweise nämlich zyklisch, einen von dessen Signaleingängen auf den Signalausgang durchzuschalten, derart, daß ein am jeweils durchgeschalteten Signaleingang anliegendes Signal an den Signalausgang weitergeführt ist, und ist vorgesehen, daß das die Meß- und Betriebs-Elektronik einen, beispielsweise eine nominelle Auflösung von mehr als 16 Bit aufweisenden und/oder mit einer mehr als 1000 s$^-$ betragenden Abtastrate getakteten, Analog-zu-Digital-Wandler mit wenigstens einem Signaleingang und wenigstens einem Signalausgang aufweist, welcher Analog-zu-Digital-Wandler dafür eingerichtet ist, ein an nämlichem Signaleingang anliegendes analoges Eingangssignal mit einer, beispielsweise auch mehr als 1000 s$^-$ betragenden, Abtastrate und mit einer, beispielsweise auch mehr als 16 Bit betragenden, digitalen Auflösung in ein nämliches Eingangssignal repräsentierendes digitales Ausgangssignal umzusetzen und am Signalausgang bereitzustellen. Diese Ausgestaltung der Erfindung weiterbildend ist ferner vorgesehen, daß der wenigstens eine Signalausgang des Multiplexers und der wenigstens eine Signaleingang des Analog-zu-Digital-Wandlers miteinander elektrisch gekoppelt sind und daß der erste Temperatursensor und der zweite Temperatursensor jeweils mit dem Multiplexer elektrisch verbunden sind, derart, daß das erste Temperaturmeßsignal an einem ersten Signaleingang des Multiplexers und daß das zweite Temperaturmeßsignal an einem zweiten Signaleingang des Multiplexers anliegen, wodurch das Ausgangssignal des Analog-zu-Digital-Wandlers zeitweise genau eines der beiden Temperaturmeßsignale repräsentieren kann, mithin die die Meß- und Betriebs-Elektronik den Wandlertemperatur-Meßwert unter Verwendung des eines der beiden Temperaturmeßsignale repräsentierenden Ausgangssignals des Analog-zu-Digital-Wandlers generieren kann.

Nach einer ersten Weiterbildung der Erfindung umfaßt das Meßsystem weiters einen, beispielsweise elektrodynamischen und/oder zum ersten Schwingungssensor baugleichen, zweiten Schwingungssensor zum Erfassen von, beispielsweise auslaßseitigen, mechanischen Schwingungen wenigstens eines der Rohre.

Nach einer ersten Ausgestaltung der ersten Weiterbildung Erfindung ist ferner vorgesehen, daß eine mittels des ersten Schwingungssensors und mittels des zweiten Schwingungssensors gebildete Schwingungssensoranordnung spiegelsymmetrisch bezüglich wenigstens einer die Wandlervorrichtung imaginär schneidenden, insb. nämlich sowohl zu einer Trägheitshauptachse des ersten Rohrs als auch zu einer Trägheitshauptachse des zweiten Rohrs parallelen, gedachten Symmetrieachse ist.

Nach einer zweiten Ausgestaltung der ersten Weiterbildung Erfindung ist ferner vorgesehen, daß der erste Temperatursensor gleichweit vom ersten Schwingungssensor entfernt positioniert ist wie der zweite Temperatursensor vom zweiten Schwingungssensor.

Nach einer zweiten Weiterbildung der Erfindung umfaßt das Meßsystem weiters einen einlaßseitigen ersten Strömungsteiler sowie einen auslaßseitigen zweiten Strömungsteiler, wobei das erste und das zweite Rohr unter Bildung strömungstechnisch parallel geschalteter Strömungspfade an die, beispielsweise baugleichen, Strömungsteiler angeschlossen sind, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers mündet, und daß das zweite Rohr mit dessen ersten Ende in eine zweite Strömungsöffnung des ersten Strömungsteilers und mit dessen zweiten Ende in eine zweite Strömungsöffnung des zweiten Strömungsteilers mündet.

Nach einer dritten Weiterbildung der Erfindung umfaßt das Meßsystem weiters ein eine von einer, beispielsweise metallischen, Wandung umhüllte Kavität aufweisendes Wandler-Gehäuse, wobei sowohl das erste als auch das zweite Rohr innerhalb der Kavität des Wandler-Gehäuses angeordnet sind, derart, daß zwischen einer der Kavität zugewandte Innenfläche der Wandung des Wandler-Gehäuses, einer der Kavität zugewandten Mantelfläche der Wandung des ersten Rohrs sowie einer der Kavität zugewandten Mantelfläche der Wandung des zweiten Rohrs ein Zwischenraum gebildet ist, und wobei das Wandler-Gehäuse, das erste Rohr und das zweite Rohr dafür eingerichtet sind, im Zwischenraum ein, insb. eine spezifische Wärmeleitfähigkeit von weniger als 1 W / (m ( K) aufweisendes, Fluid, beispielsweise nämlich Luft oder ein inertes Gas, unter Bildung eines sowohl das erste als auch das zweite Rohr umhüllenden Fluidvolumens zu halten, derart, daß die dem Zwischenraum zugewandte Mantelfläche der Wandung des ersten Rohrs unter Bildung einer ersten Grenzfläche erster Art, nämlich einer Grenzfläche zwischen einer fluiden und einer festen Phase, und die dem Zwischenraum zugewandte Mantelfläche der Wandung des zweiten Rohrs unter Bildung einer zweiten Grenzfläche erster Art von im Zwischenraum gehaltenem Fluid kontaktiert sind.

Nach einer vierten Weiterbildung der Erfindung umfaßt das Meßsystem weiters: ein eine von einer, beispielsweise metallischen, Wandung umhüllte Kavität aufweisendes Wandler-Gehäuse, einen einlaßseitigen ersten Strömungsteiler sowie einen auslaßseitigen zweiten Strömungsteiler,

- wobei das erste und das zweite Rohr unter Bildung strömungstechnisch parallel geschalteter Strömungspfade an die, beispielsweise baugleichen, Strömungsteiler angeschlossen sind, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers mündet, und daß das zweite Rohr mit dessen ersten Ende in eine zweite Strömungsöffnung des ersten Strömungsteilers und mit dessen zweiten Ende in eine zweite Strömungsöffnung des zweiten Strömungsteilers mündet;
- wobei sowohl das erste als auch das zweite Rohr innerhalb der Kavität des Wandler-Gehäuses angeordnet sind, derart, daß zwischen einer der Kavität zugewandte Innenfläche der Wandung des Wandler-Gehäuses, einer der Kavität zugewandten Mantelfläche der Wandung des ersten Rohrs sowie einer der Kavität zugewandten Mantelfläche der Wandung des zweiten Rohrs ein Zwischenraum gebildet ist;
- wobei das Wandler-Gehäuse, das erste Rohr und das zweite Rohr dafür eingerichtet sind, im Zwischenraum ein, insb. eine spezifische Wärmeleitfähigkeit von weniger als 1 W / (m ( K) aufweisendes, Fluid, beispielsweise nämlich Luft oder ein inertes Gas, unter Bildung eines sowohl das erste als auch das zweite Rohr umhüllenden Fluidvolumens zu halten, derart, daß die dem Zwischenraum zugewandte Mantelfläche der Wandung des ersten Rohrs unter Bildung einer ersten Grenzfläche erster Art, nämlich einer Grenzfläche zwischen einer fluiden und einer festen Phase, und die dem Zwischenraum zugewandte Mantelfläche der Wandung des zweiten Rohrs unter Bildung einer zweiten Grenzfläche erster Art von im Zwischenraum gehaltenem Fluid kontaktiert sind;
- und wobei sowohl der erste Strömungsteiler als auch der zweite Strömungsteiler jeweils integraler Bestandteil des Wandler-Gehäuses sind, insb. derart, daß mittels des ersten Strömungsteiler ein erstes Ende des Wandler-Gehäuses und mittels des zweiten Strömungsteiler ein vom ersten Ende des Wandler-Gehäuses entferntes zweites Ende des Wandler-Gehäuses gebildet sind.

Nach einer fünften Weiterbildung der Erfindung umfaßt das Meßsystem weiters einen, insb. dem Anschluß der Wandlervorrichtung an ein das Fluid zuführendes Leitungssegment einer Prozeßleitung dienlichen, einlaßseitigen ersten Anschlußflansch sowie einen, insb. dem Anschluß der Wandlervorrichtung an ein das Fluid wieder abführendes Leitungssegment einer Prozeßleitung dienlichen, auslaßseitigen zweiten Anschlußflansch.

Nach einer Ausgestaltung der fünften Weiterbildung Erfindung ist ferner vorgesehen, daß jeder der Anschlußflansche jeweils eine Dichtfläche zum fluiddichten bzw. leckagefreien Verbinden der Wandlervorrichtung mit einem jeweils korrespondierenden Leitungssegment einer Prozeßleitung aufweist, und daß ein kleinster Abstand zwischen nämlichen Dichtflächen eine, insb. mehr als 250 mm betragende und/oder weniger als 3000 mm betragende, Einbaulänge, $L_{MW}$, der Wandlervorrichtung definiert, daß beispielsweise nämlich ein Rohrlänge-zu-Einbaulänge-Verhältnis der Wandlervorrichtung, definiert durch ein Verhältnis einer abgewickelte Rohrlänge des ersten Rohrs zur Einbaulänge der Wandlervorrichtung, mehr als 1.2 - insb. mehr als 1,4 - beträgt.

Ein Grundgedanke der Erfindung besteht darin, zum einen bei der Ermittlung von Meßwerten für physikalische Meßgrößen eines strömenden Fluids anhand von Resonanzfrequenzen vibrierender Rohre eine solche Wandlervorrichtungstemperatur zu verwenden, die zumindest näherungsweise bzw. möglichst genau einer Temperatur entspricht, die die Wandung jedes der Rohre in deren jeweiliger Mitte, mithin jeweils im Bereich des Schwingungserregers jeweils angenommen hat, die beispielsweise also einem Mittelwert nämlicher Temperaturen entspricht, und zum anderen die vorbezeichnete Wandlervorrichtungstemperatur basierend auf möglichst wenigen - idealerweise lediglich zwei - örtlichen Temperaturenmessungen an im Betrieb des Meßsystems möglichst kaum oder nur mit sehr geringer Amplitude vibrierenden Bereichen der Wandungen der Rohre zu ermitteln.

Ein Vorteil der Erfindung ist zudem auch darin zu sehen, daß bei einer erfindungsgemäßen Anordnung der Temperatursensoren unter Verwendung der gleichen Temperaturmeßsignale, wie bei der Ermittlung der Wandlervorrichtungstemperatur zudem auch eine Diagnose der Wandlervorrichtung im Betrieb des jeweiligen Meßsystems durchführbar ist, beispielsweise im Hinblick auf einer Degradation zumindest einer der Wandungen und/oder im Hinblick auf eine Verstopfung eines der Rohre. Ein weiterer Vorteil der Erfindung ist zudem auch darin zu sehen, daß durch die erfindungsgemäße Anordnung der Temperatursensoren zusätzlich auch ein gewisse Redundanz für die Temperaturmessung bzw. die Ermittlung der vorbezeichneten Wandlertemperatur bereitgestellt ist, derart daß für den Fall, daß genau einer der beiden Temperatursensoren defekt bzw. von der Meß- und Betriebs-Elektronik getrennt ist, basierend auf lediglich dem einen noch vorhanden Temperaturmeßsignal mittels der Meß- und Betriebs-Elektronik immer noch ein (Hilfs-) Meßwert für Wandlervorrichtungstemperatur ermittelt und ersatzweise anstelle des Wandlertemperatur-Meßwerts ausgegeben werden kann, beispielsweise einhergehend mit einer eine Reparatur der Wandlervorrichtung veranlassenden elektronischen Wartungsmeldung.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:

Fig. 1    ein, insb. für die Verwendung in der industriellen Meß- und Automatisierungstechnik geeignetes, Meßsystem mit einer ein Wandler-Gehäuse aufweisenden Wandlervorrichtung und einer in einem - hier direkt am Wandler-Gehäuse befestigten - Elektronik-Gehäuse untergebrachten Meß- und Betriebs-Elektronik;

Fig. 2    schematisch ein Ausführungsbeispiel für ein Meßsystem gemäß Fig. 1;

Fig. 3a, 3b    in perspektivischen Seitenansichten eine für ein Meßsystem gemäß Fig. 1 bzw. 2 geeignete Wandlervorrichtung;

Fig. 4    in einer geschnittenen Seitenansicht eine für ein Meßsystem gemäß Fig. 1 bzw. 2 geeignete Wandlervorrichtung;

Fig. 5a, 5b    in unterschiedlichen geschnittenen Seitenansichten weitere Ausführungsbeispiele für, insb. für eine Wandlervorrichtung gemäß Fig. 3a, 3b bzw. ein Meßsystem gemäß Fig. 1 geeignete, Temperatursensoren;

Fig. 6    schematisch ein weiteres Ausführungsbeispiel für ein Meßsystem gemäß Fig. 1; und

Fig. 7    ein mittels einer Vielzahl diskreter Wärmewiderstände nach Art eines Ersatzschaltbildes gebildetes, der Erklärung von in einer Wandlervorrichtung gemäß Fig. 2, 3 fließenden Wärmströme bzw. entsprechender Temperaturabfälle innerhalb nämlicher Wandlervorrichtung dienendes Widerstandsnetzwerk.

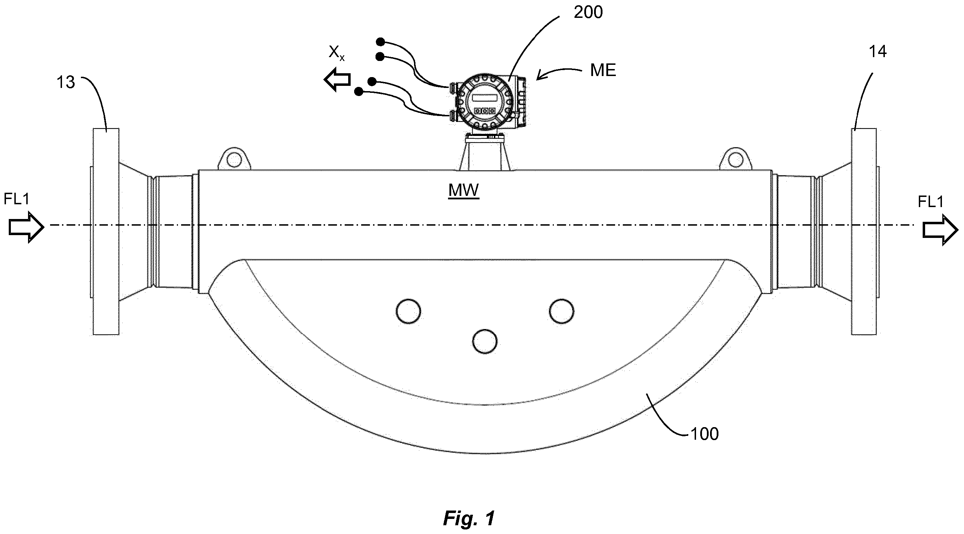

In Fig. 1 ist schematisch ein Meßsystem zum Messen wenigstens einer Meßgröße x, insb. nämlich eines Stoff- oder eines Strömungsparameters, eines - ggf. eine zeitlich und/oder räumlich veränderliche Meßfluidtemperatur $\vartheta_{FL1}$ aufweisenden - strömenden Fluids FL1 (Meßfluid), wie z.B. eines Gases, einer Flüssigkeit oder einer fließfähigen Dispersion, bzw. zum wiederkehrenden Ermitteln von nämliche Meßgröße x momentan repräsentierenden Meßwerten $X_x$ schematisch dargestellt. Meßgröße x kann beispielsweise eine Dichte $\rho$ oder eine Viskosität $\eta$, mithin eine solche Meßgröße sein, die selbst eine gewisse Abhängigkeit von der jeweiligen Meßfluidtemperatur $\vartheta_{FL1}$ aufweist und/oder bei deren Messung eine Berücksichtigung von verschiedenen Temperaturen bzw. Temperaturverteilungen innerhalb des Meßsystems erforderlich sein kann. Meßgröße kann desweiteren beispielsweise auch eine Massendurchflußrate m des, beispielsweise durch eine Rohrleitung, strömenden Fluids und/oder dessen Meßfluidtemperatur $\vartheta_{FL1}$ sein.

Das Meßsystem umfaßt dafür eine Wandlervorrichtung MW zum Erzeugen von von der wenigstens einen Meßgröße abhängigen Meßsignalen sowie eine mit dieser elektrisch verbundene, insb. im Betrieb von extern via Anschlußkabel und/oder mittels interner Energiespeicher mit elektrischer Energie versorgte, Meß- und Betriebs-Elektronik ME zum Erzeugen der die mittels der Wandlervorrichtung erfaßte Meßgröße(n) repräsentierenden Meßwerte bzw. zum sequentiellen Ausgeben solcher Meßwerte als einen jeweils aktuell gültigen Meßwert des Meßsystems an einem entsprechenden Meßausgang, beispielsweise auch in Form digitaler Meßwerte und/oder in Echtzeit.

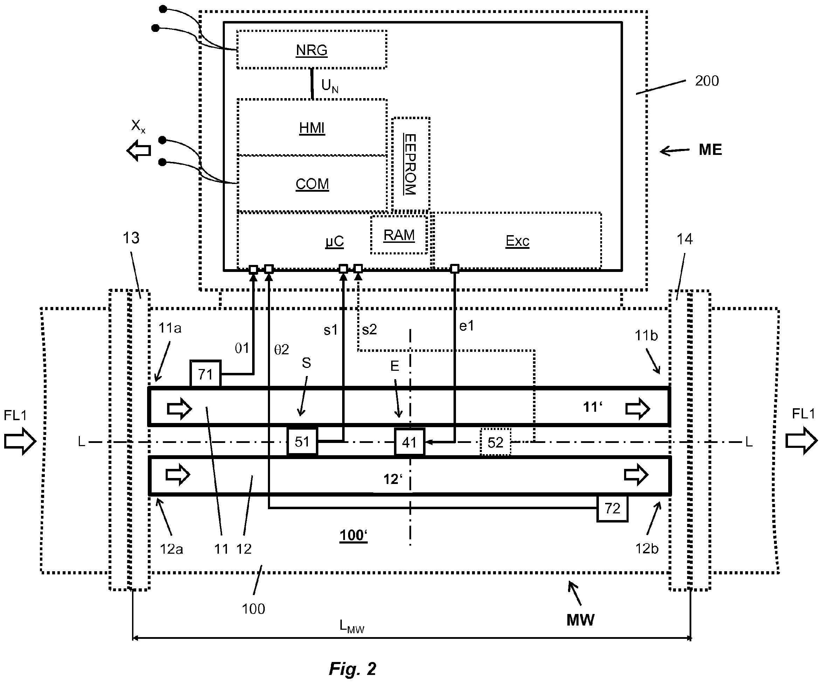

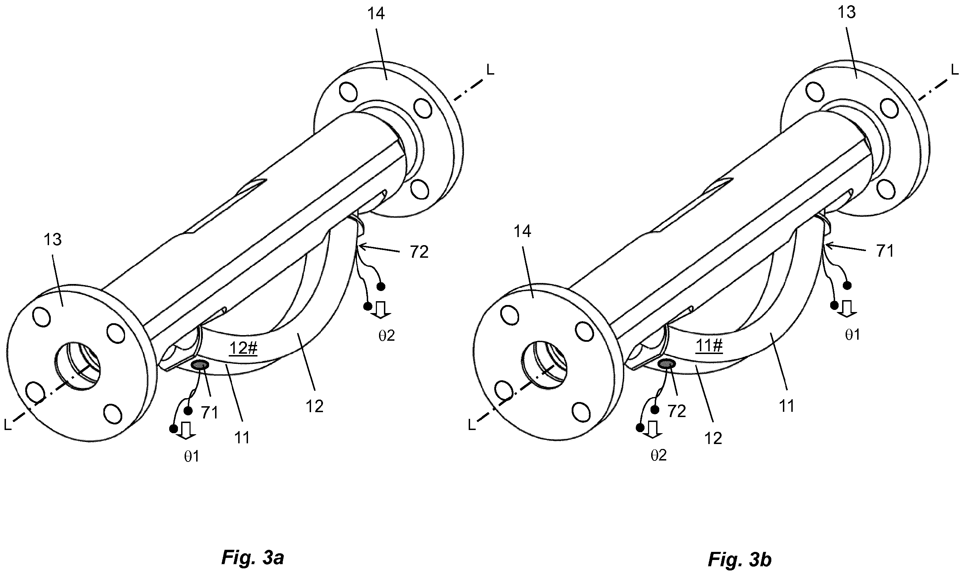

Die Wandlervorrichtung des Meßsystems dient - wie in Fig. 2 schematisch dargestellt bzw. einer Zusammenschau der Fig. 1 und 2 ersichtlich - im besonderen dazu, im Betrieb ein Teilvolumen des jeweils zu messsenden Fluid FL1 zu führen bzw. von nämlichem Fluid durchströmt zu werden sowie verschiedene Meßsignale für mittels der Wandlervorrichtung jeweils zu erfassende physikalische Meßgrößen sowie für an verschiedenen Meßpunkten innerhalb der Wandlervorrichtung herrschende Meßstellentemperaturen bereitzustellen. Die Wandlervorrichtung ist dafür mit einem ein von einer Wandung umhülltes Lumen 11' aufweisenden, beispielsweise zumindest abschnittsweise gekrümmten und/oder zumindest abschnittsweise geraden, ersten Rohr 11 sowie einem ein von einer Wandung umhülltes Lumen 11' aufweisenden, beispielsweise zumindest abschnittsweise gekrümmten und/oder zumindest abschnittsweise geraden zweiten Rohr 12 ausgestattet. Nämliches Rohr 12 kann - wie auch in den Fign. 2, 3a oder 3b angedeutet bzw. wie aus der Zusammenschau ohne weiteres ersichtlich - beispielsweise dem ersten Rohr 11 baugleich und/oder zum ersten Rohr 11 parallel angeordnet sein. Die Wandung des Rohrs 11 bzw. des Rohrs 12 kann, wie bei Wandlervorrichtungen der in Rede stehenden Art üblich metallisch sein, beispielsweise nämlich zumindest anteilig aus Titan, Zirkonium oder Tantal oder beispielsweise auch aus einem Edelstahl bestehen. Jedes der wenigstens wie Rohre 11, 12 erstreckt sich, wie u.a. auch in Fig. 2 angedeutet, jeweils von einem einlaßseitigen ersten Ende 11a bzw. 12a bis zu einem auslaßseitigen zweiten Ende 11b bzw. 12b und ist jeweils dafür eingerichtet, von einem Fluid, ausgehend vom jeweiligen einlaßseitigen ersten Ende 11a bzw. 12a in Richtung des auslaßseitigen zweiten Ende 11b bzw. 12b durchströmt und währenddessen vibrieren gelassen zu werden, beispielsweise auch derart, daß die Rohre 11, 12 simultan und/oder gegengleich vibrieren.

Desweiteren kann jedes der - beispielsweise baugleichen - Rohre 11, 12 der erfindungsgemäßen Wandlervorrichtung zumindest abschnittsweise gerade, mithin abschnittsweise (hohl-)zylindrisch, beispielsweise nämlich kreiszylindrisch, und/oder zumindest abschnittsweise gekrümmt, beispielsweise nämlich kreisbogenförmig gekrümmt, ausgebildet sein. Sowohl das Rohr 11 als auch das Rohr 12 können ferner jeweils spiegelsymmetrisch bezüglich wenigstens einer das jeweilige Rohr imaginär schneidenden, beispielsweise nämlich mit einer Trägheitshauptachse des nämlichen Rohrs koinzidierenden, jeweiligen gedachten Symmetrieachse, beispielsweise nämlich V-förmig oder U-förmig, ausgebildet sein. Gemäß einer weiteren Ausgestaltung der Erfindung ist ferner vorgesehen, daß die Wandung des Rohrs 11 und/oder die Wandung des Rohs 12 zumindest anteilig - beispielsweise auch überwiegend oder gänzlich - aus einem Material besteht, von dem eine spezifische Wärmeleitfähigkeit $\lambda$10 größer als 10 W / (m · K) und eine spezifische Wärmekapazität cp10 kleiner als 1000 J / (kg · K) sind.

Nach einer weiteren Ausgestaltung der Erfindung ist vorgesehen, jedes der Rohre 11, 12 jeweils Nutzschwingungen, nämlich mechanische Schwingungen um eine jeweils zugehörige statische Ruhelage, die geeignet sind, im hindurchströmenden Fluid von einer Massendurchflußrate m abhängige Corioliskräfte und/oder die geeignet sind, im Fluid von einer Viskosität $\eta$ abhängige Reibungskräfte und/oder von einer Dichte $\rho$ abhängige Trägheitskräfte zu induzieren, ausführen zu lassen. Die Wandlervorrichtung kann dementsprechend beispielsweise als ein Meßwandler vom Vibrationstyp, wie sie u.a. auch in als Coriolis-Massendurchfluß-Meßgerät, als Dichte-Meßgerät und/oder als Viskositäts-Meßgerät ausgebildeten vibronischen Meßsystemen Verwendung finden, bzw. als Komponente eines solchen Meßwandlers ausgebildet sein.

Wie bereits angedeutete, kann nämliche Wandung beispielsweise aus einem Metall bzw. einer Metall-Legierung, beispielweise nämlich Titan, Zirkonium oder Tantal bzw. einer entsprechenden Legierung davon, einem Stahl oder einer Nickelbasislegierung, bestehen. Ferner ist vorgesehen, daß die Wandung jedes der Rohre 11, 12 gemäß einer weiteren Ausgestaltung der Erfindung jeweils eine Wanddicke s, die mehr als 0,5 mm beträgt, und/oder einen Innendurchmesser, der mehr als 0,5 mm beträgt, aufweist. Alternativ oder in Ergänzung kann jedes der Rohre ferner so bemessen sein, daß es ein Innendurchmesser-zu-Wandstärke-Verhältnis D / s, definiert als ein Verhältnis eines Innendurchmesser D des jeweiligen Rohrs zu einer Wanddicke s der Wandung nämlichen Rohrs, aufweist, das weniger als 25:1 beträgt. Gemäß einer weiteren Ausgestaltung der Erfindung ist ferner vorgesehen, daß die Wanddicke bei jedem der Rohre weniger als 10 mm und/oder der Innendurchmesser D weniger als 200 mm beträgt bzw. daß das jedes der Rohre 11, 12 jeweils so bemessen ist, daß das Innendurchmesser-zu-Wandstärke-Verhältnis D / s mehr als 5:1 beträgt.

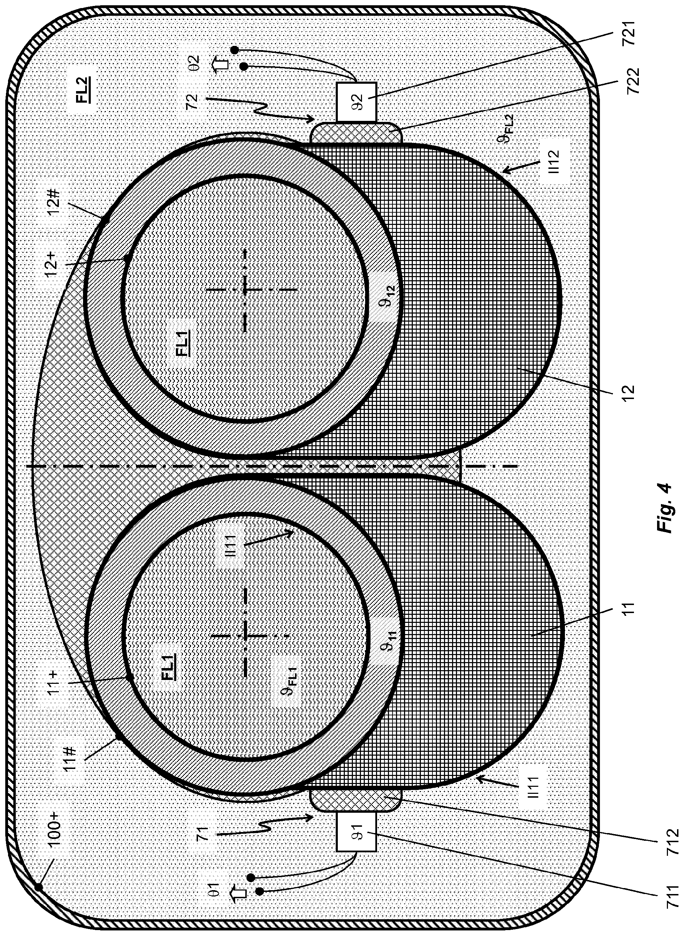

Die Rohre 11, 12 können - wie bei Wandlervorrichtungen der in Rede stehenden Art durchaus üblich - in einem Wandler-Gehäuse 100 der Wandlervorrichtung untergebracht sein, derart, daß - wie auch in Fig. 4 gezeigt bzw. aus einer Zusammenschau der Fign. 1, 2 und 4 ohne weiteres ersichtlich - jedes der Rohre 11, 12 jeweils innerhalb ein und derselben von einer, beispielsweise metallischen und/oder als äußere Schutzhülle dienenden, Wandung des Wandler-Gehäuses umhüllten Kavität des Wandler-Gehäuses angeordnet ist und daß zwischen einer nämlicher Kavität zugewandte Innenfläche 100+ der Wandung des Wandler-Gehäuses 100, einer Mantelfläche 11# der Wandung des Rohrs 11, nämlich einer der Kavität zugewandten Außenfläche der Wandung des Rohrs 11 sowie einer Mantelfläche 12# der Wandung des Rohrs 12, nämlich einer der Kavität zugewandten Außenfläche der Wandung des Rohrs 12 ein Zwischenraum 100' gebildet ist. Die Rohre 11, 12 sowie nämliches Wandler-Gehäuse sind hierbei auch dafür eingerichtet, im Zwischenraum 100' ein, beispielsweise eine spezifische Wärmeleitfähigkeit von weniger als 1 W / (m ( K) aufweisendes, Fluid FL2, beispielsweise nämlich Luft oder ein inertes Gas, unter Bildung eines sowohl das Rohr 11 als auch das Rohr 12 umhüllenden Fluidvolumens zu halten, derart, daß die dem Zwischenraum zugewandte Mantelfläche 11# der Wandung des Rohrs 11 unter Bildung einer ersten Grenzfläche II11 erster Art, nämlich einer Grenzfläche zwischen einer fluiden und einer festen Phase, und die dem Zwischenraum zugewandte Mantelfläche 12# der Wandung des Rohrs 12 unter Bildung einer zweiten Grenzfläche II12 erster Art von im Zwischenraum 100' gehaltenem Fluid FL2 kontaktiert sind.

Die wenigstens zwei Rohre 11, 12 können beispielsweise unter Bildung von seriellen Strömungspfaden miteinander fluidleitend verbunden sein, derart daß das Rohr 11 mit seinem zweiten Ende 11b an das erste Ende 12a des Rohrs 12 angeschlossen ist. Die Rohre 11, 12 können aber auch - wie bei Wandlervorrichtungen der in Rede stehenden Art durchaus üblich - unter Bildung von zwei parallelen Strömungspfaden miteinander fluidleitend verbunden sein. Dafür umfaßt die Wandlervorrichtung nach einer weiteren Ausgestaltung der Erfindung ferner einen einlaßseitigen ersten Strömungsteiler $20_1$ sowie einen auslaßseitigen zweiten Strömungsteiler $20_2$, wobei sowohl das zweite Rohr 11 als auch das Rohr 12 unter Bildung strömungstechnisch parallel geschalteter Strömungspfade an die, beispielsweise auch baugleichen, Strömungsteiler $20_1$, $20_2$ angeschlossen sind, derart, daß das Rohr 11 mit dessen Ende 11a in eine erste Strömungsöffnung $20_{1A}$ des Strömungsteilers $20_1$ und mit dessen Ende 11b in eine erste Strömungsöffnung $20_{2A}$ des Strömungsteilers $20_2$ mündet, und daß das Rohr 12 mit dessen

Ende 12a in eine zweite Strömungsöffnung $20_{18}$ des Strömungsteilers $20_1$ und mit dessen Ende 12b in eine zweite Strömungsöffnung $20_{2B}$ des Strömungsteilers $20_2$ mündet. Für den vorbezeichneten Fall, daß die Rohre 11, 12 innerhalb eines Wandler-Gehäuses 100 untergebracht sind können sowohl der Strömungsteiler $20_1$ als auch der Strömungsteiler $20_2$ jeweils integraler Bestandteil nämlichen Wandler-Gehäuses sein, etwa derart, daß - wie auch in Fig. 2 schematisch dargestellt - mittels des Strömungsteiler $20_1$ ein erstes Ende des Wandler-Gehäuses und mittels des Strömungsteiler $20_2$ ein vom ersten Ende des Wandler-Gehäuses entferntes zweites Ende des Wandler-Gehäuses gebildet sind.

Wie in Fig. 2 angedeutet, kann die Wandlervorrichtung MW ferner dafür eingerichtet sein, in den Verlauf einer das Fluid führenden, beispielsweise als starre Rohrleitung ausgebildeten, Prozeßleitung eingesetzt, beispielsweise nämlich lösbar mit der Prozeßleitung montiert zu werden. Dafür können einlaßseitig der Wandlervorrichtung ein dem Anschluß derselben an ein das Fluid FL1 zuführendes Leitungssegment der Prozeßleitung dienender erster Anschlußflansch 13 und auslaßseitig der Wandlervorrichtung ein dem Anschluß an ein das Fluid wieder abführendes Leitungssegment der Prozeßleitung dienender zweiter Anschlußflansch 14 vorgesehen sein. Die Anschlußflansche 13, 14 können dabei, wie bei Wandlervorrichtung der in Rede stehenden Art durchaus üblich bzw. wie in Fig. 2 angedeutet, ggf. auch endseitig in das vorbezeichnete Wandler-Gehäuse 100 integriert, nämlich als integraler Bestandteil des Wandler-Gehäuses ausgebildet sein. Nach einer weiteren Ausgestaltung der Erfindung ist ferner vorgesehen, daß jeder der Anschlußflansche 13, 14 jeweils eine Dichtfläche zum fluiddichten bzw. leckagefreien Verbinden der Wandlervorrichtung mit einem jeweils korrespondierenden Leitungssegment einer Prozeßleitung aufweist und daß zudem ein kleinster Abstand zwischen nämlichen Dichtflächen eine

Einbaulänge $L_{MW}$ der Wandlervorrichtung definiert; dies im besonderen in der Weise, daß nämliche Einbaulänge $L_{MW}$ mehr als 250 mm und/oder weniger als 3000 mm beträgt und/oder in der Weise, daß ein Rohrlänge-zu-Einbaulänge-Verhältnis $L_{11}/L_{MW}$ der Wandlervorrichtung, definiert durch ein Verhältnis einer abgewickelte Rohrlänge $L_{11}$ des ersten Rohrs 11 zur vorbezeichneten Einbaulänge $L_{MW}$ mehr als 1.2, beispielsweise auch mehr als 1,4 beträgt. Die vorbezeichnete abgewickelte Rohrlänge $L_{11}$ des Rohrs 11 (gestreckte Länge) und/oder eine abgewickelte Rohrlänge $L_{12}$ des Rohrs 12 können zudem beispielsweise mehr als 300 mm betragen.

Die, z.B. mittels wenigstens eines Mikroprozessors und/oder mittels eines digitalen Signalprozessors (DSP) gebildete, Meß- und Betriebs-Elektronik ME wiederum kann, wie in den Fig. 2 angedeutet, beispielsweise in einem einzigen, ggf. auch gekammerten, Elektronik-Gehäuse 200 des Meßsystems untergebracht sein. Nämliches Elektronik-Gehäuse 200 kann je nach Anforderung an das Meßsystem beispielsweise auch schlag- und/oder auch explosionsfest und/oder hermetisch dicht ausgebildet sein. Die Meßgerät-Elektronik ME kann, wie auch in Fig. 2 schematisch nach Art eines Blockschaltbildes dargestellt, eine Meßsignale der Wandlervorrichtung MW verarbeitende, beispielsweise mittels eines Mikroprozessors gebildete, Meß- und Auswerte-Schaltung μC aufweisen, die im Betrieb die entsprechende Meßwerte für die mittels des Meßsystems zu erfassenden Meßgröße generiert. Die Meß- und Auswerteschaltung μC der Meß- und Betriebs-Elektronik ME kann beispielsweise mittels eines wenigstens einen Mikroprozessor und/oder einen digitalen Signalprozessor (DSP) aufweisenden Mikrocomputers realisiert sein. Die davon auszuführenden Programm-Codes wie auch der Steuerung des jeweiligen Meßsystems dienliche Betriebsparameter, wie z.B. auch Sollwerte für mittels der Meß- und Betriebs-Elektronik realisierte Regler bzw. Regleralgorithmen, können - wie auch in der Fig. 2 schematisch dargestellt -, z.B. in einem nicht-flüchtigen Datenspeicher EEPROM der Meß- und Betriebs-Elektronik ME persistent gespeichert sein und beim Starten desselben in einen, z.B. im Mikrocomputer integrierten, flüchtigen Datenspeicher RAM geladen werden. Für derartige Anwendungen geeignete Mikroprozessoren sind z.B. solche vom Typ TMS320VC33, wie sie von der Firma Texas Instruments Inc. am Markt angeboten sind.

Die mittels der Meß- und Betriebs-Elektronik ME generierten Meßwerte $X_x$ können beim hier gezeigten Meßsystem beispielsweise vor Ort, nämlich unmittelbar an der mittels des Meßsystems gebildeten Meßstelle, angezeigt werden. Zum Visualisieren von mittels des Meßsystems erzeugten Meßwerten und/oder gegebenenfalls Meßgerät intern generierten Systemstatusmeldungen, wie etwa einer erhöhte Meßungenauigkeit bzw. -unsicherheit signalisierende Fehlermeldung oder einem eine Störung im Meßsystem selbst oder an der mittels des Meßsystems gebildeten Meßstelle signalisierenden Alarm, vor Ort kann das Meßsystem, wie auch Fig. 2 angedeutet, beispielsweise ein mit der Meß- und Betriebs-Elektronik kommunizierendes, ggf. auch portables, Anzeige- und Bedienelement HMI aufweisen, wie etwa ein im Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch (re-)programmier- bzw. fernparametrierbare, Meß- und Betriebs-Elektronik ME zudem so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer (PC) und/oder einer Workstation, via Datenübertragungssystem, beispielsweise einem Feldbussystem, wie etwa FOUNDATION FIELDBUS, PROFIBUS, und/oder drahtlos per Funk, Meß- und/oder andere Betriebsdaten austauschen kann, wie etwa aktuelle Meßwerte, Systemdiagnosewerte, Systemstatusmeldungen oder aber auch der Steuerung des Meßsystems dienende Einstellwerte. Des weiteren kann die Meß- und Betriebs-Elektronik ME so ausgelegt sein, daß sie von einer externen Energieversorgung, beispielsweise auch über das vorgenannte Feldbussystem, gespeist werden kann. Dafür kann die Meß- und Betriebs-Elektronik ME beispielsweise eine solche interne Energieversorgungsschaltung NRG zum Bereitstellen interner Versorgungsspannungen $U_N$ aufweisen, die im Betrieb von einer im vorgenannten Datenverarbeitungssystem vorgesehenen externen Energieversorgung über das vorgenannte Feldbussystem gespeist wird. Hierbei kann das Meßsystem beispielsweise als sogenanntes Vierleitergerät ausgebildet sein, bei dem die interne Energieversorgungsschaltung der Meßgerät-Elektronik ME mittels eines ersten Paars Leitungen mit einer externen Energieversorgung und die interne Kommunikationsschaltung der Meß- und Betriebs-Elektronik ME mittels eines zweiten Paars Leitungen mit einer externen Datenverarbeitungsschaltung oder einem externen Datenübertragungssystem verbunden werden kann. Die Meß- und Betriebs-Elektronik kann ferner aber auch so ausgebildet sein, daß sie, wie u.a auch in der eingangs erwähnten US-A 2006/0161359 gezeigt, mittels einer, beispielsweise als 4-20 mA-Stromschleife konfigurierten, Zweileiter-Verbindung mit dem externer elektronischen Datenverarbeitungssystem elektrisch verbindbar ist und darüber mit elektrischer Energie versorgt wird sowie Meßwerte zum Datenverarbeitungssystem übertragen kann, ggf. auch unter Verwendung von HART Multidrop. Für den typischen Fall, daß das Meßsystem für eine Ankopplung an ein Feldbus-oder ein anderes elektronisches Kommunikationssystem vorgesehen ist, kann die, beispielsweise auch vor Ort und/oder via Kommunikationssystem (re-)programmierbare, Meß- und Betriebs-Elektronik ME zu dem eine entsprechende - beispielsweise einem der einschlägigen Industriestandards, wie etwa der IEC 61158/IEC 61784, konforme - Kommunikations-Schnittstelle COM für eine Datenkommunikation aufweisen, z.B. zum Senden von Meß- und/oder Betriebsdaten, mithin den die jeweilige Meßgröße repräsentierenden Meßwerte an die bereits erwähnte speicherprogrammierbare Steuerung (SPS) oder ein übergeordnetes Prozeßleitsystem und/oder zum Empfangen von Einstelldaten für das Meßsystem. Das elektrische Anschließen der Wandlervorrichtung an die Meß- und Betriebs-Elektronik kann mittels entsprechender Anschlußleitungen erfolgen, die aus dem Elektronik-Gehäuse 200, beispielsweise via Kabeldurchführung, in das Wandler-Gehäuse 100 geführt und zumindest abschnittsweise auch innerhalb des Wandler-Gehäuses 100 verlegt sind. Die Anschlußleitungen können dabei zumindest anteilig als zumindest abschnittsweise von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, beispielsweise flexiblen bzw. teilweise starren und teilweise flexiblen, gegebenenfalls auch lackierten Leiterplatte gebildet sein, vgl. hierzu auch die eingangs erwähnten US-A 2001/0037690 oder WO-A 96/07081.

Zum Anregen und Aufrechterhalten von mechanischen Schwingungen sowohl des ersten als auch des zweiten Rohrs 11, 12 um eine jeweils zugehörige statische Ruhelage - insb. nämlich von mechanischen Schwingungen jedes der Rohre um eine dessen jeweiliges erstes Ende mit dessen jeweiligen zweiten Ende jeweils imaginär verbindende gedachte erste bzw. zweite Schwingungsachse bzw. von den vorbezeichneten Nutzschwingungen - weist die Wandlervorrichtung ferner eine mittels wenigstens eines, beispielsweise elektrodynamischen, Schwingungserregers 41 gebildete elektro-mechanische Erregeranordnung E auf. Desweiteren umfaßt die Wandlervorrichtung eine mittels wenigstens eines, beispielsweise elektrodynamischen und/oder zum Schwingungserreger typgleichen, ersten Schwingungssensor 51 gebildete, dem Erfassen von, beispielsweise einlaßseitigen und/oder auslaßseitigen, mechanischen Schwingungen wenigstens eines der Rohre 11, 12 dienliche Sensoranordnung S. Darüberhinaus ist nach einer weiteren Ausgestaltung der Erfindung die Meß- und Betriebs-Elektronik ME dafür eingerichtet, zum Anregen von mechanischen Schwingungen der Rohre ein die Erregeranordnung E, beispielsweise nämlich deren wenigstens einen Schwingungserreger 41, treibendes Erregersignal (e) zu generieren und ist die Erregeranordnung E dafür eingerichtet ist, angesteuert von nämlichem Erregersignal e, mechanische Schwingungen der wenigstens zwei Rohre 11, 12, beispielsweise nämlich gegengleiche Schwingungen, anzuregen bzw. aufrecht zu erhalten. Nach einer weiteren Ausgestaltung der Erfindung ist zudem die Sensoranordnung S der Wandlervorrichtung dafür eingerichtet, wenigstens ein mechanische Schwingungen wenigstens eines der Rohre repräsentierendes (erstes) Schwingungssignal s1 zu liefern. Darüberhinaus ist die Meß- und Betriebs-Elektronik ME nach einer weiteren Ausgestaltung der Erfindung dafür eingerichtet, unter Verwendung des Schwingungssignals s1 wiederkehrend einen Frequenzmeßwert $X_f$ zu generieren, der eine Frequenz von mechanischen Schwingungen des Rohrs 11 und/oder des Rohrs 12 repräsentiert; dies im besonderen in der Weise, daß anhand des Schwingungssignals eine Nutzfrequenz, nämlich eine von der zu messenden Meßgröße abhängigen Schwingfrequenz der Nutzschwingungen ermittelt wird und der Frequenzmeßwert $X_f$ nämliche Nutzfrequenz repräsentiert. Als Nutzfrequenz kann, wie bei vibronischen Meßsystemen der in Rede stehenden Art durchaus üblich, eine der den Fluid führenden Rohren jeweils innewohnende Resonanzfrequenzen gewählt sein, beispielsweise nämlich eine Resonanzfrequenz eines Biegeschwingungsgrundmodes der Rohre. Darüberhinaus ist die Meß- und Betriebs-Elektronik ME nach einer weiteren Ausgestaltung der Erfindung dafür eingerichtet, den wenigstens einen Meßwert $X_x$ unter Verwendung zumindest des Frequenzmeßwerts zu generieren. Nämlicher mittels des Frequenzmeßwerts $X_f$ generierter Meßwert $X_x$ kann beispielsweise ein die Dichte $\rho$ des Fluids repräsentierender Dichte-Meßwert ($X_\rho \to X_x$) sein.

Nicht zuletzt für den vorbeschriebenen Fall, daß die Wandlervorrichtung bzw. das damit gebildete Meßsystem dafür vorgesehen ist, eine Massendurchflußrate m des strömenden Fluids zu messen, kann die Sensoranordnung S der Wandlervorrichtung ferner auch dafür eingerichtet sein, wenigstens ein mechanische Schwingungen wenigstens eines der Rohre repräsentierendes zweites Schwingungssignal s2 zu liefern, insb. derart, daß zwischen dem Schwingungssignal s1 und nämlichen Schwingungssignal s2 eine von einer Massendurchflußrate des durch das Rohr 11 und/oder durch das Rohr 12 strömenden Fluids abhängige Phasendifferenz existiert. Dementsprechend ist die Meß- und Betriebs-Elektronik ME nach einer weiteren Ausgestaltung der Erfindung ferner auch dafür eingerichtet, unter Verwendung sowohl des Schwingungssignals s1 als auch des Schwingungssignals s2 einen Massendurchfluß-Meßwert $X_m$, nämlich einen eine Massendurchflußrate, m, eines durch das Rohr 11 und/oder durch das Rohr 12 strömenden Fluids repräsentierenden Meßwert ($X_x \to X_m$) zu generieren. Dafür kann - wie auch in Fig. 2 angedeutet - in der Meß- und Betriebs-Elektronik ME ferner eine entsprechende, nämlich dem Ansteuern der Wandlervorrichtung MW dienende, ggf. auch elektrisch mit der vorbezeichneten Meß- und Auswerte-Schaltung μC verbundene Treiber-Schaltung Exc vorgesehen sein, die dafür eingerichtet ist, wenigstens ein elektrisches Treibersignal e1 für einen ggf. in der Wandlervorrichtung vorgesehenen Schwingungserreger bereitzustellen. Im übrigen kann die Meß- und Betriebs-Elektronik ME hierfür auch so ausgebildet sein, daß sie hinsichtlich des Schaltungsaufbaus einer der aus dem eingangs erwähnten Stand der Technik, beispielsweise etwa der US-B 63 11 136, bekannten Meß- und Betriebs-Elektroniken oder beispielsweise auch einem Meßumformer eines seitens der Anmelderin, z.B. unter der Bezeichung "PROMASS 83F", angebotenen Coriolis-Massendurchfluß-/Dichte-Meßgeräts entspricht. Zwecks Generierung des vorbezeichneten Schwingungssignals s2 umfaßt die Wandlervorrichtung bzw. das damit gebildete Meßsystem weiters einen, beispielsweise elektrodynamischen bzw. zum Schwingungssensor 51 baugleichen, zweiten Schwingungssensor 52, der dafür vorgesehen bzw. eingerichtet ist, beispilesweise auslaßseitige, mechanische Schwingungen wenigstens eines der Rohre 11, 12 zu erfassen. Die so mittels der beiden Schwingungssensoren 51, 52 gebildete Schwingungssensoranordnung kann - wie bei Wandlervorrichtung der in Rede stehenden Art durchaus üblich - beispielsweise auch spiegelsymmetrisch bezüglich wenigstens einer die Wandlervorrichtung imaginär schneidenden gedachten Symmetrieachse sein, beispielsweise nämlich bezüglich einer sowohl zu einer Trägheitshauptachse des Rohrs 11 als auch zu einer Trägheitshauptachse des Rohrs 12 parallelen Symmetrieachse.

Wie bereits erwähnt, kann bei Wandlervorrichtungen der in Rede stehenden Art bzw. damit gebildeten vibronischen Meßsystemen eine für den Betrieb, nicht zuletzt auch für die präzise Ermittlung der Meßwerte für die Dichte oder die Viskosität des Fluids wichtige (Hilfs-) Meßgröße u.a. auch eine Wandlervorrichtungstemperatur sein, die geeignet ist, einen thermodynamischen Zustand der Wandlervorrichtung bzw. dessen Einfluß auf die für die Messung des wenigstens einen Stoff- bzw. des Strömungsparameters relevanten Schwingungseigenschaften der Wandlervorrichtung zu charakterisieren (Ziel-Temperatur), beispielsweise nämlich um eine Abhängigkeit der Nutzfrequenz von einer räumlich und/zeitlich ändernden Temperaturverteilung innerhalb der Wandlervorrichtung - etwa wegen einer Temperaturabhängigkeit eines Elastizitätsmodul des jeweiligen Materials der Wandung des Rohrs 11 bzw. des Rohrs 12 bzw. einer Temperaturabhängigkeit der jeweilige räumliche Abmessungen der Rohre - mittels der Meß- und Betriebs-Elektronik ME meßtechnisch zumindest näherungsweise zu kompensieren. Desweiteren kann auch die Meßfluidtemperatur $\vartheta_{FL1}$ eine weitere, im Betrieb des jeweiligen Meßsystems regelmäßig zu ermittelnde Ziel-Temperatur sein.

Zum Erfassen von innerhalb der Wandlervorrichtung herrschenden Meßstellentemperaturen und zum Konvertieren derselben in ein jeweiliges Temperaturmeßsignal umfaßt die erfindungsgemäße Wandlervorrichtung - wie in Fig. 2, 3a, 3b bzw. 4 gezeigt - ferner einen mechanisch, gleichwohl thermisch leitend mit der Wandung des ersten Rohrs gekoppelten ersten Temperatursensor 71 sowie einen mechanisch, gleichwohl thermisch leitend mit der Wandung des zweiten Rohrs gekoppelten zweiten Temperatursensor 72. Nämliche Temperatursensoren 71, 72 sind zudem elektrisch mit der Meß- und Betriebs-Elektronik ME verbunden, beispielsweise durch jeweils zwei der vorbezeichneten elektrischen Anschlußleitungen. Der Temperatursensor 71 ist, wie auch aus der Fig. 2 bzw. 3a jeweils ersichtlich, weniger weit vom ersten Ende 11a des Rohrs 11 entfernt positioniert als vom zweiten Ende 11b nämlichen Rohres 11, während der Temperatursensor 72, wie ebenfalls aus Fig. 2 oder auch aus Fig. 3b ersichtlich, weniger weit vom zweiten Ende 12b des Rohrs 12 entfernt positioniert als vom ersten Ende 12a nämlichen Rohres 12. Zudem ist der Temperatursensor 71 dafür vorgesehen bzw. eingerichtet, eine erste Meßstellentemperatur $\vartheta_1$, nämlich eine Temperatur an einer mittels nämlichen Temperatursensors 71 gebildeten ersten Temperaturmeßstelle, zu erfassen und in ein erstes Temperatur-

meßsignal $\Theta 1$, nämlich ein die erste Meßstellentemperatur $\vartheta 1$ repräsentierendes erstes elektrisches Meßsignal zu wandeln, und ist der Temperatursensor 72 dafür vorgesehen bzw. eingerichtet, eine zweite Meßstellentemperatur $\vartheta 2$, nämlich eine Temperatur an einer mittels des nämlichen Temperatursensors 72 gebildeten zweiten Temperaturmeßstelle zu erfassen und in ein zweites Temperaturmeßsignal $\Theta 2$, nämlich ein die zweite Meßstellentemperatur $\vartheta 2$ repräsentierendes zweites elektrisches Meßsignal zu wandeln. Jedes der Temperaturmeßsignale $\theta 1$, $\theta 2$ kann beispielsweise so ausgebildet sein, daß es eine von der jeweiligen Meßstellentemperatur $\vartheta 1$ bzw. $\vartheta 2$ abhängige elektrische Signalspannung und/oder einen von nämlicher Meßstellentemperatur abhängigen elektrischen Signalstrom aufweist.

Nach einer weiteren Ausgestaltung der Erfindung ist der Temperatursensor 71 - wie auch in Fig. 2 angedeutet - weniger weit vom Ende 11a des Rohrs 11 entfernt positioniert als der Temperatursensor 72 vom Ende 12a des Rohres 12 bzw. ist umgekehrt der Temperatursensor 72 weniger weit vom Ende 12b des Rohrs 12 entfernt positioniert als der Temperatursensor 71 vom Ende 11b des Rohres 11; dies im besonderen in der Weise, daß der Temperatursensor 71 gleichweit vom Ende 11a des Rohrs 11 entfernt positioniert ist wie der Temperatursensor 72 vom Ende 12b des Rohrs 12 und/oder daß der Temperatursensor 71 gleichweit vom Ende 11b des Rohrs 11 entfernt positioniert ist wie der Temperatursensor 72 vom Ende 12a des Rohrs 12. Alternativ oder in Ergänzung kann der Temperatursensor 71 beispielsweise auch gleichweit von einer Mitte des Rohrs entfernt positioniert sein wie der Temperatursensor 72 von einer Mitte des Rohrs 12. Desweiteren können die beiden Temperatursensoren 71, 72 ferner auch so positioniert sein, daß der Temperatursensor 71 und der Temperatursensor 72, wie auch in Fig. 4 angedeutet bzw. aus einer Zusammenschau der Fig. 2 und 4 ohne weiteres ersichtlich, bezogen auf eine, beispielsweise mit einer Hauptströmungsrichtung der Wandlervorrichtung übereinstimmende, gedachte Längsachse L der Wandlervorrichtung azimutal - beispielsweise nämliche in Projektion auf eine nämliche Längsachse L als Flächennormale aufweisende gedachte Querschnittsfläche - einander diametral gegenüberliegen. Im besonderen können die beiden Temperatursensoren 71 , 72 ferner auch so positioniert bzw. angeordnet sein, daß eine mittels nämlicher Temperatursensoren 71 , 72 gebildete Temperatursensoranordnung der Wandlervorrichtung achsensymmetrisch bezüglich wenigstens einer die Wandlervorrichtung imaginär schneidenden gedachten Symmetrieachse ist, beispielsweise nämlich einer sowohl zu einer Trägheitshauptachse des Rohrs 11 als auch zu einer Trägheitshauptachse des Rohrs 12 parallelen gedachten Symmetrieachse. Für den vorbezeichneten Fall, daß die Sensoranordnung S mittels der vorbezeichneten zwei Schwingungssensoren 51, 52 gebildet ist kann der Temperatursensor 71 - wie auch in Fig. 2 angedeutet - beispielsweise gleichweit vom Schwingungssensor 51 entfernt positioniert sein wie der zweite Temperatursensor 72 vom Schwingungssensor 52.

Nach einer weiteren Ausgestaltung der Erfindung ist der Temperatursensor 71 in gleicher Weise thermisch leitend mit der Wandung des Rohrs 11 gekoppelt wie der Temperatursensor 72 mit der Wandung des Rohrs 12; dies beispielsweise auch derart, daß ein einem von der Wandung des Rohrs 11 zum Temperatursensor 71 und weiter zu einer nämlichen Temperatursensor 71 umgebenden Atmosphäre fließenden Wärmestrom entgegenwirkender Wärmewiderstand gleich groß ist wie ein einem von der Wandung des Rohrs 12 zum Temperatursensor 72 und weiter zu einer den Temperatursensor 72 umgebenden Atmosphäre fließenden Wärmestrom entgegenwirkender Wärmewiderstand. Desweiteren ist vorgesehen, daß der Temperatursensor 71 in gleicher Weise mechanisch mit der Wandung des Rohrs 11 gekoppelt ist wie der Temperatursensor 72 mit der Wandung des Rohrs 12.

Der Temperatursensor 71 ist nach einer weiteren Ausgestaltung der Erfindung - wie auch in Fig. 2 schematisch dargestellt - mittels eines innerhalb des Zwischenraums 100' angeordneten ersten Temperaturfühler 711 sowie mittels eines nämlichen Temperaturfühler 711 thermisch leitend mit der Wandung des Rohrs 11 koppelnden ersten Kopplungskörper 712 gebildet. Analog dazu kann der Temperatursensor 72 mittels eines ebenfalls innerhalb des Zwischenraums 100' angeordneten - beispielsweise auch zum vorbezeichneten Temperaturfühler 711 baugleichen - zweiten Temperaturfühler 721 sowie mittels eines nämlichen Temperaturfühler 721 thermisch leitend mit der Wandung des Rohrs 12 koppelnden - beispielsweise auch zum vorbezeichneten Kopplungskörper 712 baugleichen - zweiten Kopplungskörper 722 gebildet sein. Jeder der beiden - die eigentliche Wandlung der zu erfassenden (Meßstellen-)Temperatur in das jeweilige Meßsignal vollziehenden - Temperaturfühler 711, 721 kann beispielsweise jeweils mittels eines Platin-Meßwiderstandes, eines Thermistors oder eines Thermoelements gebildet sein. Ferner kann jeder der Temperaturfühler 711, 721 mit dem jeweils zugehörigen Kopplungskörper 712 bzw. 722 mittels einer geeigneten stoffschlüssigen Verbindung, beispielsweise nämlich einer Klebeverbindung oder einer Löt- bzw. Schweißverbindung, und/oder durch Einbetten in den jeweiligen Kopplungskörper 712 bzw. 722 verbunden sein.

Zwecks Erzielung einer mechanisch festen und beständigen, gleichwohl thermisch gut leitfähigen Verbindung zwischen der Wandung des Rohrs und dem Temperatursensor 71 ist dieser gemäß einer weiteren Ausgestaltung der Erfindung stoffschlüssig mit der Mantelfläche 11# der Wandung des Rohrs 11 verbunden, beispielsweise nämlich adhäsiv oder mittels Löt- bzw. Schweißverbindung. Zum Herstellen einer solchen stoffschlüssigen Verbindung zwischen Rohr 11 und Temperatursensor 71 kann z.B. ein Wärmeleitkleber, mithin ein Kunststoff auf Basis von Epoxidharz oder auf Basis von Silikon, beispielsweise nämlich ein Silikonelastomere oder ein 1- oder 2-komponentiger Silikonkautschuk, wie sie u.a. auch von der Fa. DELO Industrie Klebstoffe GmbH & Co KGaA, 86949 Windach, DE unter der Bezeichnung DELO-GUM® 3699 gehandelt werden, dienen. Der zum Verbinden von Temperatursensor 71 und Rohr 11 verwendete Kunststoff kann zwecks Erzielung einer möglichst guten Wärmeleitung zudem auch mit Metalloxid-Partikeln versetzt sein. Ferner ist es zudem auch möglich, den vorbezeichneten Kopplungskörper 712 selbst - teilweise oder gänzlich - aus Kunststoff herzustellen, beispielsweise auch in der Weise, daß ein zwischen Temperaturfühler 711 und Wandung plazierter bzw. sowohl die Mantelfläche 11# der Wandung als auch den Temperaturfühler 711 kontaktierendes, ggf. auch monolithisches Kunststoffformteil als Kopplungskörper 712 dient bzw. der gesamte Kopplungskörper 712 aus - beispielsweise ein oder mehrlagig auf die Wandung des Rohrs 11 appliziertem, mithin zwischen der Wandung des Rohrs 11 und dem ersten Temperaturfühler 711 plaziertem - Kunststoff besteht. Darüberhinaus kann auch der Temperatursensor 72 gleichermaßen stoffschlüssig mit der Mantelfläche 12# der Wandung des Rohrs 12 verbunden sein, beispielsweise nämlich adhäsiv oder mittels einer Löt- bzw. Schweißverbindung. Dafür besteht der Kopplungskörper 722 gemäß einer weiteren Ausgestaltung der Erfindung zumindest anteilig, beispielsweise auch überwiegend, aus einem Metall, mithin kann der Kopplungskörper 722 aus einem Material hergestellt sein, von dem eine spezifische Wärmeleitfähigkeit $\lambda 2$ größer als 10 W / (m · K) bzw. und/oder von dem Material eine spezifische Wärmekapazität cp722 kleiner als 1000 J / (kg · K) ist, beispielsweise nämlich aus dem gleichen Material wie der Kopplungskörper 712. Ferner können die beiden vorbezeichneten Kopplungskörper 712, 722 durch entsprechende Auswahl der zu deren jeweiliger Herstellung jeweils tatsächlich verwendeten Materialien ohne weiteres so ausgebildet werden, daß die spezifische Wärmeleitfähigkeit $\lambda 722$ eines Materials des zweiten Kopplungskörpers 722 gleich einer spezifischen Wärmeleitfähigkeit $\lambda 712$ eines Ma-terials des Kopplungskörpers 712 und/oder die spezifische Wärmekapazität cp722 des Materials des Kopplungskörpers 722 gleich einer spezifische Wärmekapazität cp712 des Materials des ersten Kopplungskörpers 712 ist.

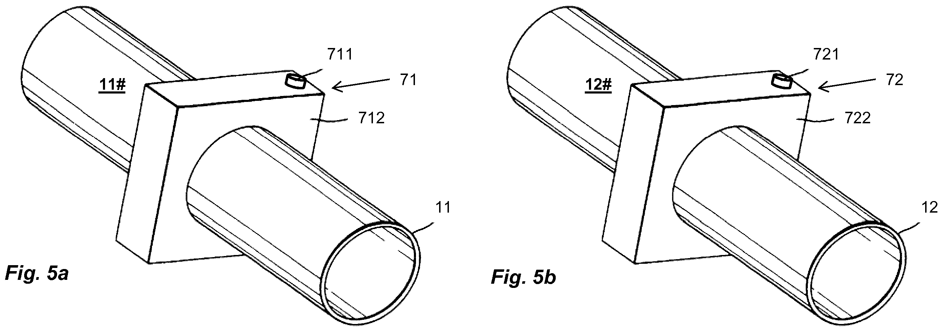

Nach einer anderen Ausgestaltung der Erfindung ist auch der zweite Kopplungskörper 722 des Temperatursensors 72 zumindest teilweise aus einem Kunststoff hergestellt bzw. mittels eines entsprechend zwischen dem Temperaturfühler 721 und der Wandung des Rohrs 12 plazierten Kunststoffkörpers gebildet. Alternativ oder in Ergänzung dazu ist gemäß einer weiteren Ausgestaltung der Erfindung vorgesehen, sowohl den Kopplungskörper 721 des Temperatursensors 71 - wie auch in Fig. 5a angedeutet - mittels einer zwischen der Wandung des Rohrs 11 und dem Temperaturfühler 721 plazierten, aus einem Metall bzw. einer Metall-Legierung, beispielsweise einem Stahl, bestehenden Scheibe als auch den Kopplungskörper 722 des Temperatursensors 72 - wie auch in Fig. 5b angedeutet - mittels einer solchen zwischen der Wandung des Rohrs 12 und dem Temperaturfühler 721 plazierten, aus einem Metall bzw. einer Metall-Legierung, beispielsweise einem Stahl, bestehenden Scheibe zu bilden. Jede der beiden vorbezeichneten Scheiben kann als eine der Mantelfläche der Wandung des jeweiligen Rohrs angepaßte Durchgangsöffnung aufweisende - beispielsweise im wesentlichen ringförmige oder, wie auch in Fig. 5a bzw. 5b jeweils dargestellt, im wesentlichen rechteckige - Scheibe ausgebildet sein, die auf das jeweilige Rohr aufgeschoben ist, derart, daß die Scheibe nämliches Rohr 11 bzw. 12 umgreift bzw. eine der Mantelfläche der Wandung des jeweiligen Rohrs zugewandt Innenfläche der Durchgangsöffnung nämliche Mantelfläche 11# bzw. 12# zumindest teilweise kontaktiert. Jede der beiden vorbezeichneten Scheiben kann beispielsweise jeweils auch sowohl als Kopplungskörper 712 bzw. 722 des Temperatursensors 71 bzw. 72 bzw. als Teil davon, als auch als eine ein- bzw. auslaßseitige Schwingungsknoten von mechanischen Schwingungen der wenigstens zwei Rohre erzwingende Knotenplatte oder aber beispielsweise auch als Halterung des erwähnten Schwingungssensors 51 bzw. des ggf. ebenfalls vorgesehenen Schwingungssensor 52 dienen.

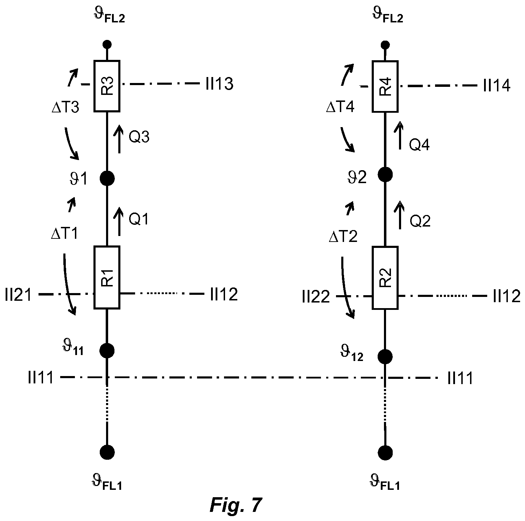

Wie in der Fig. 4 schematisch jeweils dargestellt, ist jeder der beiden Temperatursensoren thermisch an das jeweilige Rohr gekoppelt, indem der Kopplungskörper 712 des Temperatursensors 71 die Mantelfläche 11# der Wandung des Rohrs 11 unter Bildung einer ersten Grenzfläche II21 zweiter Art, nämlich einer Grenzfläche zwischen zwei festen Phasen, sowie der Kopplungskörper 722 des Temperatursensors 72 die Mantelfläche 12# der Wandung des Rohrs 12 unter Bildung einer zweiten Grenzfläche II22 zweiter Art kontaktieren. Jede der beiden Grenzflächen II21, II22 weist dabei jeweils eine durch die konkrete Bauform des jeweiligen Kopplungskörpers 712 bzw. 722 bedingte, mithin vorgegebenen Flächeninhalt auf. Dementsprechend wirkt somit - wie auch in Fig. 7 anhand eines Ersatzschaltbildes für ein mittels einer Vielzahl diskreter Wärmewiderstände gebildeten Widerstandsnetzwerks vereinfacht dargestellt - einem aus einer zwischen der Grenzfläche II21 zweiter Art und der ersten Temperaturmeßstelle herrschenden Temperaturdifferenz $\Delta T1$ resultierenden, gleichwohl durch nämliche Grenzfläche II21 insgesamt hindurchtretenden und weiter zur ersten Temperaturmeßstelle fließenden Wärmestrom Q1 ein mit der ersten Temperaturmeßstelle thermisch leitend verbundener - hier nämlich vornehmlich durch Wärmeleitung (Konduktion) bestimmter - erster Wärmewiderstand R1 (R1 = $\Delta T1$ / Q1) entgegen, und wirkt somit einem aus einer zwischen der Grenzfläche II22 zweiter Art und der zweiten Tempera-turmeßstelle herrschenden Temperaturdifferenz $\Delta T2$ resultierenden, gleichwohl durch nämliche Grenzfläche II22 insgesamt hindurchtretenden und weiter zur zweiten Temperaturmeßstelle fließenden Wärmestrom Q2, ein mit der zweiten Temperaturmeßstelle thermisch leitend verbundener - hier ebenfalls vornehmlich durch Wärmeleitung bestimmter -- zweiter Wärmewiderstand R2 (R2 = $\Delta T2$ / Q2) entgegen. Um eine möglichst gute thermische Ankopplung des Temperatursensors 71 wie auch des Temperatursensors 72 an die Wandung des jeweils zugehörigen Rohrs 11 bzw. 12 zu erreichen, ist jeder der Wärmewiderstände R1 und R2 bzw. jeder der Temperatursensoren 71, 72 gemäß einer weiteren Ausgestaltung der Erfindung so dimensioniert, daß jeder der Wärmewiderstände R1 und R2 jeweils kleiner als 1000 K / W, beispielsweise nämlich kleiner als 25 K / W ist. Nach einer weiteren Ausgestaltung der Erfindung sind die beiden vorbezeichneten Wärmewiderstände R1, R2 ferner so bemessen, daß insgesamt eine Bedingung R1 = R2 erfüllt ist, daß nämlich beide Wärmewiderstände R1, R2 gleichgroß eingerichtet sind.

Die Meß- und Betriebs-Elektronik ME des erfindungsgemäßen Meßsystems ist desweiteren dafür eingerichtet, unter Verwendung sowohl des Temperaturmeßsignals θ1 als auch des Temperaturmeßsignals θ2 (wiederkehrend) einen Wandlertemperatur-Meßwert $X_\Theta$ zu generieren, der eine Wandlervorrichtungstemperatur $\vartheta_{MW}$ repräsentiert, die sowohl von der Meßstellentemperatur $\vartheta1$ als auch von der Meßstellentemperatur $\vartheta2$ abweicht, derart, daß ein Betrag nämlichen Wandlertemperatur-Meßwerts $X_\Theta$ größer als ein Betrag der Meßstellentemperatur $\vartheta1$, gleichwohl kleiner als ein Betrag der Meßstellentemperatur $\vartheta2$ ist; dies im besonderen in der Weise, daß der Wandlertemperatur-Meßwert $X_\Theta$ einem

$$\frac{\alpha \cdot \vartheta1 + \beta \cdot \vartheta2}{\alpha + \beta}$$

gewichteten Mittel der Meßstellentemperaturen $\vartheta1$, $\vartheta2$ entspricht.

Die Berechnung des Temperatur-Meßwerts $X_\Theta$ kann z.B. in der Weise erfolgen, daß zunächst mittels der sowohl anhand des Temperaturmeßsignals θ1 einen die Meßstellentemperatur $\vartheta1$ repräsentierenden ersten Meßstellentemperatur-Meßwert $X_1$ als auch anhand des Temperaturmeßsignals θ2 einen die Meßstellentemperatur $\vartheta2$ repräsentierenden zweiten Meßstellentemperatur-Meßwert $X_2$ generiert werden, und daß nämlicher Wandlertemperatur-Meßwert gemäß einer von den Meßstellentemperatur-Meßwerten $X_1$, $X_2$ sowie von vorab ermittelten und in der Meß- und Betriebs-Elektronik ME abgespeicherten numerischen Festwerten $\alpha$, $\beta$ abhängigen Berechnungsvorschrift:

$$X_\Theta = \alpha \cdot X_{\theta1} + \beta \cdot X_{\theta2} \text{ bzw.} \tag{1}$$

$$X_\Theta = \frac{\alpha \cdot X_{\theta1} + \beta \cdot X_{\theta2}}{\alpha + \beta} \tag{2}$$

ermittelt wird.

Bei Verwendung von lediglich zwei basierend auf den Temperaturmeßsignalen ermittelten Meßstellentemperatur-Meßwerten können die in vorbezeichneter Bedingung enthaltenen Festwerte $\alpha$, $\beta$ in vorteilhafter Weise auch so gewählt sein, daß sie im Ergebnis die Bedingung $\alpha + \beta = 1$ erfüllt ist; dies im besonderen auch derart, daß die Bedingung $\alpha = \beta = 0,5$ erfüllt ist, mithin die Meßstellentemperaturen $\vartheta1$, $\vartheta2$ mit jeweils gleichem Gewicht in das Meßergebnis eingehen bzw. der Wandlertemperatur-Meßwert $X_\Theta$ einem arithmetischen Mittelwert $0,5 \cdot (\vartheta1 + \vartheta2)$ der Meßstellentemperaturen $\vartheta1$, $\vartheta2$ entspricht. Für den erwähnten Fall, daß sowohl die zwei Rohre 11, 12 als auch die zwei Temperatursensoren 71, 72 baugleich sind und daß der Aufbau der Temperatursensoranordnung der Wandlervorrichtung achsensymmetrisch bezüglich der vorbezeichneten gedachten Symmetrieachse ist, repräsentiert der Wandlertemperatur-Temperaturmeßwert $X_\Theta$ dementsprechend als arithmetischer Mittelwert aus einer Rohrwandtemperatur in der Mitte des Rohrs 11 und einer Rohrwandtemperatur in der Mitte des Rohrs 12 ergibt und/oder eine mittlere Rohrwändetemperatur, die sich zumindest näherungsweise als arithmetischer Mittelwert $0,5 \cdot (\overline{\vartheta_{11}} + \overline{\vartheta_{12}})$ aus einer mittleren Rohrwandtemperatur $\overline{\vartheta_{11}}$ des Rohrs 11 und einer mittleren Rohrwandtemperatur $\overline{\vartheta_{12}}$ des Rohrs 12 ergibt. Falls erforderlich, können die Festwerte $\alpha$, $\beta$ hierfür aber auch unter Abwandlung der vorbezeichneten Bedingung $\alpha = \beta = 0,5$ so definiert sein - beispielsweise nämlich anhand von entsprechenden Kalibrationsmessungen an der Wandlervorrichtung feinjustiert werden -, daß der dadurch schlußendlich ermittelte Wandlertemperatur-Meßwert zumindest tatsächlich nämlicher mittlerer Rohrwändetemperatur genauer entspricht als bei Anwendung nämlicher Bedingung $\alpha = \beta = 0,5$.

Die Meß- und Betriebs-Elektronik ME ist nach einer weiteren Ausgestaltung der Erfindung ferner dafür eingerichtet, den wenigstens einen Meßwert $X_x$ - beispielsweise nämlich den vorbezeichneten Dichte-Meßwert $X_\rho$ und/oder den vorbezeichneten Massendurchfluß-Meßwert $X_m$ - unter Verwendung sowohl des mittels der Wandlervorrichtung generierten ersten Temperaturmeßsignals Θ1 als auch zumindest des mittels der Wandlervorrichtung generierten zweiten Temperaturmeßsignals Θ2 zu generieren. Im besonderen ist die Meß- und Betriebs-Elektronik ME nämlich ferner dafür eingerichtet, unter Verwendung sowohl des Wandlertemperatur-Temperaturmeßwerts als auch des Frequenzmeßwerts $X_f$ einen Dichte-Meßwert, nämlich einen eine Dichte $\rho$ des Fluids repräsentierenden Meßwert und/oder einen Viskositäts-Meßwert, nämlich einen eine Viskosität $\eta$ des Fluids repräsentierenden Meßwert zu generieren.

Für den anderen erwähnten Fall, daß das Meßsystem ferner auch dafür vorgesehen ist, die Meßfluidtemperatur $\vartheta_{FL1}$ zu messen, ist die Meß- und Betriebs-Elektronik ME ferner dafür eingerichtet, basierend auf den beiden Temperaturmeßsignalen Θ1, Θ2 gelegentlich auch einen Meßfluidtemperatur-Meßwert $X_{\Theta,FL}$ zu ermitteln, der nämliche Meßfluidtemperatur $\vartheta_{FL1}$ repräsentiert. Der Meßfluidtemperatur-Meßwert $X_{\Theta,FL}$ kann z.B. auf sehr einfache Weise unter Verwendung einer gegenüber einer der vorbezeichneten Berechnungsvorschriften (1), (2) lediglich um einen, beispielsweise fest vorgegebenen, Koeffizienten $K_{FL}$ ergänzte Berechnungsvorschrift.

$$X_{\Theta,FL} = \alpha \cdot X_{\theta 1} + \beta \cdot X_{\theta 2} + K_{FL} \qquad (3)$$

bzw.

$$X_{\Theta,FL} = \frac{\alpha \cdot X_{\theta 1} + \beta \cdot X_{\theta 2}}{\alpha + \beta} + K_{FL} \qquad (4)$$

ermittelt werden, wobei nämlicher Koeffizienten $K_{FL}$ eine Temperatur-Differenz zwischen der gemessenen Wandlervorrichtungstemperatur $\vartheta_{MW}$ und der zugleich auftretenden Meßfluidtemperatur $\vartheta_{FL1}$, insb. eine sich bei in thermischem Equilibrum befindlicher Wandlervorrichtung stets einstellende stationäre, mithin vorab bestimmbare Temperatur-Differenz, repräsentiert.

Wie bereits in der eingangs erwähnten US-A 2011/0113896 erörtert, kann bei Wandlervorrichtungen mit parallelen Strömungspfaden u.a. auch ein besonderes Risiko darin bestehen, daß eines der nämliche Strömungspfade bildenden Rohre im Laufe des Betriebs teilweise oder ganz verstopft, mithin einen gegenüber einem ursprünglichen Strömungswiderstand veränderten Strömungswiderstand aufweist, während zumindest ein anderes der Rohre weitgehend intakt und nach wie vor von Fluid durchströmt ist, mithin selbst einen vom vorbezeichneten Strömungswiderstand abweichenden Strömungswiderstand aufweist. Nämliche Veränderung des Strömungswiderstands kann beispielsweise aus einem in einem der Rohre festgeklemmten Feststoffteilchen oder einem sich an der Rohrwandung des jeweiligen Rohrs bildenden Belags resultieren. Gleichwohl kann gemäß der US-A 2011/0113896 bzw. WO-A 2009/134268 eine eine solche Beeinträchtigung der Funktionstüchtigkeit der Wandlervorrichtung betreffende Diagnose beispielsweise auch anhand von Meßstellentemperaturen durchgeführt werden, die im Betrieb der jeweiligen Wandlervoirrichtung bzw. des damit gebildeten Meßsystems an verschiedenen, an den jeweiligen Rohren etablierten Temperaturmeßstellen erfaßt werden. Beispielsweise kann anhand einer überhöhten Abweichung zwischen solchen Meßstellentemperaturen eine allfällige Veränderung des Strömungswiderstands eines der Rohre detektiert werden. Weiterführenden Untersuchungen haben zudem überraschenderweise ergeben, daß auch unter Verwendung der vorbezeichneten Temperatursensoranordnung ein derartige Detektion verläßlich realisiert werden kann. Dementsprechend ist die Meß- und Betriebs-Elektronik ME nach einer weiteren Ausgestaltung der Erfindung ferner dafür eingerichtet, unter Verwendung sowohl des Temperaturmeßsignals $\Theta 1$ als auch des Temperaturmeßsignals $\Theta 2$ einen Temperaturabweichungsmeßwert zu generieren, der eine, beispielsweise absolute oder relative, Abweichung zwischen der Meßstellentemperatur $\vartheta 1$ und der Meßstellentemperatur $\vartheta 2$ repräsentiert. Darüberhinaus ist die Meß- und Betriebs-Elektronik ME ferner auch dafür eingerichtet, unter Verwendung nämlichen Temperaturabweichungsmeßwerts $X_{\Delta\theta}$ eine Funktionstüchtigkeit der Wandlervorrichtung, beispielsweise nämlich eine Funktionstüchtigkeit des Rohrs 11 und/oder eine Funktionstüchtigkeit des Rohrs 12, zu überwachen bzw. ggf. zu diagnostizieren, daß die Wandlervorrichtung einen gegenüber einem ursprünglichen Strömungswiderstand veränderten Strömungswiderstand aufweist, daß also zumindest eines der Rohre der Wandlervorrichtung einen gegenüber einem ursprünglichen Strömungswiderstand veränderten Strömungswiderstand aufweist und/oder das das Rohr 11 einen Strömungswiderstand aufweist, der von einem Strömungswiderstand des Rohrs 12 abweicht. Beispielsweise kann die Meß- und Betriebs-Elektronik ME auch dafür eingerichtet sein, unter Verwendung des Temperaturabweichungsmeßwerts $X_{\Delta\theta}$ einen Alarm zu generieren, der eine nur noch eingeschränkte Funktionstüchtigkeit der Wandlervorrichtung signalisiert, etwa infolge der vorbezeichneten Änderungen des Strömungswiderstandes.

Nach einer anderen Ausgestaltung der Erfindung ist die Meß- und Betriebs-Elektronik ME ferner dafür eingerichtet, unter Verwendung des Temperaturmeßsignals $\Theta 1$, gleichwohl nicht des Temperaturmeßsignals $\Theta 2$ bzw. unter Verwendung des Temperaturmeßsignals $\Theta 2$, gleichwohl nicht des Temperaturmeßsignals $\Theta 1$ einen Hilfstemperaturmeßwert $X_{\Theta,mw*}$ zu generieren, der die Wandlervorrichtungstemperatur zumindest näherungsweise repräsentiert. Dadurch kann beispielsweise auch für den Fall, daß genau einer der beiden Temperatursensoren 71, 72 defekt und/oder von der Meß- und Betriebs-Elektronik ME getrennt ist, etwa durch Bruch einer der vorbezeichneten Anschlußleitungen, trotzdem ein Meßwert für Wandlervorrichtungstemperatur ermittelt und anstelle des Wandlertemperatur-Meßwerts $X_{\Theta,MW}$ ersatzweise ausgegeben werden. Darüberhinaus kann die Meß- und Betriebs-Elektronik ME ferner dafür auch eingerichtet sein, unter Verwendung des Temperaturmeßsignals $\Theta 1$, gleichwohl nicht des Temperaturmeßsignals $\Theta 2$ bzw. unter Verwendung des Temperaturmeßsignals $\Theta 2$, gleichwohl nicht des Temperaturmeßsignals $\Theta 1$ einen (weiteren) Hilfstemperaturmeßwert $X_{\Theta,FL*}$ zu generieren, der die Meßfluidtemperatur zumindest näherungsweise repräsentiert, sowie nämlichen Hilfstemperaturmeßwert $X_{\Theta,FL*}$ ggf. anstelle des Meßfluidtemperatur-Meßwerts $X_{\Theta,FL}$ ersatzweise auszugeben. Alternativ oder in Ergänzung kann die Meß- und Betriebs-Elektronik ME zudem dafür eingerichtet sein, den vorbezeichneten Defekt eines der Temperatursensoren 71, 72 bzw. die vorbezeichnete Trennung eines der Temperatursensoren 71, 72 von der Meß- und Betriebs-Elektronik ME zu detektieren und ggf. zu vermelden, beispielsweise in Form einer Wartungsmeldung.

Es hat sich überraschenderweise zudem gezeigt, daß zum einen für die Berechnung sowohl des Meßwerts $X_x$, nicht zuletzt nämlich auch für einen der vorbezeichneten Fälle, daß der Meßwert $X_x$ die Dichte oder die Viskosität des Fluids FL1 repräsentiert, als auch des Meßfluidtemperatur-Meßwerts regelmäßig bereits mit den beiden Temperaturmeßsignalen $\Theta 1$, $\Theta 2$ jeweils zufriedenstellende Meßgenauigkeiten erreicht werden können. Zum anderen kann aber auch die vorbezeichnete Überwachung bzw. Diagnose betreffend die Funktionstüchtigkeit der Wandlervorrichtung, etwa auch im Unterschied zu den in der erwähnten WO-A 2009/134268 gezeigten Meßsystemen, mit den beiden Temperaturmeßsignalen $\Theta 1$, $\Theta 2$ durchaus verläßliche Ergebnisse liefern. Dementsprechend ist zur Reduzierung der Kosten für die Wandlervorrichtung wie auch für die Meß- und Betriebs-Elektronik ME vorgesehen, daß die Wandlervorrichtung MW außer dem Temperatursensor 71 keinen weiteren die Wandung des Rohrs 11 kontaktierenden Temperatursensor aufweist. Alternativ oder in Ergänzung dazu ist ferner vorgesehen, daß die Wandlervorrichtung MW außer dem Temperatursensor 72 keinen weiteren die Wandung des Rohrs 12 kontaktierenden Temperatursensor aufweist.

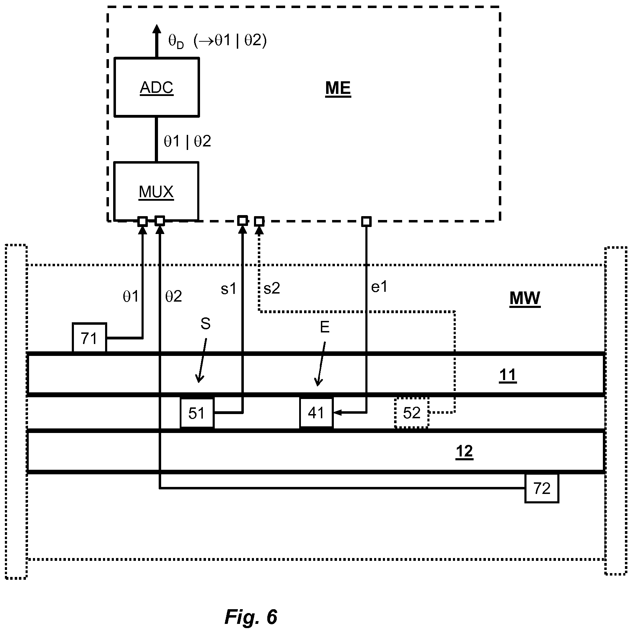

Zwecks einer Reduzierung des Aufwandes für die elektrische Verbindung der Temperatursensoren der Wandlervorrichtung mit der Meß- und Betriebs-Elektronik ME bzw. zwecks Ermöglichen einer einfachen Verkabelung der Meß- und Betriebs-Elektronik ME mit nämlichen Temperatursensoren weist die Meß- und Betriebs-Elektronik ME, wie auch in Fig. 6 nach einer weiteren Ausgestaltung der Erfindung einen Multiplexer mit wenigstens zwei Signaleingängen sowie wenigstens einem Signalausgang sowie einen, beispielsweise eine nominelle Auflösung von mehr als 16 Bit aufweisenden und/oder mit einer mehr als 1000 s$^-$ betragenden Abtastrate getakteten, Analog-zu-Digital-Wandler ADC mit wenigstens einem Signaleingang und wenigstens einem Signalausgang auf. Nämlicher Multiplexer MUX ist im besonderen dafür eingerichtet, wahlweise, beispielsweise nämlich zyklisch, einen von dessen Signaleingängen auf den Signalausgang durchzuschalten, derart, daß ein am jeweils durchgeschalteten Signaleingang anliegendes Signal an den Signalausgang weitergeführt ist, während der Analog-zu-Digital-Wandler ADC dafür eingerichtet ist, ein an nämlichem Signaleingang anliegendes analoges Eingangssignal mit einer - beispielsweise nämlich mehr als 1000 s$^-$ betragenden - Abtastrate $f_A$ und mit einer digitalen Auflösung N - beispielsweise von mehr als 16 Bit - in ein nämliches Eingangssignal repräsentierendes digitales Ausgangssignal umzusetzen und am Signalausgang bereitzustellen. Wie auch Fig. 6 angedeutet, sind zudem der wenigstens eine Signalausgang des Multiplexers und der wenigstens eine Signaleingang des Analog-zu-Digital-Wandlers miteinander elektrisch gekoppelt und sind der Temperatursensor 71 und der Temperatursensor 72 jeweils mit dem Multiplexer MUX elektrisch verbunden, derart, daß das Temperaturmeßsignal $\Theta 1$ an einem ersten Signaleingang des Multiplexers MUX und daß das Temperaturmeßsignal $\Theta 2$ an einem zweiten Signaleingang des Multiplexers MUX anliegen. Im Ergebnis repräsentiert das Ausgangssignal des Analog-zu-Digital-Wandlers ADC im Betrieb zeitweise genau eines der beiden Temperaturmeßsignale $\Theta 1$, $\Theta 2$. Desweiteren kann die Meß- und Betriebs-Elektronik ME ferner dafür eingerichtet sein, den Wandlertemperatur-Meßwert unter Verwendung nämlichen, eines der beiden Temperaturmeßsignale $\Theta 1$, $\Theta 2$ repräsentierenden Ausgangssignals des Analog-zu-Digital-Wandlers ADC zu generieren.

Um zu erreichen, daß jeder der Temperatursensoren 71, 72 - wie auch bei dem dem in Fig. 7 gezeigten Ersatzschaltbild zugrundeliegenden (statischen) Berechnungsmodell angenommen - jeweils lediglich eine vergleichsweise geringe, mithin vernachlässigbare thermische Trägheit aufweist bzw. jede der beiden Meßstellentemperaturen $\vartheta 1$, $\vartheta 2$ jeweils rasch allfälligen Änderungen jeweils einer ersten Rohrwandtemperatur $\vartheta_{11}$, nämlich einer von der Wandung des Rohrs 11 angenommenen örtliche Temperatur, bzw. einer zweiten Rohrwandtemperatur $\vartheta_{12}$, nämlich einer von der Wandung des Rohrs 12 angenommenen örtliche Temperatur, folgen kann, bzw. daß umgekehrt jede der beiden Meßstellentemperaturen nicht oder allenfalls in nur geringem Maße von einer Änderungsgeschwindigkeit der jeweiligen Rohrwandtemperatur $\vartheta_{11}$ bzw. $\vartheta_{12}$, nämlich einer Geschwindigkeit, mit der die jeweilige Rohrwandtemperatur zeitlich ändert, abhängig ist, ist gemäß einer weiteren Ausgestaltung der Erfindung ferner vorgesehen, jeden der Kopplungskörper 712 und 722 jeweils so auszubilden, daß sowohl dem Kopplungskörper 712 als auch dem Kopplungskörper 722 im Ergebnis jeweils eine Wärmekapazität C1 bzw. C2 innewohnt, die kleiner als 2000 J / K; dies in vorteilhafter Weise ferner so, daß die Wärmekapazität C1 des ersten Kopplungskörpers 712 und die Wärmekapazität C2 des zweiten

$$\frac{1}{1000} < \frac{C1}{C2} \leq 1$$

Kopplungskörpers 722 eine Bedingung erfüllt, und/oder daß zumindest der Kopplungskörper 712 eine spezifische Wärmekapazität, die kleiner als 200 J / (kg · K), möglichst aber auch kleiner als 100 J / (kg · K), ist. Aufgrund des für Temperatursensoren der in Rede stehenden Art typischerweise angestrebten kompakten Aufbaus sowie der typischerweise verwendeten, nämlich thermisch gut leitfähigen Materialien besteht zudem auch ein enger Zusammenhang zwischen Wärmewiderstand und Wärmekapazität des jeweiligen Temperatursensors, derart, daß die jeweilige Wärmekapazität - mithin auch die vorbezeichnete Wärmekapazität C1 bzw. C2 - umso niedriger ausgebildet ist, je niedriger der jeweilige Wärmewiderstand gewählt ist. Dementsprechend kann durch die Bemessung der Wärmewiderstände R1, R2 der Kopplungskörper 712 bzw. 722 in der vorbezeichneten Weise somit zugleich auch erreicht werden, daß jeder der Temperatursensoren 71, 72 jeweils auch nur eine vergleichsweise geringe thermische Trägheit bezüglich der jeweiligen Rohrwandtemperatur $\vartheta_{11}$, $\vartheta_{12}$ aufweist bzw. jede der beiden Meßstellentemperaturen $\vartheta 1$, $\vartheta 2$

- wie angestrebt - jeweils rasch allfälligen Änderungen der jeweiligen Rohrwandtemperatur folgen kann, bzw. umgekehrt, daß jede der beiden Meßstellentemperaturen $\vartheta_1$, $\vartheta_2$ nicht oder allenfalls in nur geringem Maße von einer Änderungsgeschwindigkeit der Rohrwandtemperatur, nämlich einer Geschwindigkeit, mit der die jeweilige Rohrwandtemperatur zeitlich ändert, abhängig ist.

Der zwischen der Innenfläche 100+ der Wandung des Wandler-Gehäuses 100 und den Mantelflächen 11#, 12# der Wandungen des Rohrs 11 bw. des des Rohrs 12 gebildete Zwischenraum 100' ist ferner - wie bei Wandlervorrichtungen der in Rede stehenden Art durchaus üblich und wie in Fig. 4 jeweils schematisch mittels punktierter Schraffur angedeutet - mit einem, beispielsweise eine spezifische Wärmeleitfähigkeit $\lambda_F$ von weniger als 1 W / (m · K) aufweisenden, Fluid FL2 zwecks Bildung eines die Rohre 11, 12 umhüllenden Fluidvolumen gefüllt. Das im Zwischenraum 100' gehaltene Fluid FL2 bzw. das damit gebildete Fluidvolumen weist eine im weiteren als Rohrumgebungstemperatur $\vartheta_{FL2}$ bezeichnete, ggf. auch zeitlich veränderliche Fluidtemperatur auf, die zumindest zeitweise von der Meßfluid-Temperatur $\vartheta_{FL1}$ um mehr als 1 K (Kelvin), insb. zumindest zeitweise um mehr als 5 K, abweicht. Dementsprechend sind nach einer weiteren Ausgestaltung der Erfindung das Wandler-Gehäuse und das Rohr dafür eingerichtet, nämliches Fluid FL2 im Zwischenraum 100' zu halten, derart, daß die dem Zwischenraum 100' zugewandte Mantelfläche 11# der Wandung des Rohrs 11 unter Bildung einer zweiten Grenzfläche II12 erster Art von im Zwischenraum vorgehaltenem Fluid FL2 kontaktiert, mithin das Rohr an das im Zwischenraum 100' gebildete Fluidvolumen thermisch gekoppelt ist. Als Fluid FL2 kann beispielsweise Luft oder ein inertes Gas, wie z.B. Stickstoff oder ein Edelgas, insb. nämlich Helium, dienen. Im Ergebnis dessen sind auch eine dem Zwischenraum 100' zugewandte äußere Oberfläche des Temperatursensors 71 unter Bildung einer dritten Grenzfläche II13 erster Art (Grenzfläche zwischen einer fluiden und einer festen Phase) sowie eine dem Zwischenraum 100' gleichermaßen zugewandte äußere Oberfläche des Temperatursensors 72 unter Bildung einer vierten Grenzfläche II14 erster Art von im Zwischenraum gehaltenem Fluid FL2 kontaktiert bzw. sind sowohl der Temperatursensor 71 als auch der Temperatursensor 72 an das im Zwischenraum 100' gebildete Fluidvolumen thermisch gekoppelt, derart, daß - wie auch in Fig. 4 schematisch dargestellt - einem aus einer zwischen der Grenzfläche II13 erster Art und der ersten Temperaturmeßstelle herrschenden Temperaturdifferenz $\Delta T3$ resultierenden, nämlich von der ersten Temperaturmeßstelle insgesamt zur Grenzfläche 1113 fließenden, gleichwohl durch nämliche Grenzfläche 1113 insgesamt hindurchtretenden Wärmestrom Q3 ein mit der ersten Temperaturmeßstelle thermisch leitend verbundener - hier nämlich durch Wärmeleitung wie auch an der Grenzfläche 1113 auftretende Wärmeströmung (Konvektion) bestimmter - dritter Wärmewiderstand R3 (R3 = $\Delta T3$ / Q3) und einem aus einer zwischen der Grenzfläche II14 erster Art und der zweiten Temperaturmeßstelle herrschenden Temperaturdifferenz $\Delta T4$ resultierenden, nämlich von der zweiten Temperaturmeßstelle insgesamt zur Grenzfläche 1114 fließenden, gleichwohl durch nämliche Grenzfläche II14 insgesamt hindurchtretenden Wärmestrom Q4 ein mit der zweiten Temperaturmeßstelle thermisch leitend verbundener - hier ebenfalls durch Wärmeleitung sowie an der Grenzfläche 1114 auftretende Wärmeströmung bestimmter - vierter Wärmewiderstand R4 (R4 = $\Delta T4$ / Q4) entgegenwirken. Jeder der Wärmewiderstände R3 und R4 ist in vorteilhafter Weise so bemessen, daß er kleiner als 20000 K / W, insb. kleiner 10000 K / W, ist. Um eine im Vergleich zur thermischen Ankopplung an das jeweilige Rohr 11, 12 schwächere thermische Ankopplung des Temperatursensors 71 bzw. des Temperatursensors 72 an das im Zwischenraum 100' gebildet Fluidvolumen zu erreichen, nicht zuletzt auch um zu erreichen, daß die damit jeweils erfaßte Meßstellentemperatur $\vartheta_1$ bzw. $\vartheta_2$ möglichst immun gegen - ggf. auch räumlich unterschiedlich ausfallende - schnelle zeitliche Änderungen der Rohrumgebungstemperatur $\vartheta_{FL2}$ ist, bzw. daß die Temperatursensoren 71, 72 bezüglich der Rohrumgebungstemperatur $\vartheta_{FL2}$ möglichst eine größere thermische Trägheit als bezüglich der Rohrwandtemperatur $\vartheta_{11}$ bzw. $\vartheta_{12}$ aufweisen, ist der Temperatursensor 71 bzw. ist der Temperatursensor 72 nach einer weiteren Ausgestaltung der Erfindung ferner so ausgebildet, daß der Wärmewiderstand R3 bzw. der Wärmewiderstand R4 mehr als 500 K / W, insb. mehr als 5000 K / W, beträgt. Nach einer weiteren Ausgestaltung der Erfindung sind die beiden vorbezeichneten Wärmewiderstände R3, R4 ferner so bemessen, daß insgesamt eine Bedingung R3 = R4 erfüllt ist, daß nämlich beide Wärmewiderstände R3, R4 gleichgroß eingerichtet sind.

Um auch den Wärmewiderstand R3 zum einen auf möglichst einfache Weise vorab bestimmen zu können, zum anderen aber auch nämlichen Wärmewiderstand R3 so auszubilden, daß dessen jeweilige Exemplare innerhalb eines Loses bzw. einer Serie von industriell gefertigten Wandlervorrichtungen der in Rede stehenden Art von Wandlervorrichtung zu Wandlervorrichtung auch eine möglichst geringen Streuung aufweisen, mithin die Wandlervorrichtung ingesamt gut reproduzierbar ist, kann der Temperatursensor 71 ferner einen dessen Temperaturfühler 711 thermisch mit dem im Zwischenraum gebildeten Fluidvolumen koppelnden dritten Kopplungskörper aufweisen, der nämliches Fluidvolumen unter Bildung der dritten Grenzfläche II13 erster Art kontaktiert. Nämlicher Kopplungskörper kann zumindest anteilig, insb. nämlich überwiegend oder gänzlich, aus einem Material bestehen, von dem eine spezifische Wärmeleitfähigkeit größer als die spezifische Wärmeleitfähigkeit $\lambda_F$ des im Zwischenraum gehaltenen Fluids FL2 und/oder größer als 0,1 W / (m · K) ist, und von dem eine spezifische Wärmekapazität kleiner als eine spezifische Wärmekapazität cpF des im Zwischenraum gehaltenen Fluids FL2 und/oder kleiner als 2000 J / (kg · K), ist. In vorteilhafter Weise kann das Material des vorbezeichneten Kopplungskörper abgestimmt auf das im Zwischenraum vorgehalten Fluid FL2 auch so gewählt sein, daß ein Verhältnis der spezifische Wärmeleitfähigkeit nämlichen Materials zur Wärmeleitfähigkeit $\lambda_F$ des im Zwischenraum gehaltenen Fluids FL2 größer als 0,2 ist, und/oder daß ein Verhältnis der spezifische Wärmekapazität nämlichen Materials zur Wärmekapazität cpF des im Zwischenraum gehaltenen Fluids FL2 kleiner als 1,5 ist. Der Kopplungskörper kann - beispielsweise auch gänzlich - mittels eines auf dem Temperaturfühler 711 des Temperatursensors 71 applizierten, beispielsweise auch mit Metalloxid-Partikeln versetzten, Kunststoffs, wie z.B. einem Epoxidharz oder einem Silikon, gebildet sein. Alternativ oder in Ergänzung kann nämlicher Kopplungskörper, ggf. auch gänzlich, mittels eines auf dem Temperaturfühler 711 applizierten Gewebeband, beispielsweise einem Glasfasergewebeband, bzw. auch mittels eines auf dem Temperaturfühler 711 applizierten Metallblech, wie z.B. einem Blechstreifen aus Edelstahl, gebildet sein. In gleicher Weise kann auch der Temperatursensor 72 mittels eines weiteren, nämlich einem dessen Temperaturfühler 721 thermisch mit dem im Zwischenraum gebildeten Fluidvolumen koppelnden vierten Kopplungskörper gebildet sein, der das im Zwischenraum 100' gebildete Fluidvolumen unter Bildung der vierten Grenzfläche II14 erster Art kontaktiert. Der Kopplungskörper kann in vorteilhafter Weise zudem baugleich zu dem den Temperaturfühler 711 an thermisch an das im Zwischenraum 100' gebildete Fluidvolumen koppelnden Kopplungskörper des Temperatursensors 71 ausgebildet sein. In entsprechender Weise sind auch innerhalb des Rohrs 11, nämlich an der dessen Lumen zugewandten, mithin von im Lumen geführtem Fluid FL1 kontaktierten Innenfläche 11+ der Wandung nämlichen Rohrs eine fünfte Grenzfläche erster Art, sowie innerhalb des Rohrs 12, nämlich an der dessen Lumen zugewandten, mithin von im Lumen geführtem Fluid FL1 kontaktierten Innenfläche 12+ der Wandung nämlichen Rohrs 12 eine sechste Grenzfläche erster Art gebildet, wodurch im Ergebnis die Rohrwandtemperatur $\vartheta_{11}$ des Rohrs 11 bzw. die Rohrwandtemperatur $\vartheta_{12}$ des Rohrs 12 jeweils auch von der Meßfluidtemperatur $\vartheta_{FL1}$ des momentan im Lumen des jeweiligen Rohrs 11, 12 befindlichen Fluids FL1 mitbestimmt ist.

Jeder der vorbezeichneten Wärmewiderstände R1, R2, R3 und R4 ist - wie bereits erwähnt - jeweils maßgeblich bzw. gänzlich durch Materialkennwerte, wie z.B. eine spezifische Wärmeleitfähigkeit $\lambda$, sowie Abmessungen des jeweiligen Kopplungskörpers bzw. der Wandung des Rohrs, wie z.B. eine für den jeweils hindurchfließend Wärmestrom jeweilige effektive Länge $L_{th}$ des jeweiligen Kopplungskörpers sowie einen Flächeninhalt $A_{th}$ einer für nämlichen Wärmestrom jeweilige effektive Querschnittsfläche des jeweiligen Kopplungskörpers, beispielsweise nämlich der Flächeninhalt der jeweiligen Grenzflächen II21, II22, und/oder durch entsprechende Materialkennwerte der Wandung des Rohrs 11 bzw. 12 bzw. des im Zwischenraum 100' vorgehaltenen Fluids FL2, mithin schon allein durch vorab zumindest näherungsweise bekannte, gleichwohl über einen längeren Betriebszeitraum im wesentlichen unveränderliche Parameter definiert. Somit kann jeder der Wärmewiderstände R1, R2, R3, R4 mittels nämlicher Parameter ($\lambda$, $A_{th}$, $L_{th}$) vorab ausreichend genau bestimmt. werden, beispielsweise durch experimentelle Messungen und/oder durch Berechnungen. Beispielsweise kann nämlich basierend auf der bekannten Beziehung:

$$R_{th} = \frac{L_{eff}}{\lambda \cdot A_{eff}}$$    (5)

ein den Wärmewiderstand R1 bzw. R2 mitbestimmender - nämlich einen auf einen Wärmestrom aufgrund von Wärmeleitungsvorgängen bezogenen Temperaturabfall repräsentierender - Wärmeleitwiderstand quantifiziert werden, beispielsweise nämlich für eine Einheit K / W (Kelvin pro Watt) berechnet werden. In Kenntnis der Materialkennwerte der zur Herstellung der Temperatursensoren jeweils tatsächlich verwendeten Materialen sowie der tatsächlichen Form und Abmessung der vorbezeichneten, mittels der Temperatursensoren gebildeten Grenzflächen 1113, II14, 1121, II22 können auch die Widerstandswerte für die vorbezeichneten, die Wärmewiderstande R1, R2, R3, R4 jeweils mitbestimmenden Wärmeübergangswiderstände ausreichend genau festgelegt bzw. ausreichend genau vorab ermittelt werden. Alternativ oder in Ergänzung können die Wärmewiderstande R1, R2, R3, R4 bzw. entsprechender Wärmewiderstandsverhältnisse beispielsweise auch mittels an der jeweiligen Wandlervorrichtung durchgeführten Kalibriermessungen experimentell ermittelt werden.

Um zum einen den Temperatursensor 71 mit möglichst geringer thermischer Trägheit bezüglich zeitlicher Änderungen der Rohrwandtemperatur des Rohrs 11 bereitzustellen, zum anderen auch aber auch eine möglichst gute thermische Ankopplung des Temperatursensors 71 an die Wandung des Rohrs auch bei möglichst kompakter Bauweise zu erreichen ist der Kopplungskörper 712 gemäß einer weiteren Ausgestaltung der Erfindung zumindest anteilig - beispielsweise auch überwiegend oder gänzlich - aus einem Material, beispielsweise nämlich einem Wärmeleitkleber hergestellt, von dem eine spezifische Wärmeleitfähigkeit $\lambda712$ größer als eine spezifische Wärmeleitfähigkeit $\lambda F$ des im Zwischenraum gehaltenen Fluids FL2 und/oder größer als 1 W / (m · K) ist. In vorteilhafter Weise ist das Material des Kopplungskörpers 712 hierbei ferner so gewählt, daß ein Verhältnis $\lambda712$ / $\lambda F$ der spezifische Wärmeleitfähigkeit $\lambda712$ nämlichen Materials des Kopplungskörpers 712 zur spezifischen Wärmeleitfähigkeit $\lambda F$ des im Zwischenraum gehalten Fluids FL2 größer als 2 ist, und/oder daß ein Verhältnis cp712 / cpF einer spezifische Wärmekapazität cp712 nämlichen Materials des Kopplungskörpers 712 zur Wärmekapazität cpF des im Zwischenraum gehaltenen Fluids FL2 kleiner als 1,5 ist, insb. derart, daß die spezifische Wärmekapazität cp712 kleiner als eine spezifische Wärmekapazität cpF des im Zwischenraum vorgehaltenen Fluids ist. Darüberhinaus kann auch der Kopplungskörper 722 des Temperatursensors 72 zumindest teilweise (oder auch gänzlich) aus dem gleichen Material wie der Kopplungskörper 712 des Temperatursensors 71 hergestellt sein, um eine gleichermaßen geringe thermische Trägheit des Temperatursensors 72 bezüglich zeitlicher Änderungen der Rohrwandtemperatur des Rohrs 12 bereitzustellen und um eine gleichermaßen gute thermische Ankopplung des Temperatursensors 72 an die Wandung des Rohrs 12 zu erreichen. Nach einer weiteren Ausgestaltung der Erfindung ist ferner vorgesehen, daß der erste Temperatursensor und der zweite Temperatursensor baugleich sind, daß nämlich sowohl die dafür jeweils sowohl die verwendeten Temperaturfühler und Kopplungskörper als auch die thermische Ankopplung der vorbezeichneten Komponenten untereinander bzw. an das jeweils zugehörige Rohr und das im Zwischenraum vorgehaltene Fluid im wesentlichen gleich sind.

**Patentansprüche**

1. Meßsystem - insb. zum Messen wenigstens einer Meßgröße, x, eines in einer Rohrleitung strömenden Fluids (FL1) -, welches Meßsystem umfaßt:

   - eine, insb. mittels eines Mikroprozessors und/oder eines digitalen Signalprozessors gebildete, Meß- und Betriebs-Elektronik (ME);
   - sowie eine mit nämlicher Meß- und Betriebs-Elektronik (ME) elektrisch gekoppelte Wandlervorrichtung,
   - wobei die Wandlervorrichtung (MW) aufweist:

     -- ein ein von einer, insb. metallischen, Wandung umhülltes Lumen (11') aufweisendes, sich von einem einlaßseitigen ersten Ende (11a) bis zu einem auslaßseitigen zweiten Ende (11b) erstreckendes, insb. zumindest abschnittsweise gekrümmtes und/oder zumindest abschnittsweise gerades, erstes Rohr (11), das dafür eingerichtet ist, von einem Fluid, ausgehend vom einlaßseitigen ersten Ende in Richtung des auslaßseitigen zweiten Ende, durchströmt und währenddessen vibrieren gelassen zu werden,
     -- ein ein von einer, insb. metallischen, Wandung umhülltes Lumen (12') aufweisendes, sich von einem einlaßseitigen ersten Ende (12a) bis zu einem auslaßseitigen zweiten Ende (12b) erstreckendes, insb. zumindest abschnittsweise gekrümmtes und/oder zumindest abschnittsweise gerades und/oder dem ersten Rohr (11) baugleiches und/oder zum ersten Rohr (11) parallel angeordnetes, zweites Rohr (12), das dafür eingerichtet ist, insb. simultan zum ersten Rohr, von einem Fluid, ausgehend vom einlaßseitigen ersten Ende in Richtung des auslaßseitigen zweiten Ende, durchströmt und währenddessen, insb. simultan und/oder gegengleich zum ersten Rohr, vibrieren gelassen zu werden,
     -- eine mittels wenigstens eines, insb. elektrodynamischen, Schwingungserregers (41) gebildete elektromechanische Erregeranordnung zum Anregen und Aufrechterhalten von mechanischen Schwingungen sowohl des ersten als auch des zweiten Rohrs um eine jeweils zugehörige statische Ruhelage, insb. nämlich von mechanischen Schwingungen jedes der Rohre um eine dessen jeweiliges erstes Ende mit dessen jeweiligen zweiten Ende jeweils imaginär verbindende gedachte erste bzw. zweite Schwingungsachse,
     -- eine mittels wenigstens eines, insb. elektrodynamischen, ersten Schwingungssensors (51) gebildete Sensoranordnung (S) zum Erfassen von, insb. einlaßseitigen, mechanischen Schwingungen wenigstens eines der Rohre (11, 12),
     -- einen mechanisch, gleichwohl thermisch leitend mit der Wandung des ersten Rohrs gekoppelten ersten Temperatursensor (71),
     --- der weniger weit vom ersten Ende (11a) des ersten Rohrs (11) entfernt positioniert ist als vom zweiten Ende (11b) nämlichen ersten Rohres (11)
     --- und der dafür vorgesehen bzw. eingerichtet ist, eine erste Meßstellentemperatur ($\vartheta$1), nämlich eine Temperatur der Wandung des ersten Rohrs an einer mittels nämlichen Temperatursensors (71) gebildeten ersten Temperaturmeßstelle, zu erfassen und in ein erstes Temperaturmeßsignal ($\theta$1), nämlich ein die erste Meßstellentemperatur ($\vartheta$1) repräsentierendes erstes elektrisches Meßsignal, insb. mit einer von nämlicher ersten Meßstellentemperatur abhängigen elektrische Signalspannung und/oder einem von nämlicher ersten Meßstellentemperatur abhängigen elektrischen Signalstrom, zu wandeln,
     -- sowie einen mechanisch, gleichwohl thermisch leitend mit der Wandung des zweiten Rohrs gekoppelten zweiten Temperatursensor (72),
     --- der weniger weit vom zweiten Ende (12b) des zweiten Rohrs (12) entfernt positioniert ist als vom ersten Ende (12a) nämlichen zweiten Rohres (12)
     --- und der dafür vorgesehen bzw. eingerichtet ist, eine zweite Meßstellentemperatur ($\vartheta$2), nämlich eine Temperatur der Wandung des zweiten Rohrs an einer mittels des nämlichen Temperatursensors (72) gebildeten zweiten Temperaturmeßstelle zu erfassen und in ein zweites Temperaturmeßsignal, nämlich ein die zweite Meßstellentemperatur ($\vartheta$2) repräsentierendes zweites elektrisches Meßsignal ($\theta$2), insb. mit

einer von nämlicher zweiten Meßstellentemperatur abhängigen elektrische Signalspannung und/oder einem von nämlicher zweiten Meßstellentemperatur abhängigen elektrischen Signalstrom, zu wandeln,
-- wobei die Wandlervorrichtung außer dem ersten Temperatursensor keinen weiteren die Wandung des ersten Rohrs kontaktierenden Temperatursensor und/oder außer dem zweiten Temperatursensor keinen weiteren die Wandung des zweiten Rohrs kontaktierenden Temperatursensor aufweist;
- und wobei die Meß- und Betriebs-Elektronik (ME) dafür eingerichtet ist, unter Verwendung sowohl des ersten Temperaturmeßsignals ($\theta 1$) als auch des zweiten Temperaturmeßsignals ($\theta 2$) einen Wandlertemperatur-Meßwert zu generieren, der eine Wandlervorrichtungstemperatur repräsentiert, die sowohl von der ersten Meßstellentemperatur ($\vartheta 1$) als auch von der zweiten Meßstellentemperatur ($\vartheta 2$) abweicht, derart, daß ein Betrag nämlichen Wandlertemperatur-Meßwerts größer als ein Betrag der ersten Meßstellentemperatur ($\vartheta 1$), gleichwohl kleiner als ein Betrag der zweiten Meßstellentemperatur ($\vartheta 2$) ist, insb. nämlich einem arithmetischen Mittelwert der ersten und zweiten Meßstellentemperaturen ($\vartheta 1$, $\vartheta 2$) und/oder einem gewichteten Mittel der ersten und zweiten Meßstellentemperaturen ($\vartheta 1$, $\vartheta 2$) entspricht.

2. Meßsystem gemäß einem der vorherigen Ansprüche,

- wobei der erste Temperatursensor (71) weniger weit vom ersten Ende (11a) des ersten Rohrs (11) entfernt positioniert ist als der zweite Temperatursensor (72) vom ersten Ende (12a) des zweiten Rohres (12); und/oder
- wobei der zweite Temperatursensor (72) weniger weit vom zweiten Ende (12b) des zweiten Rohrs (12) entfernt positioniert ist als der erste Temperatursensor (71) vom zweiten Ende (11b) des ersten Rohres (11); und/oder
- wobei der erste Temperatursensor (71) gleichweit vom ersten Ende (11a) des ersten Rohrs (11) entfernt positioniert ist wie der zweite Temperatursensor (72) vom zweiten Ende (12b) des zweiten Rohrs (12); und/oder
- wobei der erste Temperatursensor (71) gleichweit vom zweiten Ende (11b) des ersten Rohrs (11) entfernt positioniert ist wie der zweite Temperatursensor (72) vom ersten Ende (12a) des zweiten Rohrs (12); und/oder
- wobei der erste Temperatursensor (71) gleichweit von einer Mitte des ersten Rohrs entfernt positioniert ist wie der zweite Temperatursensor (72) von einer Mitte des zweiten Rohrs; und/oder
- wobei der erste Temperatursensor und der zweite Temperatursensor baugleich sind; und/oder
- wobei der erste Temperatursensor in gleicher Weise mechanisch mit der Wandung des ersten Rohrs gekoppelt ist wie der zweite Temperatursensor mit der Wandung des zweiten Rohrs.

3. Meßsystem gemäß einem der vorherigen Ansprüche,

- wobei der erste Temperatursensor in gleicher Weise thermisch leitend mit der Wandung des ersten Rohrs gekoppelt ist wie der zweite Temperatursensor mit der Wandung des zweiten Rohrs, insb. derart, daß ein einem von der Wandung des ersten Rohrs zum ersten Temperatursensor und weiter zu einer den ersten Temperatursensor umgebenden Atmosphäre fließenden Wärmestrom entgegenwirkender Wärmewiderstand gleich groß ist wie ein einem von der Wandung des zweiten Rohrs zum zweiten Temperatursensor und weiter zu einer den zweiten Temperatursensor umgebenden Atmosphäre fließenden Wärmestrom entgegenwirkender Wärmewiderstand; und/oder
- wobei das sowohl das erste Rohr als auch das zweite Rohr jeweils spiegelsymmetrisch bezüglich wenigstens einer das jeweilige Rohr imaginär schneidenden, insb. nämlich mit einer Trägheitshauptachse des nämlichen Rohrs koinzidierenden, jeweiligen gedachten Symmetrieachse ist; und/oder
- wobei eine mittels des ersten Temperatursensors (71) und mittels des zweiten Temperatursensors (72) gebildete Temperatursensoranordnung der Wandlervorrichtung achsensymmetrisch bezüglich wenigstens einer die Wandlervorrichtung imaginär schneidenden, insb. nämlich sowohl zu einer Trägheitshauptachse des ersten Rohrs als auch zu einer Trägheitshauptachse des zweiten Rohrs parallelen, gedachten Symmetrieachse ist.

4. Meßsystem gemäß einem der vorherigen Ansprüche, weiter umfassend: einen, insb. elektrodynamischen und/oder zum ersten Schwingungssensor (51) baugleichen, zweiten Schwingungssensor (52) zum Erfassen von, insb. auslaßseitigen, mechanischen Schwingungen wenigstens eines der Rohre.

5. Meßsystem gemäß dem vorherigen Anspruch,

- wobei eine mittels des ersten Schwingungssensors (51) und mittels des zweiten Schwingungssensors (52) gebildete Schwingungssensoranordnung spiegelsymmetrisch bezüglich wenigstens einer die Wandlervorrichtung imaginär schneidenden, insb. nämlich sowohl zu einer Trägheitshauptachse des ersten Rohrs als auch zu einer Trägheitshauptachse des zweiten Rohrs parallelen, gedachten Symmetrieachse ist; und/oder

- wobei der erste Temperatursensor (71) gleichweit vom ersten Schwingungssensor (51) entfernt positioniert ist wie der zweite Temperatursensor (72) vom zweiten Schwingungssensor (52).

6. Meßsystem gemäß einem der vorherigen Ansprüche,

- wobei der erste Temperatursensor (71) mittels eines, insb. einen Platin-Meßwiderstand, einen Thermistor oder ein Thermoelement aufweisenden, ersten Temperaturfühlers (711) sowie mittels eines nämlichen ersten Temperaturfühler (711) thermisch leitend mit der Wandung des ersten Rohrs koppelnden ersten Kopplungskörpers (712) gebildet ist,
- und wobei der zweite Temperatursensor (72) mittels eines, insb. einen Platin-Meßwiderstand, einen Thermistor oder ein Thermoelement aufweisenden, zweiten Temperaturfühlers (721) sowie mittels eines nämlichen zweiten Temperaturfühler (721) thermisch leitend mit der Wandung des zweiten Rohrs koppelnden zweiten Kopplungskörpers (722) gebildet ist.

7. Meßsystem gemäß dem vorherigen Anspruch,

- wobei der erste Temperaturfühler (711) und der zweite Temperaturfühler (712) baugleich sind; und/oder
- wobei der erste Kopplungskörper (712) und der zweite Kopplungskörper (722) baugleich sind.

8. Meßsystem gemäß einem der vorherigen Ansprüche,

- wobei der Wandlertemperatur-Meßwert einem arithmetischen Mittelwert der ersten und zweiten Meßstellen-temperaturen ($\vartheta 1$, $\vartheta 2$) und/oder einem gewichteten Mittel der ersten und zweiten Meßstellentemperaturen ($\vartheta 1$, $\vartheta 2$) entspricht; und/oder
- wobei der Wandlertemperatur-Meßwert mittlere Rohrwändetemperatur, nämlich eine einem arithmetischen Mittelwert $0{,}5 \cdot (\overline{\vartheta_{11}} + \overline{\vartheta_{12}})$ einer mittleren Rohrwandtemperatur ($\overline{\vartheta_{11}}$) des ersten Rohrs (11) und einer mittleren Rohrwandtemperatur ($\overline{\vartheta_{12}}$) des zweiten Rohrs (12) entsprechende Temperatur, repräsentiert.

9. Meßsystem gemäß einem der vorherigen Ansprüche,

- wobei die Meß- und Betriebs-Elektronik dafür eingerichtet ist, zum Anregen von mechanischen Schwingungen der Rohre ein die Erregeranordnung (E), insb. nämlich deren wenigstens einen Schwingungserreger (41), treibendes Erregersignal (e) zu generieren;
- und wobei die Erregeranordnung (E) dafür eingerichtet ist, angesteuert vom Erregersignal (e), mechanische Schwingungen der Rohre anzuregen bzw. aufrecht zu erhalten.

10. Meßsystem gemäß einem der vorherigen Ansprüche, wobei die Sensoranordnung (S) der Wandlervorrichtung dafür eingerichtet ist, wenigstens ein mechanische Schwingungen wenigstens eines der Rohre repräsentierendes (erstes) Schwingungssignal (s1) zu liefern.

11. Meßsystem gemäß dem vorherigen Anspruch, wobei die Meß- und Betriebs-Elektronik (ME) dafür eingerichtet ist, unter Verwendung sowohl des Schwingungssignals (s1) als auch der ersten und zweiten Temperaturmeßsignale ($\theta 1$, $\theta 2$) einen Meßwert ($X_x$) zu generieren, der eine Meßgröße (x), insb. nämlich einen Stoff- oder einen Strömungsparameters, eines, insb. in einer Rohrleitung, strömenden Fluids (FL1), insb. eines Gases, einer Flüssigkeit oder einer fließfähigen Dispersion, repräsentiert.

12. Meßsystem gemäß Anspruch 10 oder 11, wobei die Meß- und Betriebs-Elektronik (ME) dafür eingerichtet ist, unter Verwendung des Schwingungssignals (s1) einen Frequenzmeßwert zu generieren, der eine Frequenz von mechanischen Schwingungen des ersten Rohrs und/oder des zweiten Rohrs repräsentiert.

13. Meßsystem gemäß dem vorherigen Anspruch, wobei die Meß- und Betriebs-Elektronik (ME) dafür eingerichtet ist, unter Verwendung des Frequenzmeßwerts, insb. nämlich unter Verwendung sowohl des Frequenzmeßwerts als auch des Temperaturmeßwerts, einen Dichte-Meßwert, nämlich einen eine Dichte, $\rho$, des Fluids repräsentierenden Meßwert und/oder einen Viskositäts-Meßwert, nämlich einen eine Viskosität, $\eta$, des Fluids repräsentierenden Meßwert zu generieren.

14. Meßsystem gemäß einem der Ansprüche 10 bis 13, wobei die Sensoranordnung (S) der Wandlervorrichtung dafür eingerichtet ist, wenigstens ein mechanische Schwingungen wenigstens eines der Rohre repräsentierendes zweites Schwingungssignal (s2) zu liefern, insb. derart, daß zwischen dem ersten Schwingungssignal (s1) und nämlichen zweiten Schwingungssignal (s2) eine von einer Massendurchflußrate eines durch das erste Rohr und/oder von einer Massendurchflußrate eines durch das zweite Rohr strömenden Fluids abhängige Phasendifferenz existiert.

15. Meßsystem gemäß dem vorherigen Anspruch, wobei die Meß- und Betriebs-Elektronik (ME) dafür eingerichtet ist, unter Verwendung sowohl des ersten Schwingungssignals (s1) als auch des zweiten Schwingungssignals (s2) einen Massendurchfluß-Meßwert, nämlich einen eine Massendurchflußrate, m, eines durch das erste Rohr und/oder durch das zweite Rohr strömenden Fluids repräsentierenden Meßwert zu generieren.

16. Meßsystem gemäß einem der vorherigen Ansprüche, wobei die Meß- und Betriebs-Elektronik (ME) ferner dafür eingerichtet ist, unter Verwendung sowohl des ersten Temperaturmeßsignals ($\theta$1) als auch des zweiten Temperaturmeßsignals ($\theta$2) einen Temperaturabweichungsmeßwert zu generieren, der eine, insb. absolute oder relative, Abweichung zwischen der ersten Meßstellentemperatur ($\vartheta$1) und der zweiten Meßstellentemperatur ($\vartheta$2) repräsentiert.

17. Meßsystem gemäß dem vorherigen Anspruch,

- wobei die Meß- und Betriebs-Elektronik (ME) dafür eingerichtet ist, unter Verwendung des Temperaturabweichungsmeßwerts eine Funktionstüchtigkeit der Wandlervorrichtung, insb. nämlich eine Funktionstüchtigkeit des ersten Rohrs und/oder eine Funktionstüchtigkeit des zweiten Rohrs, zu überwachen; und/oder
- wobei die Meß- und Betriebs-Elektronik (ME) dafür eingerichtet ist, unter Verwendung des Temperaturabweichungsmeßwerts zu Diagnostizieren, daß die Wandlervorrichtung einen gegenüber einem ursprünglichen Strömungswiderstand veränderten Strömungswiderstand aufweist, insb. nämlich, daß zumindest eines der Rohre der Wandlervorrichtung einen gegenüber einem ursprünglichen Strömungswiderstand veränderten Strömungswiderstand aufweist und/oder das das erste Rohr einen Strömungswiderstand aufweist, der von einem Strömungswiderstand des zweiten Rohrs abweicht; und/oder
- wobei die Meß- und Betriebs-Elektronik (ME) dafür eingerichtet ist, unter Verwendung des Temperaturabweichungsmeßwerts einen Alarm zu generieren, der eine nur noch eingeschränkte Funktionstüchtigkeit der Wandlervorrichtung signalisiert, insb. infolge eines gegenüber einem ursprünglichen Strömungswiderstand veränderten Strömungswiderstands des ersten Rohrs und/oder infolge eines gegenüber einem ursprünglichen Strömungswiderstand veränderten Strömungswiderstands des zweiten Rohrs.

18. Meßsystem gemäß einem der vorherigen Ansprüche,

- wobei die Meß- und Betriebs-Elektronik (ME) einen Multiplexer mit wenigstens zwei Signaleingängen sowie wenigstens einem Signalausgang aufweist, welcher Multiplexer (MUX) dafür eingerichtet ist, wahlweise, insb. zyklisch, einen von dessen Signaleingängen auf den Signalausgang durchzuschalten, derart, daß ein am jeweils durchgeschalteten Signaleingang anliegendes Signal an den Signalausgang weitergeführt ist;
- und wobei die Meß- und Betriebs-Elektronik (ME) einen, insb. eine nominelle Auflösung von mehr als 16 Bit aufweisenden und/oder mit einer mehr als 1000 s⁻ betragenden Abtastrate getakteten, Analog-zu-Digital-Wandler (ADC) mit wenigstens einem Signaleingang und wenigstens einem Signalausgang aufweist, welcher Analog-zu-Digital-Wandler dafür eingerichtet ist, ein an nämlichem Signaleingang anliegendes analoges Eingangssignal mit einer, insb. mehr als 1000 s⁻ betragenden, Abtastrate, $f_A$, und mit einer, insb. mehr als 16 Bit betragenden, digitalen Auflösung, N, in ein nämliches Eingangssignal repräsentierendes digitales Ausgangssignal umzusetzen und am Signalausgang bereitzustellen.

19. Meßsystem gemäß dem vorherigen Anspruch,

- wobei der wenigstens eine Signalausgang des Multiplexers und der wenigstens eine Signaleingang des Analog-zu-Digital-Wandlers miteinander elektrisch gekoppelt sind;
- und wobei der erste Temperatursensor (71) und der zweite Temperatursensor (72) jeweils mit dem Multiplexer (MUX) elektrisch verbundenen sind, derart, daß das erste Temperaturmeßsignal ($\theta$1) an einem ersten Signaleingang des Multiplexers (MUX) und daß das zweite Temperaturmeßsignal ($\theta$2) an einem zweiten Signaleingang des Multiplexers (MUX) anliegen.

20. Meßsystem gemäß dem vorherigen Anspruch, wobei das Ausgangssignal des Analog-zu-Digital-Wandlers (ADC) zeitweise genau eines der beiden Temperaturmeßsignale ($\theta$1, $\theta$2) repräsentiert.

**21.** Meßsystem gemäß dem vorherigen Anspruch, wobei die Meß- und Betriebs-Elektronik (ME) dafür eingerichtet ist, den Wandlertemperatur-Meßwert unter Verwendung des eines der beiden Temperaturmeßsignale ($\theta$1, $\theta$2) repräsentierenden Ausgangssignals des Analog-zu-Digital-Wandlers (ADC) zu generieren.

**22.** Meßsystem gemäß einem der vorherigen Ansprüche,

- wobei die Meß- und Betriebs-Elektronik (ME) dafür eingerichtet ist, unter Verwendung sowohl des ersten Temperaturmeßsignals ($\theta$1) als auch des zweiten Temperaturmeßsignals ($\theta$2) einen Meßfluidtemperatur-Meßwert, nämlich einen eine Temperatur eines durch das erste Rohr strömenden Fluids und/oder eine Temperatur eines durch das zweite Rohr strömenden Fluids repräsentierenden Meßwert zu generieren; und/oder
- wobei die Meß- und Betriebs-Elektronik (ME) dafür eingerichtet ist, unter Verwendung des ersten Temperaturmeßsignals ($\theta$1), gleichwohl nicht des zweiten Temperaturmeßsignals ($\theta$2) einen Hilfstemperaturmeßwert zu generieren, der die Wandlervorrichtungstemperatur zumindest näherungsweise repräsentiert; und/oder
- wobei die Meß- und Betriebs-Elektronik (ME) dafür eingerichtet ist, unter Verwendung des zweiten Temperaturmeßsignals ($\theta$2), gleichwohl nicht des ersten Temperaturmeßsignals ($\theta$1) einen Hilfstemperaturmeßwert zu generieren, der die Wandlervorrichtungstemperatur zumindest näherungsweise repräsentiert.

**23.** Verwenden eines Meßsystems gemäß einem der vorherigen Ansprüche zum Messen einer wenigstens einer physikalischen Meßgröße, insb. einer Dichte und/oder einer Viskosität und/oder einer Massendurchflußrate und/oder einer Volumendurchflußrate, eines, insb. in einer Rohrleitung, strömenden Fluids, insb. eines Gases, einer Flüssigkeit oder einer fließfähigen Dispersion.

### Claims

**1.** Measuring system - particularly designed to measure at least one measured variable, x, of a fluid (FL1) flowing through a pipe, said measuring system comprising:

- a measuring and operating electronics unit (ME), particularly formed by a microprocessor and/or a digital signal processor;
- as well as a transducer unit electrically coupled to said measuring and operating electronics unit (ME);
- wherein the transducer unit (MW) comprises:

-- a first tube (11) which has an interior channel (11') surrounded by a wall, particularly a metal wall, and extends from a first end (11a) on the inlet side to a second end (11b) on the outlet side, wherein said tube particularly is at least partially curved and/or at least partially straight, wherein said tube is designed to have a fluid flow through it, starting from the first end on the inlet side in the direction of the second end on the outlet side, and to be made to vibrate during this time,

-- a second tube (12) which has an interior channel (12') surrounded by a wall, particularly a metal wall, and extends from a first end (12a) on the inlet side to a second end (12b) on the outlet side, particularly at least partially curved and/or at least partially straight in sections and/or identical in design to the first tube (11) and/or arranged parallel to the first tube (11), wherein said second tube is designed to have a fluid flow through it, particularly simultaneously with the first tube, starting from the first end on the inlet side in the direction of the second end on the outlet side, and to be made to vibrate during this time, particularly simultaneously and/or mirror-inverted in relation to the first tube,

-- an electromechanical exciter arrangement formed by at least a vibration exciter (41), particularly electrodynamic, which is designed to excite and maintain mechanical vibrations of both the first and the second tube around an associated static rest position, particularly mechanical vibrations of each of the tubes around a first or a second imaginary axis of vibration, connecting, in an imaginary manner, each tube's first end with its second end,

-- a sensor arrangement (S) formed by at least a first vibration sensor (51), particularly electrodynamic, designed to measure mechanical vibrations, particularly on the inlet side, of at least one of the tubes (11, 12),

-- a first temperature sensor (71) coupled mechanically, but also in a thermally conductive manner, to the wall of the first tube,

--- wherein said sensor is positioned less far from the first end (11a) of the first tube (11) than from the second end (11b) of said first tube (11),

--- and wherein said sensor is provided or designed to measure a first measuring point temperature ($\theta$1), specifically a temperature of the wall of the first tube at a first temperature measuring point formed by means of said temperature sensor (71), and to convert it into a first temperature measuring signal (θ1), specifically a first electrical measuring signal representing the first measuring point temperature (θ1), particularly with an electrical signal voltage that depends on said first measuring point temperature and/or an electrical signal current that depends on said first measuring point temperature,

-- as well as a second temperature sensor (72) coupled mechanically, but also in a thermally conductive manner, to the wall of the second tube,

--- wherein said sensor is positioned less far from the second end (12b) of the second tube (12) than from the first end (12a) of said second tube (12)

--- and wherein said sensor is provided or designed to measure a second measuring point temperature (θ2), specifically a temperature of the wall of the second tube, at a second temperature measuring point formed by means of said temperature sensor (72), and to convert it into a second temperature measuring signal, specifically a second electrical measuring signal (θ2) representing the second measuring point temperature (θ2), particularly with an electrical signal voltage that depends on said second measuring point temperature and/or an electrical signal current that depends on said second measuring point temperature,

-- wherein, apart from the first temperature sensor, the transducer unit does not have any other temperature sensor in contact with the wall of the first tube and/or, apart from the second temperature sensor, the transducer unit does not have any other temperature sensor in contact with the wall of the second tube;

- and wherein the 'measuring and operating electronics unit (ME) is designed to generate, using both the first temperature measuring signal (θ1) and the second temperature measuring signal (θ2), a transducer temperature measured value which represents a temperature of the transducer unit, which deviates from both the first measuring point temperature (θ1) and the second measuring point temperature (θ2), in such a way that an absolute value of said transducer temperature measured value is greater than an absolute value of the first measuring point temperature (θ1) bus is less than an absolute value of the second measuring point temperature (θ2), specifically such that it corresponds particularly to an arithmetic average of the first and the second measuring point temperature (θ1, θ2) and/or to a weighted average of the first and the second measuring point temperature (θ1, θ2).

2.  Measuring system as claimed in one of the previous claims,

- wherein the first temperature sensor (71) is positioned less far from the first end (11a) of the first tube (11) than the second temperature sensor (72) from the first end (12a) of the second tube (12); and/or
- wherein the second temperature sensor (72) is positioned less far from the second end (12b) of the second tube (12) than the first temperature sensor (71) from the second end (11b) of the first tube (11); and/or
- wherein the first temperature sensor (71) is positioned at the same distance from the first end (11a) of the first tube (11) than the second temperature sensor (72) from the second end (12b) of the second tube (12); and/or
- wherein the first temperature sensor (71) is positioned at the same distance from the second end (11b) of the first tube (11) than the second temperature sensor (72) from the first end (12a) of the second tube (12); and/or
- wherein the first temperature sensor (71) is positioned at the same distance from a center of the first tube than the second temperature sensor (72) is positioned from a center of the second tube; and/or
- wherein the first temperature sensor and the second temperature sensor are identical in design; and/or
- wherein the first temperature sensor is mechanically coupled to the wall of the first tube in the same way as the second temperature sensor is coupled to the wall of the second tube.

3.  Measuring system as claimed in one of the previous claims,

- wherein the first temperature sensor is coupled in a thermally conductive manner to the wall of the first tube in the same way as the second temperature sensor is coupled to the wall of the second tube, particularly in such a way that a thermal resistance acting against a heat current flowing from the wall of the first tube to the first temperature sensor and on to an atmosphere surrounding the first temperature sensor is the same size as a thermal resistance acting against a heat current flowing from the wall of the second tube to the second temperature sensor and on to an atmosphere surrounding the second temperature sensor; and/or
- wherein the first tube and the second tube are both in mirror symmetry in relation to at least an imaginary axis of symmetry cutting, in an imaginary manner, the respective tube, wherein the axis of symmetry coincides particularly with a primary axis of inertia of said tube; and/or
- wherein a temperature sensor arrangement du transducer unit formed by means of the first temperature sensor (71) and by means of the second temperature sensor (72) is axisymmetric in relation to at least one imaginary axis of symmetry cutting the transducer unit in an imaginary manner, wherein said axis of symmetry is particularly parallel to both a primary axis of inertia of the first tube and to a primary axis of inertia of the second tube.

4. Measuring system as claimed in one of the previous claims, further comprising: a second vibration sensor (52), particularly electrodynamic and/or identical in design to the first vibration sensor (51), wherein said second sensor is designed to measure mechanical vibrations, particularly on the outlet side, of at least one of the tubes.

5. Measuring system as claimed in one of the previous claims,

- wherein a vibration sensor arrangement formed by means of the first vibration sensor (51) and by means of the second vibration sensor (52) is symmetrical in relation to at least an imaginary axis of symmetry cutting the transducer unit in an imaginary manner, wherein said axis of symmetry is particularly parallel to both a primary axis of inertia of the first tube and to a primary axis of inertia of the second tube; and/or
- wherein the first temperature sensor (71) is positioned at the same distance from the first vibration sensor (51) as the second temperature sensor (72) is from the second vibration sensor (52).

6. Measuring system as claimed in one of the previous claims,

- wherein the first temperature sensor (71) is formed by means of a first temperature sensing element (711) particularly having a platinum measuring resistor, a thermistor or a thermocouple, and by means of a first coupling body (712) coupling the first temperature sensing element (711) to the wall of the first tube in a thermally conductive manner,
- and wherein the second temperature sensor (72) is formed by means of a second temperature sensing element (721) particularly having a platinum measuring resistor, a thermistor or a thermocouple, and by means of a second coupling body (722) coupling the second temperature sensing element (721) to the wall of the second tube in a thermally conductive manner.

7. Measuring system as claimed in one of the previous claims,

- wherein the first temperature sensor (711) and the second temperature sensor (712) are identical in design; and/or
- wherein the first coupling body (712) and the second coupling body (722) are identical in design.

8. Measuring system as claimed in one of the previous claims,

- wherein the transducer temperature measured value corresponds to an arithmetic average of the first and the second measuring point temperature ($\theta1$, $\theta2$) and/or to a weighted average of the first and the second measuring point temperature ($\theta1$, $\theta2$); and/or
- wherein the transducer temperature measured value represents an average temperature of the tube wall, specifically a temperature corresponding to an arithmetic average $0.5 \cdot (\overline{\overline{\vartheta}}_{11} + \overline{\overline{\vartheta}}_{12})$ of an average temperature of the tube wall $(\overline{\overline{\vartheta}}_{11})$ of the first tube (11) and of an average temperature of the tube wall $(\overline{\overline{\vartheta}}_{12})$ of the second tube (12).

9. Measuring system as claimed in one of the previous claims,

- wherein the measuring and operating electronics unit is designed to generate an excitation signal (e) driving the exciter arrangement (E), particularly its at least one vibration exciter (41), for the purpose of exciting mechanical vibrations of the tubes;
- and wherein the exciter arrangement (E) is designed to excite or maintain mechanical vibrations of the tubes under the control of the excitation signal (e).

10. Measuring system as claimed in one of the previous claims, wherein the sensor arrangement (S) of the transducer unit is designed to supply at least a (first) vibration signal (s1) representing mechanical vibrations of at least one of the tubes.

11. Measuring system as claimed in the previous claim, wherein the measuring and operating electronics unit (ME) is designed to generate - using both the vibration signal (s1) and the first and the second temperature measuring signals ($\theta1$, $\theta2$) - a measured value ($X_x$) that represents a measured variable (x), particularly a substance or flow parameter, of a fluid (FL1), particularly a gas, a liquid or a dispersion capable of flow, flowing through a pipe.

12. Measuring system as claimed in Claim 10 or 11, wherein the measuring and operating electronics unit (ME) is designed to generate - using the vibration signal (s1) - a frequency measured value that represents a frequency of mechanical vibrations of the first tube and/or of the second tube.

13. Measuring system as claimed in the previous claim, wherein the measuring and operating electronics unit (ME) is designed to generate - using the frequency measured value, particularly using both the frequency measured value and the temperature measured value - a density measured value, specifically a measured value representing a density, $\rho$, of the fluid and/or a viscosity measured value, specifically a measured value representing a viscosity, n, of the fluid.

14. Measuring system as claimed in one of the Claims 10 to 13, wherein the sensor arrangement (S) of the transducer unit is designed to supply at least a second vibration signal (s2) representing mechanical vibrations of at least one of the tubes, particularly in such a way that a phase difference that depends on a mass flow rate of a fluid flowing through the first tube and/or a mass flow rate of a fluid flowing through the second tube exists between the first vibration signal (s1) and the second vibration signal (s2).

15. Measuring system as claimed in the previous claim, wherein the measuring and operating electronics unit (ME) is designed to generate a mass flow measured value, specifically a measured value representing a mass flow, m, of a fluid flowing through the first tube and/or through the second tube, using both the first vibration signal (s1) and the second vibration signal (s2).

16. Measuring system as claimed in one of the previous claims, wherein the measuring and operating electronics unit (ME) is further designed to generate, using both the first temperature measuring signal ($\theta1$) and the second temperature measuring signal ($\theta2$), a temperature deviation measured value that represents a deviation, particularly absolute or relative, between the first measuring point temperature ($\theta1$) and the second measuring point temperature ($\theta2$).

17. Measuring system as claimed in the previous claim,

- wherein the measuring and operating electronics unit (ME) is designed to monitor - using the temperature deviation measured value - the functional integrity of the transducer unit, specifically a functional integrity of the first tube and/or a functional integrity of the second tube; and/or
- wherein the measuring and operating electronics unit (ME) is designed to diagnose - using the temperature deviation measured value - that the transducer unit has a flow resistance that has changed in relation to an initial flow resistance, particularly such that at least one of the tubes of the transducer unit has a flow resistance that has changed in relation to an initial flow resistance and/or that the first tube has a flow resistance that differs from a flow resistance of the second tube; and/or
- wherein the measuring and operating electronics unit (ME) is designed to generate - using the temperature deviation measured value - an alarm that signals an only limited functioning of the transducer unit, particularly as a result of a flow resistance of the first tube that has changed in relation to an initial flow resistance and/or as a result of a flow resistance of the second tube that has changed in relation to an initial flow resistance.

18. Measuring system as claimed in one of the previous claims,

- wherein the measuring and operating electronics unit (ME) comprises a multiplexer with at least two signal inputs and at least a signal output, wherein the multiplexer (MUX) is designed to electively switch, particularly in a cyclical manner, one of its signal inputs to the signal output in such a way that a signal present at the signal input switched through is passed on to the signal output;
- and wherein the measuring and operating electronics unit (ME) comprises an analog-to-digital converter (ADC) which particularly has a nominal resolution of more than 16 bits and/or with a scan rate of more than 1000 s⁻, with at least one signal input and at least one signal output, wherein said analog-to-digital converter is designed to convert an analog input signal applied to said signal input with a scan rate, $f_A$, particularly of more than 1 000 s⁻ and with a digital resolution N, particularly greater than 16 bits, to a digital output signal representing said input signal, and to make it available at the signal output.

19. Measuring system as claimed in the previous claim,

- wherein the at least one signal output of the multiplexer and the at least one signal input of the analog-to-digital converter are coupled electrically to one another;
- and wherein the first temperature sensor (71) and the second temperature sensor (72) are each electrically connected to the multiplexer (MUX) in such a way that the first temperature measuring signal ($\theta$1) is applied to a first signal input of the multiplexer (MUX) and that the second temperature measuring signal (02) is applied to a second signal input of the multiplexer (MUX).

20. Measuring system as claimed in the previous claim, wherein the output signal of the analog-to-digital converter (ADC) temporarily represents exactly one of the two temperature measuring signals ($\theta$1, $\theta$2).

21. Measuring system as claimed in the previous claim, wherein the measuring and operating electronics unit (ME) is designed to generate the transducer temperature measured value using the output signal of the analog-to-digital converter (ADC) representing one of the two temperature measuring signals ($\theta$1, $\theta$2).

22. Measuring system as claimed in one of the previous claims

- wherein the measuring and operating electronics unit (ME) is designed to generate - using both the first temperature measuring signal ($\theta$1) and the second temperature measuring signal ($\theta$2) - a temperature measured value of the measuring fluid, specifically a measured value representing a temperature of a fluid flowing through the first tube and/or a temperature of a fluid flowing through the second tube; and/or
- wherein the measuring and operating electronics unit (ME) is designed to generate - using the first temperature measuring signal ($\theta$1), but not using the second temperature measuring signal (02) - an auxiliary temperature measured value that at least approximately represents the temperature of the transducer unit; and/or
- wherein the measuring and operating electronics unit (ME) is designed to generate - using the second temperature measuring signal ($\theta$2), but not using the first temperature measuring signal ($\theta$1) - an auxiliary temperature measured value that at least approximately represents the temperature of the transducer unit.

23. Use of a measuring system as claimed in one of the previous claims, wherein said system is designed to measure at least a physical variable, particularly a density and/or a viscosity and/or a mass flow rate and/or a volume flow rate, of a fluid, particularly a gas, a liquid or a dispersion capable of flow, flowing through a pipe.

**Revendications**

1. Système de mesure - notamment destiné à la mesure d'au moins une grandeur de mesure, x, d'un fluide (FL1) s'écoulant dans une conduite, lequel système de mesure comprend :

- une électronique de mesure et d'exploitation (ME), formée notamment au moyen d'un microprocesseur et/ou d'un processeur de signaux numériques ;
- ainsi qu'un dispositif transducteur couplé électriquement à la même électronique de mesure et d'exploitation (ME) ;
- le dispositif transducteur (MW) comprenant :

-- un premier tube (11) présentant un canal intérieur (11') enveloppé d'une paroi, notamment métallique, s'étendant d'une première extrémité (11a) côté entrée jusqu'à une deuxième extrémité (11b) côté sortie, lequel tube est notamment au moins partiellement courbé et/ou au moins partiellement droit, lequel tube est conçu pour être traversé par un fluide, en partant de la première extrémité côté entrée en direction de la deuxième extrémité côté sortie, et pour être mis en vibration pendant ce temps,
-- un deuxième tube (12) présentant un canal intérieur (12') enveloppé d'une paroi, notamment métallique, s'étendant d'une première extrémité (12a) côté entrée jusqu'à une deuxième extrémité (12b) côté sortie, notamment au moins partiellement sections et/ou au moins partiellement droit et/ou de construction identique au premier tube (11) et/ou disposé parallèlement au premier tube (11), lequel deuxième tube est conçu pour être traversé, notamment simultanément au premier tube, par un fluide partant de la première extrémité côté entrée en direction de la deuxième extrémité côté sortie, et pour être mis en vibration pendant ce temps, notamment simultanément et/ou en sens inverse par rapport au premier tube,
-- un dispositif d'excitation électromécanique formé au moyen d'au moins un excitateur de vibrations (41), notamment électrodynamique, lequel dispositif est destiné à exciter et maintenir des vibrations mécaniques aussi bien du premier que du deuxième tube autour d'une position de repos statique respective associée, notamment des vibrations mécaniques de chacun des tubes autour d'un premier ou d'un deuxième axe de vibration imaginaire reliant respectivement de manière imaginaire sa première extrémité respective à sa deuxième extrémité respective,

-- un agencement de capteurs (S) formé au moyen d'au moins un premier capteur de vibration (51), notamment électrodynamique, lequel agencement est destiné à mesurer les vibrations mécaniques, notamment côté entrée, d'au moins l'un des tubes (11, 12),

-- un premier capteur de température (71) couplé mécaniquement, mais également de manière thermoconductrice, à la paroi du premier tube,

--- lequel capteur est positionné moins loin de la première extrémité (11a) du premier tube (11) que de la deuxième extrémité (11b) du même premier tube (11),

--- et lequel capteur est prévu ou conçu pour mesurer une première température de point de mesure ($\theta$1), à savoir une température de la paroi du premier tube à un premier point de mesure de température formé au moyen dudit capteur de température (71), et pour la convertir en un premier signal de mesure de température ($\theta$1), à savoir un premier signal de mesure électrique représentant la première température de point de mesure ($\theta$1), notamment avec une tension de signal électrique dépendant de ladite première température de point de mesure et/ou un courant de signal électrique dépendant de ladite première température de point de mesure,

-- ainsi qu'un deuxième capteur de température (72) couplé mécaniquement, mais également de manière thermoconductrice, à la paroi du deuxième tube,

--- lequel capteur est positionné moins loin de la deuxième extrémité (12b) du deuxième tube (12) que de la première extrémité (12a) du même deuxième tube (12)

--- et lequel capteur est prévu ou conçu pour mesurer une deuxième température de point de mesure ($\theta$2), à savoir une température de la paroi du deuxième tube, à un deuxième point de mesure de température formé au moyen dudit capteur de température (72), et pour la convertir en un deuxième signal de mesure de température, à savoir un deuxième signal de mesure électrique (02) représentant la deuxième température de point de mesure ($\theta$2), notamment avec une tension de signal électrique dépendant de ladite deuxième température de point de mesure et/ou un courant de signal électrique dépendant de ladite deuxième température de point de mesure,

-- le dispositif transducteur ne présentant pas, outre le premier capteur de température, d'autre capteur de température en contact avec la paroi du premier tube et/ou, outre le deuxième capteur de température, d'autre capteur de température en contact avec la paroi du deuxième tube ;

- et l'électronique de mesure et d'exploitation (ME) étant conçue pour générer, en utilisant à la fois le premier signal de mesure de température ($\theta$1) et le deuxième signal de mesure de température ($\theta$2), une valeur mesurée de température de transducteur qui représente une température de dispositif transducteur, qui s'écarte à la fois de la première température de point de mesure ($\theta$1) et de la deuxième température de point de mesure ($\theta$2), de telle sorte qu'une valeur absolue de ladite valeur mesurée de température de transducteur soit supérieure à une valeur absolue de la première température de point de mesure ($\theta$1), mais inférieure à une valeur absolue de la deuxième température de point de mesure ($\theta$2), à savoir de telle sorte à correspondre notamment à une valeur moyenne arithmétique de la première et de la deuxième température de point de mesure ($\theta$1, $\theta$2) et/ou à une moyenne pondérée de la première et de la deuxième température de point de mesure ($\theta$1, $\theta$2).

2. Système de mesure selon la revendication précédente,

- pour lequel le premier capteur de température (71) est positionné moins loin de la première extrémité (11a) du premier tube (11) que le deuxième capteur de température (72) ne l'est de la première extrémité (12a) du deuxième tube (12) ; et/ou

- pour lequel le deuxième capteur de température (72) est positionné moins loin de la deuxième extrémité (12b) du deuxième tube (12) que le premier capteur de température (71) ne l'est de la deuxième extrémité (11b) du premier tube (11) ; et/ou

- pour lequel le premier capteur de température (71) est positionné à la même distance de la première extrémité (11a) du premier tube (11) que le deuxième capteur de température (72) de la deuxième extrémité (12b) du deuxième tube (12) ; et/ou

- pour lequel le premier capteur de température (71) est positionné à la même distance de la deuxième extrémité (11b) du premier tube (11) que le deuxième capteur de température (72) de la première extrémité (12a) du deuxième tube (12) ; et/ou

- pour lequel le premier capteur de température (71) est positionné à la même distance d'un centre du premier tube que le deuxième capteur de température (72) est positionné d'un centre du deuxième tube ; et/ou

- pour lequel le premier capteur de température et le deuxième capteur de température sont de construction identique ; et/ou
- pour lequel le premier capteur de température est couplé mécaniquement à la paroi du premier tube de la même manière que le deuxième capteur de température est couplé à la paroi du deuxième tube.

3. Système de mesure selon l'une des revendications précédentes,

- pour lequel le premier capteur de température est couplé de manière thermoconductrice à la paroi du premier tube de la même manière que le deuxième capteur de température est couplé à la paroi du deuxième tube, notamment de telle sorte qu'une résistance thermique s'opposant à un flux de chaleur s'écoulant de la paroi du premier tube vers le premier capteur de température et ensuite vers une atmosphère entourant le premier capteur de température est aussi grande qu'une résistance thermique s'opposant à un flux de chaleur s'écoulant de la paroi du deuxième tube vers le deuxième capteur de température et ensuite vers une atmosphère entourant le deuxième capteur de température ; et/ou
- pour lequel le premier tube et le deuxième tube sont tous deux symétriques par rapport à au moins un axe de symétrie imaginaire respectif coupant de manière imaginaire le tube respectif, lequel axe de symétrie coïncide notamment avec un axe principal d'inertie du même tube ; et/ou
- pour lequel un agencement de capteurs de température du dispositif transducteur formé au moyen du premier capteur de température (71) et au moyen du deuxième capteur de température (72) est axisymétrique par rapport à au moins un axe de symétrie imaginaire coupant de manière imaginaire le dispositif transducteur, lequel axe de symétrie est notamment parallèle à la fois à un axe principal d'inertie du premier tube et à un axe principal d'inertie du deuxième tube.

4. Système de mesure selon l'une des revendications précédentes, comprenant en outre : un deuxième capteur de vibration (52), notamment électrodynamique et/ou de construction identique au premier capteur de vibration (51), lequel deuxième capteur est destiné à mesurer les vibrations mécaniques, notamment côté sortie, d'au moins l'un des tubes.

5. Système de mesure selon la revendication précédente,

- pour lequel un agencement de capteurs de vibration formé au moyen du premier capteur de vibration (51) et au moyen du deuxième capteur de vibration (52) est symétrique par rapport à au moins un axe de symétrie imaginaire coupant de manière imaginaire le dispositif transducteur, lequel axe de symétrie est notamment parallèle à la fois à un axe principal d'inertie du premier tube et à un axe principal d'inertie du deuxième tube ; et/ou
- pour lequel le premier capteur de température (71) est positionné à la même distance du premier capteur de vibration (51) que le deuxième capteur de température (72) du deuxième capteur de vibration (52).

6. Système de mesure selon l'une des revendications précédentes,

- pour lequel le premier capteur de température (71) est formé au moyen d'une première sonde de température (711) présentant notamment une résistance de mesure en platine, une thermistance ou un thermocouple, ainsi qu'au moyen d'un premier corps de couplage (712) couplant de manière thermoconductrice la première sonde de température (711) à la paroi du premier tube,
- et pour lequel le deuxième capteur de température (72) est formé au moyen d'une deuxième sonde de température (721) présentant notamment une résistance de mesure en platine, une thermistance ou un thermocouple, ainsi qu'au moyen d'un deuxième corps de couplage (722) couplant de manière thermoconductrice la deuxième sonde de température (721) à la paroi du deuxième tube.

7. Système de mesure selon la revendication précédente,

- pour lequel le premier capteur de température (711) et le deuxième capteur de température (712) sont de construction identique ; et/ou
- pour lequel le premier corps de couplage (712) et le deuxième corps de couplage (722) sont de construction identique.

8. Système de mesure selon l'une des revendications précédentes,

- pour lequel la valeur mesurée de température du transducteur correspondant à une valeur moyenne arithmétique de la première et de la deuxième température de point de mesure ($\theta$1, $\theta$2) et/ou à une moyenne pondérée de la première et de la deuxième température de point de mesure ($\theta$1, $\theta$2) ; et/ou

- pour lequel la valeur mesurée de température du transducteur représente une température moyenne de la paroi de tube, à savoir une température correspondant à une valeur moyenne arithmétique 0,5 · $(\overline{\overline{\vartheta}}_{11} + \overline{\overline{\vartheta}}_{12})$ d'une température moyenne de la paroi de tube ($\overline{\overline{\vartheta}}_{11}$) du premier tube (11) et d'une température moyenne de la paroi de tube ($\overline{\overline{\vartheta}}_{12}$) du deuxième tube (12).

9.  Système de mesure selon l'une des revendications précédentes,

    - pour lequel l'électronique de mesure et d'exploitation est conçue pour générer un signal d'excitation (e) entraînant le dispositif d'excitation (E), notamment son au moins un excitateur de vibrations (41), afin d'exciter des vibrations mécaniques des tubes ;
    - et pour lequel le dispositif d'excitation (E) est conçu pour exciter ou maintenir des vibrations mécaniques des tubes sous la commande du signal d'excitation (e).

10. Système de mesure selon l'une des revendications précédentes, pour lequel l'arrangement de capteurs (S) du dispositif transducteur est conçu pour fournir au moins un (premier) signal de vibration (s1) représentatif des vibrations mécaniques d'au moins l'un des tubes.

11. Système de mesure selon la revendication précédente, pour lequel l'électronique de mesure et d'exploitation (ME) est conçue pour générer, en utilisant à la fois le signal de vibration (s1) et le premier et le deuxième signal de mesure de température ($\theta$1, $\theta$2), une valeur mesurée ($X_x$) qui représente une grandeur de mesure (x), notamment un paramètre de matière ou d'écoulement, d'un fluide (FL1), notamment un gaz, un liquide ou une dispersion fluide, s'écoulant dans une conduite.

12. Système de mesure selon la revendication 10 ou 11, pour lequel l'électronique de mesure et d'exploitation (ME) est conçue pour générer, en utilisant le signal de vibration (s1), une valeur mesurée de fréquence qui représente une fréquence des vibrations mécaniques du premier tube et/ou du deuxième tube.

13. Système de mesure selon la revendication précédente, pour lequel l'électronique de mesure et d'exploitation (ME) est conçue pour générer, en utilisant la valeur mesurée de fréquence, notamment en utilisant à la fois la valeur mesurée de fréquence et la valeur mesurée de température, une valeur mesurée de densité, à savoir une valeur mesurée représentant une densité, $\rho$, du fluide et/ou une valeur mesurée de viscosité, à savoir une valeur mesurée représentant une viscosité, n, du fluide.

14. Système de mesure selon l'une des revendications 10 à 13, pour lequel l'agencement de capteurs (S) du dispositif transducteur est conçu pour fournir au moins un deuxième signal de vibration (s2) représentant des vibrations mécaniques d'au moins l'un des tubes, notamment de telle sorte qu'il existe entre le premier signal de vibration (s1) et le deuxième signal de vibration (s2) une différence de phase dépendant d'un débit massique d'un fluide s'écoulant à travers le premier tube et/ou d'un débit massique d'un fluide s'écoulant à travers le deuxième tube.

15. Système de mesure selon la revendication précédente, pour lequel l'électronique de mesure et d'exploitation (ME) est conçue pour générer une valeur mesurée de débit massique, à savoir une valeur mesurée représentant un débit massique, m, d'un fluide s'écoulant à travers le premier tube et/ou à travers le deuxième tube, en utilisant à la fois le premier signal de vibration (s1) et le deuxième signal de vibration (s2).

16. Système de mesure selon l'une des revendications précédentes, pour lequel l'électronique de mesure et d'exploitation (ME) est en outre conçue pour générer, en utilisant à la fois le premier signal de mesure de température ($\theta$1) et le deuxième signal de mesure de température ($\theta$2), une valeur mesurée d'écart de température qui représente un écart, notamment absolu ou relatif, entre la première température de point de mesure ($\theta$1) et la deuxième température de point de mesure ($\theta$2).

17. Système de mesure selon la revendication précédente,

    - pour lequel l'électronique de mesure et d'exploitation (ME) est conçue pour surveiller, en utilisant la valeur mesurée de l'écart de température, un bon fonctionnement du dispositif transducteur, à savoir un bon fonctionnement du premier tube et/ou un bon fonctionnement du deuxième tube ; et/ou

- pour lequel l'électronique de mesure et d'exploitation (ME) est conçue pour diagnostiquer, en utilisant la valeur mesurée d'écart de température, que le dispositif transducteur présente une résistance à l'écoulement modifiée par rapport à une résistance à l'écoulement initiale, notamment de sorte qu'au moins l'un des tubes du dispositif transducteur présente une résistance à l'écoulement modifiée par rapport à une résistance à l'écoulement initiale et/ou que le premier tube présente une résistance à l'écoulement qui diffère d'une résistance à l'écoulement du deuxième tube ; et/ou

- pour lequel l'électronique de mesure et d'exploitation (ME) est conçue pour générer, en utilisant la valeur mesurée de l'écart de température, une alarme qui signale un fonctionnement seulement limité du dispositif transducteur, notamment en raison d'une résistance à l'écoulement du premier tube modifiée par rapport à une résistance à l'écoulement initiale et/ou en raison d'une résistance à l'écoulement du deuxième tube modifiée par rapport à une résistance à l'écoulement initiale.

18. Système de mesure selon l'une des revendications précédentes,

- pour lequel l'électronique de mesure et d'exploitation (ME) comprend un multiplexeur avec au moins deux entrées de signal ainsi qu'au moins une sortie de signal, lequel multiplexeur (MUX) est conçu pour commuter au choix, notamment de manière cyclique, l'une de ses entrées de signal sur la sortie de signal, de telle sorte qu'un signal présent à l'entrée de signal respectivement commutée est transmis à la sortie de signal ;

- et pour lequel l'électronique de mesure et d'exploitation (ME) comprend un convertisseur analogique-numérique (ADC) qui présente notamment une résolution nominale de plus de 16 bits et/ou est cadencé avec un taux d'échantillonnage de plus de 1 000 s$^-$, avec au moins une entrée de signal et au moins une sortie de signal, lequel convertisseur analogique-numérique est conçu pour convertir un signal d'entrée analogique appliqué à la même entrée de signal avec un taux d'échantillonnage de plus de 1 000 s$^-$, $f_A$, et avec une résolution numérique N, notamment supérieure à 16 bits, en un signal de sortie numérique représentant le même signal d'entrée, et le mettre à disposition à la sortie de signal.

19. Système de mesure selon la revendication précédente,

- pour lequel l'au moins une sortie de signal du multiplexeur et l'au moins une entrée de signal du convertisseur analogique-numérique sont couplées électriquement l'une à l'autre ;

- et pour lequel le premier capteur de température (71) et le deuxième capteur de température (72) sont respectivement reliés électriquement au multiplexeur (MUX), de telle sorte que le premier signal de mesure de température ($\theta$1) est appliqué à une première entrée de signal du multiplexeur (MUX) et que le deuxième signal de mesure de température ($\theta$2) est appliqué à une deuxième entrée de signal du multiplexeur (MUX).

20. Système de mesure selon la revendication précédente, pour lequel le signal de sortie du convertisseur analogique-numérique (ADC) représente temporairement exactement l'un des deux signaux de mesure de température ($\theta$1, $\theta$2).

21. Système de mesure selon la revendication précédente, pour lequel l'électronique de mesure et d'exploitation (ME) est conçue pour générer la valeur mesurée de température de transducteur en utilisant le signal de sortie du convertisseur analogique-numérique (ADC) représentant l'un des deux signaux de mesure de température ($\theta$1, $\theta$2).

22. Système de mesure selon l'une revendications précédentes

- pour lequel l'électronique de mesure et d'exploitation (ME) est conçue pour générer, en utilisant à la fois le premier signal de mesure de température ($\theta$1) et le deuxième signal de mesure de température ($\theta$2), une valeur mesurée de température de fluide de mesure, à savoir une valeur mesurée représentant une température d'un fluide s'écoulant à travers le premier tube et/ou une température d'un fluide s'écoulant à travers le deuxième tube ; et/ou

- pour lequel l'électronique de mesure et d'exploitation (ME) est conçue pour générer, en utilisant le premier signal de mesure de température ($\theta$1), mais pas le deuxième signal de mesure de température ($\theta$2), une valeur mesurée de température auxiliaire qui représente au moins approximativement la température du dispositif transducteur; et/ou

- pour lequel l'électronique de mesure et d'exploitation (ME) est conçue pour générer, en utilisant le deuxième signal de mesure de température ($\theta$2), mais pas le premier signal de mesure de température ($\theta$1), une valeur mesurée de température auxiliaire qui représente au moins approximativement la température du dispositif transducteur.

23. Utilisation d'un système de mesure selon l'une des revendications précédentes, lequel système est destiné à la mesure d'au moins une grandeur physique, notamment une densité et/ou une viscosité et/ou un débit massique et/ou un débit volumique, d'un fluide, notamment un gaz, un liquide ou une dispersion fluide, s'écoulant dans une conduite.

**Fig. 1**

EP 3 482 166 B1

**Fig. 2**

EP 3 482 166 B1

Fig. 3b

Fig. 3a

*Fig. 4*

**Fig. 5a**

**Fig. 5b**

**Fig. 6**

EP 3 482 166 B1

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010037690 A
- US 20040031328 A
- US 20060161359 A
- US 20100242623 A
- US 20110113896 A
- US 20110146416 A
- US 20110265580 A
- US 20120073384 A
- US 4768384 A
- US 7549319 B
- WO 0129519 A
- WO 2009134268 A

- WO 2012018323 A
- WO 2012033504 A
- WO 2013092104 A
- WO 2015135738 A
- WO 2015135739 A
- WO 8802853 A
- WO 9421999 A
- WO 9607081 A
- WO 9802725 A
- WO 2016010514 A1
- DE 4224379 C1
- US 6311136 B